# EUROPÄISCHE PATENTANMELDUNG

(11) **EP 2 808 354 A1**
(43) Veröffentlichungstag der Anmeldung: **03.12.2014**
(21) Anmeldenummer: 14180379.1
(22) Anmeldetag: 08.08.2014
(51) Int. Cl.: C08G 18/62, C08G 18/79, C08G 63/20, C09D 175/06, C08G 18/40, C08G 18/42

(54) **Schnelltrocknende, hart-elastische, kratzfeste und beständige Beschichtungsmassen**

(71) Anmelder: BASF SE, 67056 Ludwigshafen (DE)
(72) Erfinder: Schäfer, Harald, 68219 Mannheim (DE); Türp, David, 68163 Mannheim (DE); Neu, Oliver, 67240 Bobenheim-Roxheim (DE); Erhardt, Rainer, 67067 Ludwigshafen (DE); Flojhar, Daniel, 67063 Ludwigshafen (DE); Pauen, Thorsten, 67071 Ludwigshafen (DE); Steinbrecher, Angelika Maria, Cluj-Napoca (RO)

(57) **Zusammenfassung**

Die vorliegende Erfindung betrifft schnelltrocknende, hart-elastische, kratzfeste und beständige zweikomponentige Polyurethanbeschichtungsmassen, deren Verwendung und Verfahren zum Beschichten. Die Beschichtungsmassen enthalten als Aufbaukomponenten Polyisocyanat, hydroxygruppenhaltiges Poly(meth)acrylatpolyol, und bestimmte verzweigte Polyesterpolyole, erhältlich durch Polykondensation von Hexahydrophthalsäureanhydrid, Trimethylolpropan, und optional weiteren Komponenten.

## Beschreibung

Die vorliegende Erfindung betrifft schnelltrocknende, hart-elastische, kratzfeste und beständige zweikomponentige Polyurethanbeschichtungsmassen, deren Verwendung und Verfahren zum Beschichten. Die Beschichtungsmassen enthalten als Aufbaukomponenten Polyisocyanat, hydroxylgruppenhaltiges Poly(meth)acrylatpolyol, und bestimmte verzweigte Polyesterpolyole, erhältlich durch Polykondensation von Hexahydrophthalsäureanhydrid, Trimethylolpropan, und optional weiteren Komponenten.

Zweikomponentige Polyurethanbeschichtungsmassen sind weit verbreitet beispielsweise zur Lackierung in der Automobilindustrie. An derartige Lackierungen werden hohe Anforderungen u.a. betreffend Kratzfestigkeit, Flexibilität, Beständigkeit und Härte gestellt. Für die Verarbeitung bei der Lackierung ist eine schnelle Trocknung essentiell, da diese eine beschleunigte Weiterverarbeitung der lackierten Substrate ermöglicht.

Zweikomponentige Polyurethanbeschichtungsmassen, die als Bindemittel eine Kombination aus Polyacrylatolen und hyperverzweigten Polyestern enthalten, sind bekannt aus WO 2005/118677, WO 03/70843, WO 06/52982, WO 07/125029 und WO 07/125041. Die Schriften enthalten keinen Hinweis auf eine beschleunigte Trocknung in Anwesenheit von hyperverzweigten Polyestern. WO 06/76715 offenbart ein Bindemittelgemisch aus hyperverzweigtem Polyester und Polyacrylatol. Als Vernetzer wird Cellulose-acetat-butyrat eingesetzt. WO 04/94515 beschreibt zweikomponentige Polyurethanbeschichtungsmassen aus Polyisocyanat/Poly-acrylatol/Polyester für Lacke. Es wird jedoch kein Hinweis auf den Vorteil gegeben, den hyperverzweigte Polyester oder ein ausgewähltes Verhältnis von Säure- zu Hydroxygruppen leisten. WO 2010/76114 beschreibt schnell trocknende zweikomponentige Polyurethanbeschichtungsmassen, die eine Kombination aus Polyacrylatolen und hyperverzweigten Polyestern enthalten. Die bekannten Beschichtungsmassen sind noch nicht in allen gewünschten Eigenschaften optimal. Die Optimierung sämtlicher gewünschter Eigenschaften (z.B. Trocknung, Härteentwicklung und Endhärte ohne Verlust von Elastizität, Kratzfestigkeit und Beständigkeit der Beschichtungen) ist ein komplexes, mehrdimensionales Problem. Wird eine Eigenschaft verbessert, werden häufig eine oder mehrere andere Eigenschaften vermindert. Es bestand daher die Aufgabe, Beschichtungmassen zur Verfügung zu stellen, bei denen das Integral, d.h. die Summe aller Vorteile möglichst hoch ist. In der EP 0705858 werden Polyesterpolyole und ihre Verwendung als Polyolkomponente in Zweikomponenten-Polyurethanlacken beschrieben. Die Polyesterpolyole sind aufgebaut aus Neopentylglykol, Trimethylolpropan und Hexahydrophthalsäureanhydrid und haben relativ geringe Säurzahlen von 5 bis 30.

Aufgabe der vorliegenden Erfindung war es insbesondere, zweikomponentige Polyurethanbeschichtungsmassen zur Verfügung zu stellen, die eine gegenüber anderen zweikomponentigen Beschichtungsmassen eine möglichst verbesserte Trocknung, möglichst gute Härteentwicklung und Endhärte, möglichst ohne Beeinträchtigung der Elastizität, und möglichst hohe Kratzfestigkeit und Beständigkeit aufweisen.

Die Aufgabe wurde gelöst durch zweikomponentige Polyurethanbeschichtungsmassen für lösungsmittelbasierte Systeme enthaltend als Aufbaukomponenten
(A) mindestens ein Polyisocyanat, erhältlich durch Umsetzung mindestens eines monomeren Isocyanats,
(B) mindestens ein hydroxygruppenhaltiges Poly(meth)acrylatpolyol, und
(C) mindestens ein verzweigtes Polyesterpolyol, erhältlich durch Polykondensation von
   - Hexahydrophthalsäureanhydrid,
   - Trimethylolpropan,
   - optional mindestens einer weiteren Di- oder Tri-Säure oder deren Derivaten, und
   - optional mindestens eines weiteren Diols oder Triols
      dadurch gekennzeichnet, dass
   - die Säurezahl des Polyesterpolyols größer als 30 mg KOH/g bezogen auf Feststoff beträgt
   - die Säure- und Hydroxylgruppen des Polyesterpolyols in einem molaren Mischungsverhältnis von 1:1 bis 1:1,95 (bezogen auf die Rohstoffe), bevorzugt von 1:1,1 bis 1:1,8 oder von 1:1,2 bis1:1,6 eingesetzt werden, und
   - im Polyesterpolyol weniger als 20 %, bevorzugt weniger als 10 % freier Di-Säure und/oder freier Tri-Säure stöchiometrisch bezogen auf Hexahydrophthalsäureanhydrid eingesetzt werden, und
   - im Polyesterol weniger als 20 %, bevorzugt weniger als 10 %, besonders bevorzugt kein Tetra-Alkohol stöchiometrisch bezogen auf Hexahydrophthalsäureanhydrid eingesetzt wird und
(D) mindestens ein organisches Lösungsmittel.

Die erfindungsgemäßen Beschichtungsmassen zeigen gegenüber vergleichbaren zweikomponentigen Polyurethanbeschichtungsmassen ein in der Summe der gewünschten Eigenschaften optimiertes Eigenschaftsprofil, insbesondere unter Berücksichtigung von Trocknung, Härteentwicklung, Endhärte, Elastizität, Kratzfestigkeit und Beständigkeit.

Zweikomponentige Polyurethanbeschichtungsmassen bestehen aus zwei Komponenten, von denen die eine mindestens ein Polyisocyanat, die zweite mindestens ein hydroxygruppenhaltiges Polymer enthält. Gemäß dieser Erfindung handelt es sich dabei um eine Mischung von mindestens einem Poly(meth)acrylatpolyol und mindestens einem verzweigten Polyesterpolyol. Polyisocyanate umfassen dabei Oligo- und Polyisocyanate.

Als lösungsmittelbasierte Systeme werden hier Systeme verstanden, die in der Mischung der zwei Komponenten organische Lösungsmittel enthalten, also keine 100%-Systeme und keine Pulverlacke (bei Raumtemperatur feste Systeme) sind, und die keine wasserbasierten Systeme sind. Wasserbasierte Systeme sind solche bei denen vorsätzlich Wasser als relevantes Lösungsmittel eingesetzt wird. Lösungsmittelbasierte Systeme können, z.B. über den Polyester prozessbedingt geringe Mengen an Wasser enthalten. Diese liegen, bezogen auf den Polyester in Lieferform, bevorzugt bei weniger als 2 Gew.%, besonders bevorzugt unterhalb von 1,0 Gew.%, abhängig vom Polyester und seiner Herstellung insbesondere unter 0,5 Gew. %.

Die Bestimmung von Hydroxylzahlen der verzweigten Polyester basiert auf DIN 53240-2:2007-11. Bei der Berechnung wird die Säurezahl berücksichtigt. Die Bestimmung von Säurezahlen der verzweigten Polyester erfolgt gemäß DIN EN ISO 2114:2000, Verfahren A.

Die Angaben zur Polydispersität sowie zum zahlenmittleren und gewichtsmittleren Molekulargewicht Mₙ und M_{w} beziehen sich hier, sofern nichts anderes angegeben ist, auf gelpermeationschromatographische Messungen, wobei Polymethylmethacrylat als Standard und Tetrahydrofuran als Elutionsmittel verwendet wurden mit den in den Beispielen genannten Parametern.

Die Glasübergangstemperatur Tg, wird in dieser Schrift, wenn nicht anders angegeben, gemäß ASTM-Vorschrift D3418-03 über Differential Scanning Calorimetry (DSC), mit einer Aufheizrate von 10 °C/min bestimmt.

Viskositäten werden in dieser Schrift bei 23 °C gemäß DIN EN ISO 3219/A.3 in einem Kegel-Platte-System mit einem Geschwindigkeitsgefälle von 1000 s⁻¹ angegeben, falls nicht anders vermerkt.

Die Bezeichnung "(meth)acryl" und ähnliche Bezeichnungen stehen abkürzend für "acryl oder methacryl".

Als Komponente (A) wird mindestens ein, beispielsweise ein bis drei, bevorzugt ein bis zwei und besonders bevorzugt genau ein Polyisocyanat eingesetzt, das durch Umsetzung mindestens eines monomeren Isocyanats erhältlich ist. Die eingesetzten monomeren Isocyanate können aromatisch, aliphatisch oder cycloaliphatisch sein, bevorzugt aliphatisch oder cycloaliphatisch, was in dieser Schrift kurz als (cyclo)aliphatisch bezeichnet wird, besonders bevorzugt sind aliphatische Isocyanate. Aromatische Isocyanate sind solche, die mindestens ein aromatisches Ringsystem enthalten, also sowohl rein aromatische wie auch araliphatische Verbindungen. Cycloaliphatische Isocyanate sind solche, die mindestens ein cycloaliphatisches Ringsystem enthalten. Aliphatische Isocyanate sind solche, die ausschließlich gerade oder verzweigte Ketten enthalten, also acyclische Verbindungen.

Bei den monomeren Isocyanaten handelt es sich bevorzugt um Diisocyanate, die genau zwei Isocyanatgruppen tragen.

Es kann sich aber prinzipiell auch um Monoisocyanate mit einer Isocyanatgruppe handeln.

Es kommen prinzipiell auch höhere Isocyanate mit im Mittel mehr als 2 Isocyanatgruppen in Betracht. Dafür eignen sich beispielsweise Triisocyanate wie Triisocyanatononan, 2'-Isocyanatoethyl-(2,6-diisocyanatohexanoat), 2,4,6-Triisocyanatotoluol, Triphenylmethantriisocyanat oder 2,4,4'-Triisocyanatodiphenylether oder die Gemische aus Di-, Tri- und höheren Polyisocyanaten, die beispielsweise durch Phosgenierung von entsprechenden Anilin/Formaldehyd-Kondensaten erhalten werden und Methylenbrücken aufweisende Polyphenylpolyisocyanate darstellen. Diese monomeren Isocyanate weisen keine wesentlichen Umsetzungsprodukte der Isocyanatgruppen mit sich selbst auf.

Bei den monomeren Isocyanaten handelt es sich bevorzugt um Isocyanate mit 4 bis 20 C-Atomen. Beispiele für übliche Diisocyanate sind aliphatische Diisocyanate wie Tetramethylendiisocyanat, 1,5-Pentamethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanats, (z.B. Methyl- oder Ethyl-2,6-diisocyanatohexanoat),Trimethylhexandiisocyanat oder Tetramethylhexandiisocyanat, cycloaliphati-sche Diisocyanate wie 1,4-, 1,3- oder 1,2-Diisocyanatocyclohexan, 4,4'- oder 2,4'-Di(isocyanatocyclohexyl)methan, 1-Isocyanato-3,3,5-trimethyl-5-(isocyanatomethyl)cyclohexan (Isophorondiisocyanat), 1,3- oder 1,4-Bis(isocyanatomethyl)cyclohexan oder 2,4-, oder 2,6-Diisocyanato-1-methylcyclohexan sowie 3 (bzw. 4), 8 (bzw. 9)-Bis(isocyanatomethyl)-tricyclo[5.2.1.0^{2.6}]decan-Isomerengemische, sowie aromatische Diisocyanate wie 2,4- oder 2,6-Toluylendiisocyanat und deren Isomerengemische, m- oder p-Xylylen-diisocyanat, 2,4'- oder 4,4'-Diisocyanatodiphenylmethan und deren Isomerengemische, 1,3- oder 1,4-Phenylendiisocyanat, 1-Chlor-2,4-phenylendiisocyanat, 1,5-Naphthylen-diisocyanat, Diphenylen-4,4'-diisocyanat, 4,4'-Diisocyanato-3,3'-dimethyldiphenyl, 3-Methyldi-phenylmethan-4,4'-diisocyanat, Tetramethylxylylendiisocyanat, 1,4-Diisocyanatobenzol oder Diphenylether-4,4'-diisocyanat. Besonders bevorzugt sind 1,6-Hexamethylendiisocyanat, 1,3-Bis(isocyanatomethyl)-cyclohexan, Isophorondiisocyanat und 4,4'- oder 2,4'-Di(isocyanatocyclohexyl)methan, ganz besonders bevorzugt sind Isophorondiisocyanat und 1,6-Hexamethylen-diisocyanat, insbesondere bevorzugt ist 1,6-Hexamethylendiisocyanat. Es können auch Gemische der genannten Isocyanate vorliegen.

Isophorondiisocyanat liegt zumeist als ein Gemisch, und zwar der cis- und trans-Isomere vor, in der Regel im Verhältnis von ca. 60:40 bis 80:20 (w/w), bevorzugt im Verhältnis von ca. 70:30 bis 75:25 und besonders bevorzugt im Verhältnis von ca. 75:25. Dicyclohexylmethan-4,4'-diisocyanat kann ebenfalls als Gemisch der verschiedenen cis- und trans-Isomere vorliegen.

Für die vorliegende Erfindung können sowohl solche Diisocyanate eingesetzt werden, die durch Phosgenierung der korrespondierenden Amine erhalten werden, als auch solche, die ohne die Verwendung von Phosgen, d. h. nach phosgenfreien Verfahren, hergestellt werden. Nach Angaben der EP-A-0 126 299 (US 4 596 678), EP-A-126 300 (US 4 596 679) und EP-A-355 443 (US 5 087 739) beispielsweise können (cyclo)aliphatische Diisocyanate, z.B. 1,6-Hexamethylendiisocyanat (HDI), isomere aliphatische Diisocyanate mit 6 Kohlenstoffatomen im Alkylenrest, 4,4'- oder 2,4'-Di(isocyanatocyclohexyl)methan und 1-Isocyanato-3-isocyanato-methyl-3,5,5-trimethyl-cyclohexan (Isophorondiisocyanat bzw. IPDI) hergestellt werden durch Umsetzung der (cyclo)aliphatischen Diamine mit beispielsweise Harnstoff und Alkoholen zu (cyclo)-aliphatischen Biscarbaminsäureestern und deren thermische Spaltung in die entsprechenden Diisocyanate und Alkohole. Die Synthese erfolgt meist kontinuierlich in einem Kreislaufverfahren und gegebenenfalls in Gegenwart von N-unsubstituierten Carbaminsäureestern, Dialkylcarbonaten und anderen aus dem Reaktionsprozeß zurückgeführten Nebenprodukten. So erhaltene Diisocyanate weisen in der Regel einen sehr geringen oder sogar nicht messbaren Anteil an chlorierten Verbindungen auf, was beispielsweise in Anwendungen in der Elektronikindustrie vorteilhaft ist.

In einer Ausführungsform der vorliegenden Erfindung weisen die eingesetzten Isocyanate einen Gesamtgehalt an hydrolysierbarem Chlor von weniger als 80 ppm, bevorzugt weniger als 30 ppm, und insbesondere weniger als 25 ppm auf. Dies kann beispielsweise gemessen werden durch die ASTM-Vorschrift D4663-98.

Selbstverständlich können auch Gemische aus solchen monomeren Isocyanaten, die durch Umsetzung der (cyclo)aliphatischen Diamine mit beispielsweise Harnstoff und Alkoholen und Spaltung der erhaltenen (cyclo)aliphatischen Biscarbaminsäureester erhalten worden sind, mit solchen Diisocyanaten, die durch Phosgenierung der korrespondierenden Amine erhalten worden sind, eingesetzt werden.

Die Polyisocyanate (A), zu denen die monomeren Isocyanate oligomerisiert werden können, sind in der Regel wie folgt charakterisiert. Die mittlere NCO Funktionalität solcher Verbindungen beträgt in der Regel mindestens 1,8 und kann bis zu 8 betragen, bevorzugt 2 bis 5 und besonders bevorzugt 2,4 bis 4. Der Gehalt an Isocyanatgruppen nach der Oligomerisierung, berechnet als NCO = 42 g/mol, beträgt, wenn nicht anders angegeben, in der Regel von 5 bis 25 Gew%. Bevorzugt handelt es sich bei den Polyisocyanaten (A) um folgende Verbindungen:
1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im Allgemeinen einen NCO-Ge-halt von 10 bis 30 Gew.-%, insbesondere 15 bis 25 Gew.-% und eine mittlere NCO-Funktionalität von 2,6 bis 8.
2) Uretdiongruppen aufweisende Polyisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
   Die Uretdiongruppen aufweisenden Polyisocyanate werden im Rahmen dieser Erfindung im Gemisch mit anderen Polyisocyanaten, insbesondere den unter 1) genannten, erhalten. Dazu können die Diisocyanate unter Reaktionsbedingungen umgesetzt werden, unter denen sowohl Uretdiongruppen als auch die anderen Polyisocyanate gebildet werden, oder zunächst die Uretdiongruppen gebildet und diese anschließend zu den anderen Polyisocyanaten umgesetzt werden oder die Diisocyanate zunächst zu den anderen Polyisocyanaten und diese anschließend zu Uretdiongruppen-haltigen Produkten umgesetzt werden.
3) Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris-(6-isocyanatohexyl)-biuret oder dessen Gemische mit seinen höheren Homologen. Diese Biuretgruppen aufweisenden Polyisocyanate weisen vorzugsweise (insbesondere im Fall von HDI) einen NCO-Gehalt von 18 bis 23,5 Gew.-% und eine mittlere NCO-Funktionalität von 2,8 bis 6 auf.
4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Diisocyanat, beispielsweise Hexamethylendiisocyanat oder Isophorondiisocyanat, mit ein- oder mehrwertigen Alkoholen (A). Diese Urethan- und/oder Allophanatgruppen aufweisenden Polyisocyanate haben im Allgemeinen einen NCO-Gehalt von 12 bis 24 Gew.-% und eine mittlere NCO-Funktionalität von 2,3 bis 4,5. Solche Urethan-und/oder Allophanatgruppen aufweisenden Polyisocyanate können unkatalysiert oder bevorzugt in Gegenwart von Katalysatoren, wie beispielsweise Ammoniumcarboxylaten oder -hydroxiden, oder Allophanatisierungskatalysatoren, z.B. Zn-(II)-Verbindungen, jeweils in Anwesenheit von ein-, zwei- oder mehrwertigen, bevorzugt einwertigen Alkoholen, hergestellt werden.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid zugänglich.
6) Iminooxadiazindiongruppen enthaltende Polyisocyanate, vorzugsweise von Hexamethylendiisocyanat oder Isophorondiisocyanat abgeleitet. Solche Iminooxadiazindiongruppen enthaltenden Polyisocyanate sind aus Diisocyanaten mittels spezieller Katalysatoren herstellbar. Diese liegen üblicherweise in einem Gemisch mit Polyisocyanaten 1), ggf. noch mit 2) und / oder 4) vor.
7) Uretonimin-modifizierte Polyisocyanate.
8) Carbodiimid-modifizierte Polyisocyanate.
9) Hyperverzweigte Polyisocyanate, wie sie beispielsweise bekannt sind aus der DE-A1 10013186 oder DE-A1 10013187.
10) Polyurethan-Polyisocyanat-Präpolymere, aus Di- und/oder Polyisocyanaten mit Alkoholen.
11) Polyharnstoff-Polyisocyanat-Präpolymere.
12) Die Polyisocyanate 1)-11), bevorzugt 1), 3), 4) und 6) können nach deren Herstellung in Biuretgruppen- oder Urethan-/Allophanat-Gruppen aufweisende Polyisocyanate mit aromatisch, cycloaliphatisch oder aliphatisch gebundenen, bevorzugt (cyclo)aliphatisch gebundenen Isocyanatgruppen, überführt werden. Die Bildung von Biuretgruppen erfolgt beispielsweise durch Zugabe von Wasser oder Umsetzung mit Aminen. Die Bildung von Urethan- und/oder Allophanatgruppen erfolgt durch Umsetzung mit ein-, zwei- oder mehrwertigen, bevorzugt einwertigen Alkoholen, gegebenenfalls in Gegenwart von geeigneten Katalysatoren. Diese Biuret- oder Urethan-/Allophanatgruppen aufweisenden Polyisocyanate weisen im Allgemeinen einen NCO-Gehalt von 18 bis 22 Gew.-% und eine mittlere NCO-Funktionalität von 2,8 bis 6 auf.
13) Hydrophil modifizierte Polyisocyanate, d.h. Polyisocyanate, die neben den unter 1-12 beschriebenen Gruppen solche enthalten, die formal durch Addition von Molekülen mit NCO-reaktiven Gruppen und hydrophilierenden Gruppen an die Isocyanatgruppen obiger Moleküle entstehen. Bei letzteren handelt es sich um nichtionische Gruppen wie Alkyl-Polyethylenoxid und/oder ionische, welche von Phosphorsäure, Phosphonsäure, Schwefelsäure oder Sulfonsäure, bzw. ihren Salzen organisch modifiziert abgeleitet sind. Diese können hier untypisch aber erfindungsgemäß in lösungsmittelbasierten Systemen eingesetzt werden, insbesondere als eine Teilkomponente der Isocyanatkomponente.
14) Modifizierte Polyisocyanate für Dual Cure Anwendungen, d.h. Polyisocyanate, die neben den unter 1-13 beschriebenen Gruppen solche enthalten, die formal durch Addition von Molekülen mit NCO-reaktiven Gruppen und durch UV- oder aktinische Strahlung vernetzbare Gruppen an die Isocyanatgruppen obiger Moleküle entstehen. Bei diesen Molekülen handelt es sich beispielsweise um Hydroxyalkyl(meth)acrylate und andere Hydroxy-Vinylverbindungen.

Die oben aufgeführten Diisocyanate oder Polyisocyanate können auch zumindest teilweise in blockierter Form vorliegen. Zur Blockierung eingesetzte Verbindungsklassen sind beschrieben in D. A. Wicks, Z. W. Wicks, Progress in Organic Coatings, 36, 148-172 (1999), 41, 1-83 (2001) sowie 43, 131-140 (2001). Beispiele für zur Blockierung eingesetzte Verbindungsklassen sind Phenole, Imidazole, Triazole, Pyrazole, Oxime, N-Hydroxyimide, Hydroxybenzoesäureester, sekundäre Amine, Lactame, CH-acide cyclische Ketone, Malonsäureester oder Alkylacetoacetate.

In einer bevorzugten Ausführungsform der vorliegenden Erfindung ist das Polyisocyanat (A) ausgewählt aus der Gruppe bestehend aus Isocyanuraten, Iminooxadiazindionen, Biureten, Uretdionen, Urethanen und Allophanaten, bevorzugt aus der Gruppe bestehend aus Isocyanuraten, Urethanen und Allophanaten, besonders bevorzugt aus der Gruppe bestehend aus Isocyanuraten und Allophanaten, insbesondere handelt es sich um ein isocyanuratgruppenhaltiges Polyisocyanat. In einer besonders bevorzugten Ausführungsform handelt es sich bei dem Polyisocyanat (A) um Isocyanuratgruppen enthaltende Polyisocyanate von 1,6-Hexamethylendiisocyanat. In einer weiteren besonders bevorzugten Ausführungsform handelt es sich bei dem Polyisocyanat (A) um ein Gemisch von Isocyanuratgruppen enthaltenden Polyisocyanaten von 1,6-Hexamethylen-diisocyanat und von Isophorondiisocyanat.

In einer besonders bevorzugten Ausführungsform handelt es sich bei dem Polyisocyanat (A) um ein Gemisch enthaltend niedrigviskose Polyisocyanate, bevorzugt Isocyanuratgruppen enthaltende Polyisocyanate, mit einer Viskosität von 600-1500 mPa*s, insbesondere unter 1200 mPa*s, niederviskose Urethane und/oder Allophanate mit einer Viskosität von 200-1600 mPa*s, und/oder Iminooxadiazindiongruppen enthaltende Polyisocyanate.

Das Verfahren zur Herstellung der Polyisocyanate kann erfolgen, wie in WO 2005/087828 oder wie in WO 2008/068198 beschrieben, dort besonders von Seite 20, Zeile 21 bis Seite 27, Zeile15, was hiermit durch Bezugnahme Bestandteil der vorliegenden Anmeldung sei. Die Reaktion kann beispielsweise abgebrochen werden, wie dort von Seite 31, Zeile 19 bis Seite 31, Zeile 31 beschrieben und die Aufarbeitung erfolgen wie dort beschrieben von Seite 31, Zeile 33 bis Seite 32, Zeile 40, was hiermit jeweils durch Bezugnahme Bestandteil der vorliegenden Anmeldung sei. Die Reaktion kann alternativ auch abgebrochen werden, wie in WO 2005/087828 von Seite 11, Zeile 12 bis Seite 12, Zeile 5 beschrieben, was hiermit durch Bezugnahme Bestandteil der vorliegenden Anmeldung sei. Bei thermisch labilen Katalysatoren ist es weiterhin auch möglich, die Reaktion abzubrechen durch Erhitzen des Reaktionsgemischs auf eine Temperatur oberhalb von mindestens 80°C, bevorzugt mindestens 100 °C, besonders bevorzugt mindestens 120 °C. Dafür reicht in der Regel bereits die Erwärmung des Reaktionsgemischs, wie sie zur Abtrennung des unumgesetzten Isocyanats durch Destillation in der Aufarbeitung erforderlich ist. Sowohl bei thermisch nicht-labilen als auch bei thermisch labilen Katalysatoren besteht die Möglichkeit, durch Zugabe von Deaktivatoren die Reaktion bei niedrigeren Temperaturen abzubrechen. Geeignete Deaktivatoren sind beispielsweise Chlorwasserstoff, Phosphorsäure, organische Phosphate, wie Dibutylphosphat oder Diethylhexylphosphat, Carbamate wie Hydroxyalkylcarbamat oder organische Carbonsäuren. Diese Verbindungen werden pur oder verdünnt in geeigneter Konzentration, die zum Reaktionsabbruch erforderlich ist, zugegeben. Bevorzugt sind Dibutylphosphat oder Diethylhexylphosphat.

Niedrigviskose Polyisocyanate oder Allophanate von Diisocyanaten können beispielsweise auch entsprechend der WO 2005/087828 hergestellt werden. Bei den niedrigviskosen Polyisocyanaten wird die Reaktion bei niedrigerem Umsatz als in den konkreten Beispielen der WO 2005/087828 thermisch oder durch chemische Desaktivatoren abgebrochen, ansonsten aber analog verfahren. Auf diese Weise können Produkte auf Basis Hexamethylendiisocyanat mit Viskositäten beispielsweise von 900-1500 mPa*s hergestellt werden, jedoch auch mit niedrigeren Viskositäten, bevorzugt bis zu 500 mPa*s. In analoger Weise können auch Allophanate mit den gleichen Katalysatoren hergestellt werden, in dem zu dem Monomer Hexamethylendiisocyanat zusätzlich Mono- und / oder Dialkohole, bevorzugt C1-C18 Mono- und / oder C2-C18 Dialkohole zugegeben werden. Bevorzugt sind dies Butanol, Pentanol, 2-Ethyl-hexanol, 1,3-Hexandiol, respektive 3,3,5-Trimethylpentandiol. Monoalkohole werden bevorzugt in Mengen bis maximal 25 % auf Endprodukt zugegeben. Die Viskositäten der Produkte aus Hexamethylendiisocyanat und Monoalkohol liegen bevorzugt in einem Bereich von 200-1500 mPa*s. Sie enthalten entsprechend der üblichen Zusammensetzung der Polyisocyanate 4) wesentliche Mengen Isocyanurate, ggf. auch Urethane. Analog können auch hochviskose Polyisocyanate oder Allophanate von Diisocyanaten beispielsweise entsprechend der WO 2005/087828 hergestellt werden. Bei den hochviskosen Polyisocyanaten wird die Reaktion bei höherem Umsatz als in den konkreten Beispielen der WO 2005/087828 thermisch oder durch chemische Desaktivatoren abgebrochen. Bevorzugt betragen die Viskositäten von Polyisocyanaten basierend auf Hexamethylendiisocyanat nicht mehr als 30 Pa*s. Eine Verdünnung der hochviskosen Verbindungen in Lösungsmitteln ist sinnvoll.

Bei der Komponente (B) handelt es sich um mindestens ein, beispielsweise ein bis vier, bevorzugt ein bis drei, besonders bevorzugt ein bis zwei und ganz besonders bevorzugt genau ein hydroxygruppenhaltiges Poly(meth)acrylatpolyol. Dabei handelt es sich zumeist um Kopolymerisate von im wesentlichen (Meth)Acrylsäureestern, beispielsweise C₁-C₂₀-Alkyl(meth)acrylaten, mit Hydroxyalkyl(meth)acrylaten, beispielsweise den Mono(meth)acrylsäureestern von 1,2-Propandiol, Ethylenglykol, 1,3-Propandiol, 1,4-Butandiol oder 1,6-Hexandiol, sowie von Styrol.

Diese weisen vorzugsweise ein nach der Gelpermeationschromatographie bestimmbares Molekulargewicht Mₙ (Zahlenmittel) von 500 bis 50.000 D, insbesondere 500 bis 10.000 D oder 500 bis 5000 D auf. In einer bevorzugten Ausrührungsform weisen sie ein Molekulargewicht Mₙ von 800-2.000 D auf. Letzteres sind insbesondere Poly(meth)acrylatpolyole wie Sie für Lacke mit niedrigen Feststoffgehalten eingesetzt werden. Bevorzugte Komponenten (B) weisen OH-Zahlen, gemessen gemäß DIN 53240-2:2007-11, von 15-250 mg KOH/g Festharz, bevorzugt 60-180 mg KOH/g, besonders bevorzugt 80-160 mg KOH/g auf. Zusätzlich können die Komponenten (B) eine Säurezahl gemäß BS EN ISO 3682; BS 6782-3 von unter 100 mg KOH/g, bevorzugt unter 30 und besonders bevorzugt unter 20 mg KOH/g aufweisen.

Die Hydroxylgruppen aufweisenden Monomere werden in solchen Mengen bei der Kopolymerisation mitverwendet, dass die obengenannten Hydroxylzahlen der Polymerisate resultieren, die im Allgemeinen einem Hydroxylgruppengehalt der Polymerisate von 0,5 bis 8, vorzugsweise 1 bis 5 Gew.-% entsprechen. Im Allgemeinen werden die hydroxyfunktionellen Komonomeren im Mengen von 3 bis 75, vorzugsweise 6 bis 47 Gew.-%, bezogen auf das Gesamtgewicht der eingesetzten Monomere mitverwendet. Außerdem muss selbstverständlich darauf geachtet werden, dass im Rahmen der gemachten Angaben die Menge der hydroxyfunktionellen Monomeren so gewählt wird, dass Kopolymerisate entstehen, die im statistischen Mittel pro Molekül mindestens zwei Hydroxylgruppen aufweisen.

Als Monomere genannt seien z.B. C₁-C₂₀-Alkyl(meth)acrylate, Vinylaromaten mit bis zu 20 C-Atomen, Vinylester von bis zu 20 C-Atomen enthaltenden Carbonsäuren, ethylenisch ungesättigte Nitrile, Vinylether von 1 bis 10 C-Atome enthaltenden Alkoholen, α,β-ungesättigte Carbonsäuren und deren Anhydride und aliphatischen Kohlenwasserstoffen mit 2 bis 8 C-Atomen und 1 oder 2 Doppelbindungen. Als (Meth)acryl-säurealkylester bevorzugt sind solche mit einem C₁-C₁₀-Alkylrest, wie Methylmethacrylat, Methylacrylat, n-Butylacrylat, Ethylacrylat und 2-Ethyl-hexylacrylat. Insbesondere sind auch Mischungen der (Meth)acrylsäurealkylester geeignet. Vinylester von Carbonsäuren mit 1 bis 20 C-Atomen sind z.B. Vinyllaurat, Vinylstearat, Vinylpropionat und Vinylacetat. α,β-Ungesättigte Carbonsäuren und deren Anhydride können beispielsweise sein Acrylsäure, Methacrylsäure, Fumarsäure, Crotonsäure, Itaconsäure, Maleinsäure oder Maleinsäureanhydrid, bevorzugt Acrylsäure.

Als hydroxyfunktionelle Monomere seien Monoester von α,β-ungesättigten Carbonsäuren, wie Acrylsäure, Methacrylsäure (in dieser Schrift kurz als "(Meth)acrylsäure" bezeichnet), mit Di-oder Polyolen erwähnt, die vorzugsweise 2 bis 20 C-Atome und wenigstens zwei Hydroxygruppen aufweisen, wie Ethylenglykol, Diethylenglykol, Triethylenglykol, 1,2-Propylenglykol, 1,3-Propylenglykol, 1,1-Dimethyl-1,2-Ethandiol, Dipropylenglykol, Triethylenglykol, Tetraethylenglykol, Pentaethylenglykol, Tripropylenglykol, 1,4-Butandiol, 1,5-Pentandiol, Neopentylglykol, Hydroxypivalinsäureneopentylglykolester, 2-Ethyl-1,3-Propandiol, 2-Methyl-1,3-Propandiol, 2-Butyl-2-ethyl-1,3-Propandiol, 1,6-Hexandiol, 2-Methyl-1,5-pentandiol, 2-Ethyl-1,4-butandiol, 2-Ethyl-1,3-Hexandiol, 2,4-Diethyl-oktan-1,3-diol, 2,2-Bis(4-hydroxycyclohexyl)propan, 1,1-, 1,2-, 1,3- und 1,4-Bis(hydroxymethyl)-cyclohexan, 1,2-, 1,3- oder 1,4-Cyclohexandiol, Glycerin, Trimethylolethan, Trimethylolpropan, Trimethylolbutan, Pentaerythrit, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit, Isomalt, Poly-THF mit einem Molgewicht zwischen 162 und 4500, bevorzugt 250 bis 2000, Poly-1,3-propandiol oder Polypropylenglykol mit einem Molgewicht zwischen 134 und 2000 oder Polyethylenglykol mit einem Molgewicht zwischen 238 und 2000 sein. Bevorzugt sind 2-Hydroxyethylacrylat, 2-Hydroxy-ethylmethacrylat, 2- oder 3-Hydroxypropylacrylat, 1,4-Butandiolmonoacrylat oder 3-(Acryloyloxy)-2-hydroxypropylacrylat und besonders bevorzugt 2-Hydroxyethylacrylat und/oder 2-Hydroxyethylmethacrylat.

Als vinylaromatische Verbindungen kommen z.B. Vinyltoluol, α-Butylstyrol, 4-n-Butyl-styrol, 4-n-Decylstyrol und vorzugsweise Styrol in Betracht. Beispiele für Nitrile sind Acrylnitril und Methacrylnitril. Geeignete Vinylether sind z.B. Vinylmethylether, Vinylisobutylether, Vinylhexylether und Vinyloctylether. Als nicht aromatische Kohlenwasserstoffe mit 2 bis 8 C-Atomen und einer oder zwei olefinischen Doppelbindungen seien Butadien, Isopren, sowie Ethylen, Propylen und Isobutylen genannt. Weiterhin sind N-Vinylformamid, N-Vinylpyrrolidon sowie N-Vinylcaprolactam einsetzbar, weiterhin, ethylenisch ungesättigte Säuren, insbesondere Carbonsäuren, Säureanhydride oder Säureamide, sowie Vinylimidazol. Auch Epoxidgruppen aufweisende Komonomere wie z.B. Glycidylacrylat oder -methacrylat oder Monomere wie N-Methoxymethyl-acrylamid oder-meth-acrylamid können in geringen Mengen mitverwendet werden.

Bevorzugt sind Ester der Acrylsäure bzw. der Methacrylsäure mit 1 bis 18, vorzugsweise 1 bis 8 C-Atomen im Alkoholrest wie z.B. Methylacrylat. Ethylacrylat, Isopropyl-acrylat, n-Propylacrylat, n-Butylacrylat, 2-Ethylhexylacrylat, n-Stearylacrylat, die diesen Acrylaten entsprechenden Methacrylate, Styrol, alkylsubstituierte Styrole, Acrylnitril, Methacrylnitril, Vinylacetat oder Vinylstearat bzw. beliebige Gemische derartiger Monomere.

Die hydroxygruppentragenden Monomere werden in die Kopolymerisation der hydroxygruppentragenden (Meth)Acrylate im Gemisch mit anderen polymerisierbaren, bevorzugt radikalisch polymerisierbaren Monomeren, eingesetzt, bevorzugt solchen, welche zu mehr als 50 Gew% aus C₁-C₂₀-, bevorzugt C₁- bis C₄-Alkyl(meth)acrylat, (Meth)acrylsäure, Vinylaromaten mit bis zu 20 C-Atomen, Vinylestern von bis zu 20 C-Atomen enthaltenden Carbonsäuren, Vinylhalogeniden, nicht aromatischen Kohlenwasserstoffen mit 4 bis 8 C-Atomen und 1 oder 2 Doppelbindungen, ungesättigten Nitrilen und deren Mischungen bestehen. Besonders bevorzugt sind die Polymere, die neben den hydroxygruppentragenden Monomeren zu mehr als 60 Gew% aus C₁-C₁₀-Alkyl(meth)acrylaten, Styrol und dessen Derivaten oder deren Mischungen bestehen.

Die Herstellung der Polymerisate kann durch Polymerisation nach üblichen Verfahren durchgeführt werden. Vorzugsweise erfolgt die Herstellung der Polymerisate in einer Emulsionspolymerisation oder in organischer Lösung. Möglich sind kontinuierliche oder diskontinuierliche Polymerisationsverfahren. Von den diskontinuierlichen Verfahren sind das Batch- und das Zulaufverfahren zu nennen, wobei letzteres bevorzugt ist. Bei dem Zulaufverfahren wird das Lösungsmittel allein oder mit einem Teil des Monomergemisches vorgelegt, auf die Polymerisationstemperatur erwärmt, die Polymerisation im Fall einer Monomervorlage radikalisch gestartet und das restliche Monomergemisch zusammen mit einem Initiatorgemisch im Verlauf von 1 bis 10 Stunden, vorzugsweise 3 bis 6 Stunden, zudosiert. Gegebenenfalls wird anschließend noch nachaktiviert, um die Polymerisation bis zu einem Umsatz von mindestens 99 % durchzuführen. Als Lösungsmittel kommen beispielsweise Aromaten, wie Solventnaphtha, Benzol, Toluol, Xylol, Chlorbenzol, Ester wie Ethylacetat, Butylacetat, Methylglykolacetat, Ethylglykol-acetat, Methoxypropylacetat, Ether wie Butylglykol, Tetrahydrofuran, Dioxan, Ethyl-glykolether, Ketone wie Aceton, Methylethylketon, halogenhaltige Lösemittel wie Methylenchlorid oder Trichlormonofluorethan in Betracht.

Bei dem verzweigten Polyesterol der Komponente (C) handelt es sich um mindestens ein, beispielsweise ein bis drei, bevorzugt ein bis zwei und besonders bevorzugt genau ein hochfunktionelles, vorzugsweise hoch- oder hyperverzweigtes Polyesterpolyol. Das zahlenmittlere Molekulargewicht Mn ist vorzugsweise mindestens 500, bevorzugt mindestens 700. Die obere Grenze des Molekulargewichts Mₙ ist bevorzugt 30.000 g/mol, besonders bevorzugt 10.000 g/mol, ganz besonders bevorzugt 4.000 g/mol. Ein einer bevorzugten Ausführungsform beträgt das Molekulargewicht Mₙ von 500 bis 4000, insbesondere von 700 bis 2.000 g/mol. Die Polydispersität M_{w}/Mₙ ist vorzugsweise von 1,1 - 50, besonders bevorzugt kleiner oder gleich 5, insbesondere kleiner 3,5.

Die verzweigten Polyesterole der Komponente (C) sind erhältlich durch Polykondensation von
- Hexahydrophthalsäureanhydrid,
- Trimethylolpropan,
- optional mindestens einer weiteren Di- oder Tri-Säure oder deren Derivaten, und
- optional mindestens eines weiteren Diols oder Triols

Die Säuren und Polyole des Polyesterpolyols (C) werden, bezogen auf Säure- und Hydroxylgruppen, in einem molaren Mischungsverhältnis von 1:1 bis 1:1,95, bevorzugt von 1:1,1 bis 1:1,8 oder von eingesetzt. In einer Ausführungsform werden sie bevorzugt in einem molaren Mischungsverhältnis von 1:1,15 bis 1:1,6 oder von 1,2 bis 1,6 eingesetzt. Vorzugsweise wird das Polyesterpolyol (C) aus Hexahydrophthalsäureanhydrid und Trimethylolpropan in einem molaren Mischungsverhältnis von Säuregruppen zu Hydroxylgruppen von 1,1 bis 1,6 hergestellt wird.

Die Polyesterpolyole (C) besitzen vorzugsweise eine Summe von Säurezahl und OH-Zahl von bis zu 600 mg KOH/g, bevorzugt von 250-400 mg KOH/g. Bevorzugt beträgt die OH-Zahl 130 bis 280 mg KOH/g. Bevorzugt beträgt die Säurezahl von bis zu 110 mg KOH/g, vorzugsweise größer oder gleich 33 mg KOH/g, oder größer oder gleich 40, oder größer oder gleich 50 und insbesondere 70 bis 100 mg KOH/g bezogen auf Feststoff.

Die Polyesterpolyole (C) weisen vorzugsweise eine Glasübergangstemperatur von -60 bis 100 °C, von -50 bis 90 °C und besonders bevorzugt von -40 bis 80 °C, von -20 bis 50 °C oder von -15 bis 50 °C auf.

Unter hyperverzweigten Polyestern werden im Rahmen dieser Erfindung unvernetzte Polyester mit Hydroxy- und optional Carboxylgruppen verstanden, die sowohl strukturell als auch molekular uneinheitlich sind. Die Polyesterole sind bevorzugt unvernetzt, was im Rahmen dieser Schrift bedeutet, dass ein Vernetzungsgrad von weniger als 15 Gew.-%, bevorzugt von weniger als 10 Gew.-%, bestimmt über den unlöslichen Anteil des Polymeren, vorhanden ist. Der unlösliche Anteil des Polymeren wird bestimmt durch vierstündige Extraktion mit dem gleichen Lösungsmittel, wie es für die Gelpermeationschromatographie verwendet wird, also Tetrahydrofuran, je nachdem, in welchem Lösungsmittel das Polymer besser löslich ist, in einer Soxhlet-Apparatur und nach Trocknung des Rückstandes bis zur Gewichtskonstanz Wägung des verbliebenen Rückstandes.

Die Polyesterole (C) sind üblicherweise gut löslich, d.h. man kann bei 25 °C klare Lösungen mit einem Gehalt bis zu 50 Gew.-%, in einigen Fällen sogar bis zu 80 Gew.-%, der erfindungsgemäßen Polyester in Tetrahydrofuran (THF), Ethylacetat, n-Butylacetat, Ethanol und zahlreichen anderen Lösemitteln darstellen, ohne dass mit bloßem Auge Gelpartikel detektierbar sind.

Hyperverzweigte Polyester können auf der einen Seite ausgehend von einem Zentralmolekül analog zu Dendrimeren, jedoch mit uneinheitlicher Kettenlänge zwischen den möglichen Verzweigungspunkten aufgebaut sein. Sie können auf der anderen Seite auch linear, mit funktionellen Seitengruppen, aufgebaut sein oder aber, als Kombination der beiden Extreme, lineare und verzweigte Molekülteile aufweisen. Zur Definition von dendrimeren und hyperverzweigten Polymeren siehe auch P.J. Flory, J. Am. Chem. Soc. 1952, 74, 2718 und H. Frey et al., Chemistry - A European Journal, 2000, 6, No. 14, 2499.

Unter "hyperverzweigt" wird im Zusammenhang mit der vorliegenden Erfindung verstanden, dass der Verzweigungsgrad (Degree of Branching, DB), das heißt die mittlere Anzahl dendritischer Verknüpfungen plus mittlere Anzahl der Endgruppen pro Molekül, 10 bis 99,9 %, bevorzugt 20 bis 99 %, besonders bevorzugt 20 - 95 % beträgt. Unter "dendrimer" wird im Zusammenhang mit der vorliegenden Erfindung verstanden, dass der Verzweigungsgrad 99,9 - 100% beträgt. Zur Definition des "Degree of Branching" siehe H. Frey et al., Acta Polym. 1997, 48, 30 - 35.

Zu den optionalen Dicarbonsäuren gehören beispielsweise aliphatische Dicarbonsäuren, wie Oxalsäure, Malonsäure, Bernsteinsäure, Glutarsäure, Adipinsäure, Pimelinsäure, Korksäure, Azelainsäure, Sebacinsäure, Undecan-α,ω-dicarbonsäure, Dodecan-α,ω-dicarbonsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure, cis- und trans-Cyclopentan-1,3-dicarbonsäure. Weiterhin können auch aromatische Dicarbonsäuren, wie zum Beispiel Phthalsäure, Isophthalsäure oder Terephthalsäure verwendet werden. Auch ungesättigte Dicarbonsäuren, wie Maleinsäure oder Fumarsäure sind einsetzbar, wenn auch weniger bevorzugt.

Die genannten Dicarbonsäuren können auch substituiert sein mit einem oder mehreren Resten, ausgewählt aus:
C₁-C₂₀-Alkylgruppen, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, Trimethylpentyl, n-Nonyl, n-Decyl, n-Dodecyl, n-Octadecyl und n-Eicosyl;
C₃-C₁₂-Cycloalkylgruppen, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
Alkylengruppen wie Methylen oder Ethyliden; oder
C₆-C₁₄-Arylgruppen wie beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.
Als beispielhafte Vertreter für substituierte Dicarbonsäuren seien genannt: 2-Methylmalonsäure, 2-Ethylmalonsäure, 2-Phenylmalonsäure, 2-Methylbernsteinsäure, 2-Octadecenylbernsteinsäure und dessen Anhydrid (siehe unten), 2-Ethylbernsteinsäure, 2-Phenylbernsteinsäure, Itaconsäure, 3,3-Dimethylglutarsäure. Weiterhin lassen sich Gemische von zwei oder mehreren der vorgenannten Dicarbonsäuren einsetzen.

Die Dicarbonsäuren lassen sich entweder als solche oder in Form von Derivaten einsetzen. Unter Derivaten werden bevorzugt verstanden
- die betreffenden Anhydride in monomerer oder auch polymerer Form,
- Mono- oder Dialkylester, bevorzugt Mono- oder Di-C₁-C₄-alkylester, besonders bevorzugt Mono- oder Dimethylester oder die entsprechenden Mono- oder Diethylester,
- ferner Mono- und Divinylester sowie
- gemischte Ester, bevorzugt gemischte Ester mit unterschiedlichen C₁-C₄-Alkylkomponenten, besonders bevorzugt gemischte Methylethylester.

C₁-C₄-Alkyl bedeutet im Rahmen dieser Schrift Methyl, Ethyl, *iso*-Propyl, n-Propyl, n-Butyl, *iso*-Butyl, *sek*-Butyl und *tert*-Butyl, bevorzugt Methyl, Ethyl und n-Butyl, besonders bevorzugt Methyl und Ethyl und ganz besonders bevorzugt Methyl.

Es ist auch möglich, ein Gemisch aus einer Dicarbonsäure und einem oder mehreren ihrer Derivate einzusetzen. Gleichfalls ist es im Rahmen der vorliegenden Erfindung möglich, ein Gemisch mehrerer verschiedener Derivate von einer oder mehreren Dicarbonsäuren einzusetzen. Optionale Dicarbonsäuren sind insbesondere Malonsäure, Sebacinsäure, Bernsteinsäure, Glutarsäure, Adipinsäure, 1,2-, 1,3- oder 1,4-Cyclohexandicarbonsäure (Hexahydrophthalsäuren), Phthalsäure, Isophthalsäure, Terephthalsäure oder deren Mono- oder Dialkylester.

Ein bevorzugtes Disäure-Derivat ist Adipinsäuredimethylester.

In einer Ausführungsform ist das Polyesterpolyol (C) ausschließlich hergestellt aus Hexahydrophthalsäureanhydrid, Trimethylolpropan und Neopentylglykol in einem molaren Mischungsverhältnis der Säuregruppen zu den Hydroxygruppen von 1:1,1 bis 1:1,6 und einem molaren Mischungsverhältnis der Hydroxygruppen von Trimethylolpropan zu Hydroxygruppen von Neopentylglykol größer 1:1, in einem bevorzugten Beispiel von 1,7:1 bis 1,3:1; oder das Polyesterpolyol (C) ist ausschließlich hergestellt aus Hexahydrophthalsäureanhydrid, Trimethylolpropan, 2-Butyl-2-ethyl-1,3-propandiol und optional Adipinsäuredimethylester in einem molaren Mischungsverhältnis der Säuregruppen zu den Hydroxygruppen von 1:1 bis 1:1,4 und einem molaren Mischungsverhältnis der Säuregruppen von Hexahydrophthalsäureanhydrid zu Hydroxylgruppen von Trimethylolpropan von 1:0,9 bis 1:1,4, und einem molaren Mischungsverhältnis der Hydroxylgruppen von Trimethylolpropan zu Hydroxylgruppen von 2-Butyl-2-ethyl-1,3-propandiol von größer als 3:1 und stöchiometrisch weniger als 0,2 Teile Adipinsäuredimethylester bezogen auf Hexahydrophthalsäureanhydrid.

In einer Ausführungsform der Erfindung wird das Polyesterpolyol (C) nicht unter Verwendung einer weiteren Disäure (neben dem Hexahydrophthalsäureanhydrid) hergestellt.

Optionale Tricarbonsäuren oder Polycarbonsäuren (Aₓ) sind beispielsweise Aconitsäure, 1,3,5-Cyclohexantricarbonsäure, 1,2,4-Benzoltricarbonsäure, 1,3,5-Benzoltricarbonsäure, 1,2,4,5-Benzoltetracarbonsäure (Pyromellitsäure) sowie Mellitsäure und niedermolekulare Polyacrylsäuren. Der Index "x" steht dabei für die Funktionalität an Carboxygruppen, für die "A" steht, wobei gilt x≥3, bevorzugt x=3 oder 4 und besonders bevorzugt x=3. Tricarbonsäuren oder Polycarbonsäuren (Aₓ) lassen sich in der erfindungsgemäßen Reaktion entweder als solche oder aber in Form von Derivaten einsetzen.

Unter Derivaten werden bevorzugt verstanden
- die betreffenden Anhydride in monomerer oder auch polymerer Form,
- Mono- Di- oder Trialkylester, bevorzugt Mono- Di-, oder Tri-C₁-C₄-alkylester, besonders bevorzugt Mono-, Di- oder Trimethylester oder die entsprechenden Mono-, Di- oder Triethylester,
- ferner Mono-, Di- und Trivinylester sowie
   gemischte Ester, bevorzugt gemischte Ester mit unterschiedlichen C₁-C₄-Alkylkomponenten, besonders bevorzugt gemischte Methylethylester.

Im Rahmen der vorliegenden Erfindung ist es auch möglich, ein Gemisch aus einer Tri- oder Polycarbonsäure und einem oder mehreren ihrer Derivate einzusetzen, zum Beispiel eine Mischung aus Pyromellitsäure und Pyromellitsäuredianhydrid. Gleichfalls ist es im Rahmen der vorliegenden Erfindung möglich, ein Gemisch mehrerer verschiedener Derivate von einer oder mehreren Tri- oder Polycarbonsäuren einzusetzen, zum Beispiel eine Mischung aus 1,3,5-Cyclohexantricarbonsäure und Pyromellitsäuredianhydrid.

Als optionale weitere Diole (B₂) gemäß der vorliegenden Erfindung verwendet man beispielsweise Ethylenglykol, Propan-1,2-diol, Propan-1,3-diol, 2-Butyl-2-ethyl-1,3-propandiol, Butan-1,2-diol, Butan-1,3-diol, Butan-1,4-diol, Butan-2,3-diol, Pentan-1,2-diol, Pentan-1,3-diol, Pentan-1,4-diol, Pentan-1,5-diol, Pentan-2,3-diol, Pentan-2,4-diol, Hexan-1,2-diol, Hexan-1,3-diol, Hexan-1,4-diol, Hexan-1,5-diol, Hexan-1,6-diol, Hexan-2,5-diol, Heptan-1,2-diol 1,7-Heptandiol, 1,8-Octandiol, 1,2-Octandiol, 1,9-Nonandiol, 1,2-Decandiol, 1,10-Decandiol, 1,2-Dodecandiol, 1,12-Dodecandiol, 1,5-Hexadien-3,4-diol, 1,2- und 1,3-Cyclopentandiole, 1,2-, 1,3- und 1,4-Cyclo-hexandiole, 1,1-, 1,2-, 1,3- und 1,4-Bis-(Hydroxymethyl)cyclohexane, 1,1-, 1,2-, 1,3- und 1,4-Bis(Hydroxyethyl)cyclohexane, Neopentylglykol, (2)-Methyl-2,4-pentandiol, 2,4-Dimethyl-2,4-Pentandiol, 2-Ethyl-1,3-hexandiol, 2,5-Dimethyl-2,5-hexandiol, 2,2,4-Trimethyl-1,3-pentandiol, Pinacol, Diethylenglykol, Triethylenglykol, Dipropylenglykol, Tripropylenglykol, Polyethylenglykole HO(CH₂CH₂O)ₙ-H oder Polypropylenglykole HO(CH[CH₃]CH₂O)ₙ-H, wobei n eine ganze Zahl und n ≥ 4 ist, Polyethylen-polypropylenglykole, wobei die Abfolge der Ethylenoxidder Propylenoxid-Einheiten blockweise oder statistisch sein kann, Polytetramethylenglykole, vorzugsweise bis zu einem Molgewicht bis zu 5000 g/mol, Poly-1,3-Propandiole, vorzugsweise mit einem Molgewicht bis zu 5000 g/mol, Polycaprolactone oder Gemische von zwei oder mehr Vertretern der voranstehenden Verbindungen. Dabei kann eine oder auch beide Hydroxylgruppen in den vorstehend genannten Diolen durch SH-Gruppen substituiert werden. Bevorzugt eingesetzte Diole sind Ethylenglykol, 1,2-Propandiol, 1,3-Propandiol, 2-Butyl-2-ethyl-1,3-propandiol, 1,4-Bu-tandiol, 1,5-Pentandiol, Neopentylglykol, 1,6-Hexandiol, 1,8-Octandiol, 1,2-, 1,3- und 1,4-Cyclo-hexandiol, 1,3- und 1,4-Bis(hydroxymethyl)cyclo-hexan, sowie Diethylenglykol, Triethylenglykol, Dipropylenglykol und Tripropylenglykol.

Ganz besonders bevorzugt sind 2-Butyl-2-ethyl-1,3-propandiol, Neopentylglykol, und 1,6-Hexandiol.

Bevorzugt liegt das Mischungsverhältnis von Hydroxygruppen des Trimethylolpropans zu den Hydroxygruppen der Diole oberhalb von 1:1. In einem besonderen Beispiel mit Neopentylglykol liegt es bei 1,7:1 bis 1,3:1. In einem besonderen Beispiel mit 2-Butyl-2-ethyl-1,3-propandiol liegt es bei 10:1 bis 4:1.

Optionale mindestens trifunktionelle Alkohole (By) umfassen Glycerin, Trimethylolmethan, Trimethylolethan, 1,2,4-Butantriol, Tris(hydroxymethyl)amin, Tris(hydroxyethyl)amin, Tris(hydroxypropyl)amin, Pentaerythrit, Diglycerin, Triglycerin oder höhere Kondensationsprodukte des Glycerins, Di(trimethylolpropan), Di(pentaerythrit), Trishydroxymethylisocyanurat, Tris(hydroxyethyl)isocyanurat (THEIC), Tris(hydroxypropyl)isocyanurat, Inositole oder Zucker, wie zum Beispiel Glucose, Fructose oder Sucrose, Zuckeralkohole wie z.B. Sorbit, Mannit, Threit, Erythrit, Adonit (Ribit), Arabit (Lyxit), Xylit, Dulcit (Galactit), Maltit, Isomalt, tri- oder höherfunktionelle Polyetherole auf Basis tri- oder höherfunktioneller Alkohole und Ethylenoxid, Propylenoxid und/oder Butylenoxid. Dabei sind Glycerin, Diglycerin, Triglycerin, Trimethylolethan, DiTrimethylolpropan, 1,2,4-Butantriol, Pentaerythrit, Tris(hydroxyethyl)isocyanurat sowie deren Polyetherole auf Basis von Ethylenoxid und/oder Propylenoxid besonders bevorzugt. Ganz besonders bevorzugt sind Glycerin, Di-Trimethylolpropan und Pentaerythrit. Der Index "y" steht dabei für die Funktionalität an Hydroxygruppen, für die "B" steht, wobei gilt y≥3, bevorzugt y=3 oder 4 und besonders bevorzugt y=3.

Das Polyesterpolyol enthält, stöchiometrisch bezogen auf Hexahydrophthalsäureanhydrid, weniger als 20 %, bevorzugt weniger als 10 %, besonders bevorzugt keinen tetrafunktionellen Alkohol. Ein höherer Anteil tetra-funktioneller Alkohole führt bereits bei geringeren Umsätzen zu einer Vergelung der resultierenden Polyester. Neben der Vergelungsgefahr als solcher, versucht man dies durch einen niedrigeren Umsatz zu umgehen. Dies führt dann wiederum zu einem höheren Restmonomergehalt. Dieser ist unerwünscht und kann sich gegebenenfalls z.B. als Weichmacher in Lacken negativ auswirken. Tetra-Alkohole weisen zudem eine hohe Polarität auf, insbesondere Pentaerythrit. Dies erhöht wiederum die Unverträglichkeit der Produkte mit Polyisocyanaten respektive Acrylaten.

Die Polyesterpolyole (C) können in Substanz oder in Gegenwart eines Lösemittels hergestellt werden. In einer bevorzugten Ausführungsform wird die Reaktion frei von Lösungsmittel durchgeführt und das Polyesterpolyol anschließend in Butylacetat gelöst.

Zur Durchführung des Verfahrens kann man in Gegenwart eines Wasser entziehenden Mittels als Additiv arbeiten, das man zu Beginn der Reaktion zusetzt. Geeignet sind beispielsweise Molekularsiebe, insbesondere Molekularsieb 4Å, MgSO₄ und Na₂SO₄. Man kann auch während der Reaktion weiteres Wasser entziehendes Mittel zufügen oder Wasser entziehendes Mittel durch frisches Wasser entziehendes Mittel ersetzen. Man kann auch während der Reaktion gebildetes Wasser bzw. Alkohol abdestillieren und beispielsweise einen Wasserabscheider einsetzen, bei dem das Wasser mit Hilfe eines Schleppmittels entfernt wird.

Weiterhin kann die Abtrennung durch Strippen erfolgen, beispielsweise durch Durchleiten eines unter den Reaktionsbedingungen inerten Gases durch das Reaktionsgemisch erfolgen, gegebenenfalls zusätzlich zu einer Destillation. Als Inertgase eignen sich vorzugsweise Stickstoff, Edelgase, Kohlendioxid oder Verbrennungsgase.

Weiterhin kann die Abtrennung unter reduziertem Druck erfolgen.

Vorzugsweise wird das Polyesterpolyol (C) in Abwesenheit von Katalysatoren hergestellt, insbesondere in Abwesenheit von metallorganischen Katalysatoren, insbesondere ohne Zinn-Katalysator, sodass das Polyesterpolyol (C) Zinn-frei ist. Falls Katalysatoren verwendet werden, so geschieht dies vorzugsweise mit einem (metallorganischen) Zink, Titan-, Zirkon-, Bismut-, Aluminium-, Zink-Katalysator oder einem anderen nicht Zinn enthaltenden Katalysator, z.B. einem sauren anorganischen oder einem sauren organischen Katalysator oder deren Gemisch, bevorzugt einem Titan enthaltenden Katalysator.

Als saure anorganische Katalysatoren sind beispielsweise Schwefelsäure, Sulfate und Hydrogensulfate, wie Natriumhydrogensulfat, Phosphorsäure, Phosphonsäure, hypophosphorige Säure, Aluminiumsulfathydrat, Alaun, saures Kieselgel (pH ≤ 6, insbesondere ≤ 5) und saures Aluminiumoxid zu nennen. Weiterhin sind beispielsweise Aluminiumverbindungen der allgemeinen Formel Al(OR³)₃ und Titanate der allgemeinen Formel Ti(OR³)₄ als saure anorganische Katalysatoren einsetzbar, wobei die Reste R³ jeweils gleich oder verschieden sein können und unabhängig voneinander gewählt sind aus C₁-C₂₀-Alkylresten, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, n-Nonyl, n-Decyl, n-Dodecyl, n-Hexadecyl oder n-Octadecyl; C₃-C₁₂-Cycloalkylresten, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl. Bevorzugt sind die Reste R³ in Al(OR³)₃ bzw. Ti(OR³)₄ jeweils gleich und gewählt aus n-Butyl, Isopropyl oder 2-Ethylhexyl.

Saure organische Katalysatoren sind saure organische Verbindungen mit beispielsweise Phosphatgruppen, Sulfonsäuregruppen, Sulfatgruppen oder Phosphonsäuregruppen. Besonders bevorzugt sind Sulfonsäuren wie beispielsweise para-Toluolsulfonsäure, insbesondere andere Alkylderivate der Benzolsulfonsäure, bevorzugt mit C1-C20-Alkylrest, bevorzugt linear ohne Heterosubstituenten. Man kann auch saure Ionentauscher als saure organische Katalysatoren einsetzen, beispielsweise Sulfonsäuregruppen-haltige Polystyrolharze, die mit etwa zwei mol-% Divinylbenzol vernetzt sind. Man kann auch Kombinationen von zwei oder mehreren der vorgenannten Katalysatoren einsetzen. Auch ist es möglich, solche organische oder metallorganische oder auch anorganische Katalysatoren, die in Form diskreter Moleküle vorliegen, in immobilisierter Form, z.B. an Kieselgel oder an Zeolithen, einzusetzen. Wünscht man saure anorganische, metallorganische oder organische Katalysatoren einzusetzen, so setzt man vorzugsweise 0,1 bis 10 Gew.-%, bevorzugt 0,2 bis 2 Gew.-% Katalysator ein. Enzyme oder Zersetzungsprodukte von Enzymen gehören nicht zu den sauren organischen Katalysatoren im Sinne der vorliegenden Erfindung. Gleichfalls gehören die erfindungsgemäß umgesetzten Dicarbonsäuren nicht zu den sauren organischen Katalysatoren im Sinne der vorliegenden Erfindung. Zur Durchführung des Verfahrens zur Herstellung des Polyesterpolyols (C) verzichtet man vorteilhaft auf den Einsatz von Enzymen.

Bevorzugt ist, dass das Polyesterpolyol (C) (im Folgenden auch verkürzt bezeichnet als Polyesterol oder als Polyester) in einem einstufigen Prozess hergestellt wird.

Das Verfahren zur Herstellung des Polyesterpolyols (C) wird vorzugsweise unter Inertgasatmosphäre, d.h. einem unter den Reaktionsbedingungen inerten Gas, durchgeführt, beispielsweise unter Kohlendioxid, Verbrennungsgasen, Stickstoff oder Edelgas, unter denen insbesondere Argon zu nennen ist. Das Verfahren wird bei Temperaturen von 60 bis 250°C durchgeführt. Vorzugsweise arbeitet man bei Temperaturen von 150 bis 200, besonders bevorzugt bei 160 bis 180°C. Die Druckbedingungen des erfindungsgemäßen Verfahrens sind in der Regel unkritisch. Man kann bei deutlich verringertem Druck arbeiten, beispielsweise bei 10 bis 500 mbar. Das Verfahren kann auch bei Drucken oberhalb von 500 mbar durchgeführt werden. Bevorzugt ist aus Gründen der Einfachheit die Umsetzung bei Atmosphärendruck; möglich ist aber auch eine Durchführung bei leicht erhöhtem Druck, beispielsweise bis 1200 mbar. Man kann auch unter deutlich erhöhtem Druck arbeiten, beispielsweise bei Drucken bis 10 bar. Bevorzugt ist die Umsetzung bei verringertem oder Atmosphärendruck, besonders bevorzugt bei Atmosphärendruck. Die Umsetzungsdauer des Verfahrens nach Aufheizen auf die Reaktionstemperatur ist abhängig von den Rohstoffen und gewünschten Produktenddaten, wie Säurezahl (und Hydroxylzahl). Sie beträgt üblicherweise 1 bis 48 Stunden, bevorzugt 2 bis 26 Stunden. In Abwesenheit von Adipinsäuredimethylester kann in einer bevorzugten Form 2 bis 8 Stunden, bei Einsatz von Adipinsäuredimethylester kann Sie z.B. 16 bis 26 Stunden brauchen. Alternativ kann die Reaktionszeit durch höhere Temperaturen verkürzt werden.

Nach beendeter Reaktion lassen sich die hochfunktionellen hoch- und hyperverzweigten Polyester leicht isolieren, gegebenenfalls durch Abfiltrieren des Katalysators und gegebenenfalls Abziehen des Lösemittels, wobei man das Abziehen des Lösemittels üblicherweise bei vermindertem Druck durchführt. Weitere gut geeignete Aufarbeitungsmethoden sind Ausfällen des Polymeren nach Zugabe von Wasser und anschließendes Waschen und Trocknen. Vorzugsweise erfolgt das Verfahren zur Herstellung des Polyesterpolyols (C) ohne Katalysator und ohne Lösungsmittel.

In einer Ausführungsform der Erfindung können die erfindungsgemäßen Polyester neben den bereits durch die Reaktion erhaltenden funktionellen Gruppen weitere funktionelle Gruppen aufweisen. Eine nachträgliche Funktionalisierung kann man erhalten, indem der erhaltene hochfunktionelle, hoch- oder hyperverzweigte Polyester in einem zusätzlichen Verfahrensschritt mit einem geeigneten Funktionalisierungsreagenz umsetzt, welches mit den OH- und/oder Carboxyl-Gruppen des Polyesters reagieren kann.

Eine Funktionalisierung von hydroxygruppenhaltigen erfindungsgemäßen Polyestern mit gesättigten oder ungesättigten, aliphatischen, cycloaliphatischen, araliphatischen oder aromatischen Monocarbonsäuren kann bevorzugt ausschließlich nachträglich, d.h. nach Beendigung der eigentlichen Umsetzung in einem gesonderten Schritt erfolgen. Geeignete gesättigte Monocarbonsäuren können 1 bis 30 Kohlenstoffatome umfassen, bevorzugt 2 bis 30, besonders bevorzugt 4 bis 25, ganz besonders bevorzugt 6 bis 20 und insbesondere 8 bis 20 Kohlenstoffatome. Beispiele für geeignete gesättigte Monocarbonsäuren sind Ameisensäure, Essigsäure, Propionsäure, Buttersäure, Pivalinsäure, Capronsäure, 2-Ethylhexansäure, Octansäure, Isononansäure, Caprinsäure, Undecansäure, Laurinsäure, Myristinsäure, Pentadecansäure, Palmitinsäure, Margarinsäure, Stearinsäure, Nonadecansäure, Arachinsäure, Behensäure, Ölsäure, Linolsäure, Linolensäure, Benzoesäure, α- oder β-Naphthalinsäure. Monocarbonsäuren können in Mengen bis zu 20 Gew.-%, bevorzugt bis maximal 15 Gew.-% bezogen auf Hexahydrophthalsäureanhydrid eingesetzt werden. Geeignete α,β-ungesättigte Monocarbonsäuren können 3 bis 20 Kohlenstoffatome umfassen, bevorzugt 3 bis 10, besonders bevorzugt 3 bis 6, ganz besonders bevorzugt 3 bis 5 und insbesondere 3 bis 4 Kohlenstoffatome. Beispiele für geeignete α,β-ungesättigte Monocarbonsäuren sind Acrylsäure, Methacrylsäure, Ethacrylsäure, α-Chloracrylsäure, Maleinsäure, Fumarsäure, Itaconsäure, Crotonsäure, Citraconsäure, Mesaconsäure oder Glutaconsäure, bevorzugt sind Acrylsäure, Methacrylsäure, Maleinsäure, Fumarsäure, Itaconsäure und Crotonsäure, besonders bevorzugt sind Acrylsäure, Methacrylsäure, Maleinsäure, Fumarsäure und Crotonsäure, ganz besonders bevorzugt sind Acrylsäure und Methacrylsäure und insbesondere Acrylsäure. Die Umsetzung mit gesättigten oder ungesättigten Monocarbonsäuren kann statt mit den Carbonsäuren auch mit deren Derivaten erfolgen, beispielsweise mit deren Anhydriden, Chloriden oder Estern, bevorzugt mit deren Anhydriden oder Estern, besonders bevorzugt mit deren Estern mit C₁-C₄-Alkylalkoholen, ganz besonders bevorzugt mit deren Methylestern.

Bevorzugt gibt es keine weitere Funktionalisierung.

Die erfindungsgemäßen zweikomponentigen Polyurethanbeschichtungsmassen weisen in der Regel eine Stöchiometrie von Isocyanatgruppen in (A) zu gegenüber Isocyanat reaktiven Gruppen in (B) und (C) von 0,5:1 bis 2:1, bevorzugt 0,7:1 bis 1,3:1, besonders bevorzugt 0,8:1 bis 1,2:1 und speziell 0,9:1 bis 1,1:1 auf.

Das Gewichtsverhältnis der Komponenten Poly(meth)acrylatpolyol (B): verzweigtes Polyesterpolyol (C) beträgt 1,5:1 bis 99:1, vorzugsweise 2,3:1 bis 20:1 und speziell von 2,7:1 bis 20:1, jeweils bezogen auf Feststoff.

Zur Herstellung der erfindungsgemäßen Beschichtungsmassen werden Polyisocyanatzusammensetzung (A) und Bindemittel (B) und (C) in dem gewünschten Molverhältnis von Isocyanatgruppen in (A) zu gegenüber Isocyanat reaktiven Gruppen in (B) und (C) miteinander vermischt, wobei gegebenenfalls noch weitere lacktypische Bestandteile eingemischt werden können. Anschließend wird auf das Substrat aufgetragen.

Als weitere lacktypische Additive (G) in den Beschichtungsmassen können beispielsweise eingesetzt werden: UV-Stabilisatoren wie UV-Absorber und geeignete Radikalfänger (insbesondere HALS-Verbindungen, Hindered Amin Light Stabilizer), Katalysatoren (Aktivatoren, Beschleuniger), Trockenmittel, antistatische Agentien, Flammschutzmittel, Verdicker, thixotrope Agentien, oberflächenaktive Agentien, Viskositätsmodifikatoren, Plastifizierer oder Chelatbildner. Geeignete UV-Absorber umfassen Oxanilide, Triazine und Benzotriazol (letztere erhältlich z.B. als Tinuvin® -Marken der BASF SE) und Benzophenone (z.B. Chimassorb® 81 der BASF SE). Bevorzugt sind z.B. 95 % Benzolpropansäure, 3-(2H-Benzotriazol-2-yl)-5-(1,1-dimethylethyl)-4-hydroxy-, C7-9-verzweigte und lineare Alkylester; 5 % 1-Methoxy-2-propylacetat (z.B. Tinuvin® 384) und α-[3-[3-(2H-Benzotriazol-2-yl)-5-(1,1,-dimethylethyl)-4-hydroxyphenyl]-1-oxopropyl]-ω-hydroxypoly(oxo-1,2-ethanediyl) (z.B. Tinuvin® 1130), jeweils Produkte z.B. der BASF SE. DL-Alpha-Tocopherol, Tocopherol, Zimtsäurederivate und Cyanoacrylate können ebenfalls zu diesem Zweck eingesetzt werden.
Diese können allein oder zusammen mit geeigneten Radikalfängern, beispielsweise sterisch gehinderten Aminen (oft auch als HALS -oder HAS-Verbindungen bezeichnet; Hindered Amine (Light) Stabilizer) wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat, eingesetzt werden. Diese sind z.B. erhältlich als Tinuvin®- und Chimassorb®-Marken der BASF SE. Bevorzugt im gemeinsamen Einsatz mit Lewis-Säuren sind jedoch solche gehinderten Amine, die N-alkyliert sind, beispielsweise Bis (1,2,2,6,6-pentamethyl-4-piperidinyl)-[[3,5-bis(1,1-dimethylethyl)-4-hydroxyphenyl]-methyl]butylmalonat (z.B. Tinuvin® 144 der BASF SE); eine Mischung aus Bis(1,2,2,6,6-Pentamethyl-4-Piperidinyl)sebacat und Methyl(1,2,2,6,6-Pentamethyl-4-Piperidinyl)sebacat (z.B. Tinuvin® 292 der BASF SE); oder die N-(O-Alkyliert) sind, wie z.B. Dekandisäure,bis(2,2,6,6-tetramethyl-1-(octyloxy)-4-piperidinyl)ester, Reaktionsprodukte mit 1,1-Dimethylethylhydroperoxyd und Oktan (z.B. Tinuvin® 123 der BASF SE). UV-Stabilisatoren werden üblicherweise in Mengen von 0,1 bis 5,0 Gew.-%, bevorzugt 2-4 Gew.% bezogen auf die in der Zubereitung enthaltenen festen Komponenten, eingesetzt.

Als Verdicker kommen neben radikalisch (ko)polymerisierten (Co)Polymerisaten, übliche organische und anorganische Verdicker wie Hydroxymethylcellulose oder Bentonit in Betracht. Als Chelatbildner können z.B. Ethylendiaminessigsäure und deren Salze sowie β-Diketone verwendet werden.

Weiterhin können noch als Komponente (H) Füllstoffe, Farbstoffe und/oder Pigmente enthalten sein. Pigmente im eigentlichen Sinne sind gemäß CD Römpp Chemie Lexikon - Version 1.0, Stuttgart/New York: Georg Thieme Verlag 1995 unter Verweis auf DIN 55943 partikelförmige "im Anwendungsmedium praktisch unlösliche, anorganische oder organische, bunte oder unbunte Farbmittel". Praktisch unlöslich bedeutet dabei eine Löslichkeit bei 25 °C unter 1 g / 1000 g Anwendungsmedium, bevorzugt unter 0,5, besonders bevorzugt unter 0,25, ganz besonders bevorzugt unter 0,1 und insbesondere unter 0,05 g / 1000 g Anwendungsmedium. Beispiele für Pigmente im eigentlichen Sinne umfassen beliebige Systeme von Absorptions-und/oder Effektpigmenten, bevorzugt Absorptionspigmente. Anzahl und Auswahl der Pigmentkomponenten sind dabei keinerlei Beschränkungen unterworfen. Sie können den jeweiligen Erfordernissen, beispielsweise dem gewünschten Farbeindruck, beliebig angepasst werden, beispielsweise wie in Schritt a) beschrieben. Beispielsweise können alle Pigmentkomponenten eines standardisierten Mischlacksystems zugrunde liegen. Unter Effektpigmenten sind alle Pigmente zu verstehen, die einen plättchenförmigen Aufbau zeigen und einer Oberflächenbeschichtung spezielle dekorative Farbeffekte verleihen. Bei den Effektpigmenten handelt es sich beispielsweise um alle in der Fahrzeug- und Industrielackierung üblicherweise einsetzbaren effektgebenden Pigmente. Beispiele für derartige Effektpigmente sind reine Metallpigmente; wie z.B. Aluminium-, Eisen- oder Kupferpigmente; Interferenzpigmente, wie z.B. titandioxidbeschichteter Glimmer, eisenoxidbeschichteter Glimmer, mischoxidbeschichteter Glimmer (z.B. mit Titandioxid und Fe₂O₃ oder Titandioxid und Cr₂O₃), metalloxidbeschichtetes Aluminium, oder Flüssigkristallpigmente. Bei den farbgebenden Absorptionspigmenten handelt es sich beispielsweise um übliche in der Lackindustrie einsetzbare organische oder anorganische Absorptionspigmente. Beispiele für organische Absorptionspigmente sind Azopigmente, Phthalocyanin-, Chinacridon- und Pyrrolopyrrolpigmente. Beispiele für anorganische Absorptionspigmente sind Eisenoxidpigmente, Titandioxid und Ruß.

Farbstoffe sind ebenfalls Farbmittel und unterscheiden sich von den Pigmenten durch ihre Löslichkeit im Anwendungsmedium, d.h. sie weisen bei 25 °C eine Löslichkeit über 1 g / 1000 g im Anwendungsmedium auf. Beispiele für Farbstoffe sind Azo-, Azin-, Anthrachinon-, Acridin-, Cyanin-, Oxazin-, Polymethin-, Thiazin-, Triarylmethan-Farbstoffe. Diese Farbstoffe können Anwendung finden als basische oder kationische Farbstoffe, Beizen-, Direkt-, Dispersions-, Entwicklungs-, Küpen-, Metallkomplex-, Reaktiv-, Säure-, Schwefel-, Kupplungs- oder Substantive Farbstoffe.

Als koloristisch inerte Füllstoffe sind alle Stoffe/Verbindungen zu verstehen, die einerseits koloristisch unwirksam sind; d.h. die eine geringe Eigenabsorption zeigen und deren Brechzahl ähnlich der Brechzahl des Beschichtungsmediums ist, und die andererseits in der Lage sind, die Orientierung (parallele Ausrichtung) der Effektpigmente in der Oberflächenbeschichtung, d.h. im applizierten Lackfilm, zu beeinflussen, ferner Eigenschaften der Beschichtung oder der Beschichtungsmassen, beispielsweise Härte oder Rheologie. Im Folgenden sind beispielhaft einsetzbare inerte Stoffe/Verbindungen genannt, ohne jedoch den Begriff koloristisch inerte topologiebeeinflussende Füllstoffe auf diese Beispiele zu beschränken. Geeignete inerte Füllstoffe entsprechend der Definition können beispielsweise transparente oder semitransparente Füllstoffe oder Pigmente sein, wie z.B. Kieselgele, Blancfixe, Kieselgur, Talkum, Calciumcarbonate, Kaolin, Bariumsulfat, Magnesiumsilikat, Aluminiumsilikat, kristallines Siliziumdioxid, amorphe Kieselsäure, Aluminiumoxid, Mikrokugeln oder Mikrohohlkugeln z.B. aus Glas, Keramik oder Polymeren mit Größen von beispielsweise 0,1-50 µm. Weiterhin können als inerte Füllstoffe beliebige feste inerte organische Partikel, wie z.B. Harnstoff-Formaldehyd-Kondensationsprodukte, mikronisiertes Polyolefinwachs und mikronisiertes Amidwachs, eingesetzt werden. Die inerten Füllstoffe können jeweils auch in Mischung eingesetzt werden. Bevorzugt wird jedoch jeweils nur ein Füllstoff eingesetzt. Bevorzugte Füllstoffe umfassen Silikate, z. B. durch Hydrolyse von Siliciumtetrachlorid erhältliche Silikate wie Aerosil® der Fa. Degussa, Kieselerde, Talkum, Aluminiumsilikate, Magnesiumsilikate, Calciumcarbonate etc.

Weiterhin kann die Beschichtungsmasse mit mindestens einem Katalysator versetzt werden, der die Umsetzung von Isocyanatgruppen mit gegenüber Isocyanat reaktiven Gruppen zu beschleunigen vermag. Verbindungen, die die Umsetzung von Isocyanatgruppen mit gegenüber Isocyanat reaktiven Gruppen zu beschleunigen vermögen, sind solche Verbindungen, die durch ihre Anwesenheit in einem Eduktgemisch zu einem höheren Anteil an urethangruppenhaltigen Reaktionsprodukten führen als das gleiche Eduktgemisch in deren Abwesenheit unter denselben Reaktionsbedingungen. Diese Verbindungen sind literaturbekannt, beispielsweise aus G. Oertel (Hrsg.), Polyurethane, 3. Auflage 1993, Carl Hanser Verlag, München - Wien, Seiten 104 bis 110, Kapitel 3.4.1. "Katalysatoren". Bevorzugt sind organische Amine, insbesondere tertiäre aliphatische, cycloaliphatische oder aromatische Amine, Brønsted-Säuren und/oder Lewis-saure Organometallverbindungen, besonders bevorzugt sind Lewis-saure Organometallverbindungen. Als Lewis-saure organische Metallverbindungen kommen z.B. Zinnverbindungen in Frage, wie beispielsweise Zinn-(II)-salze von organischen Carbonsäuren, z.B. Zinn-(II)-diacetat, Zinn-(II)-dioctoat, Zinn-(II)-bis(ethylhexanoat) und Zinn-(II)-dilaurat und die Dialkylzinn-(IV)-salze von organischen Carbonsäuren, z.B. Dimethylzinn-diacetat, Dibutylzinn-diacetat, Dibutylzinndibutyrat, Dibutylzinn-bis(2-ethylhexanoat), Dibutylzinn-dilaurat, Dibutylzinn-maleat, Dioctylzinndilaurat und Dioctylzinn-diacetat. Zudem können Zink-(II)-Salze eingesetzt werden, wie beispielsweise Zink-(II)-dioctoat. Wenn nicht anders angegeben kann es sich bei den Carbonsäuren, z.B. bei Octoat, um verzweigte und/oder unverzweigte Isomere handeln, bevorzugt um unverzweigte. Auch Metallkomplexe wie Acetylacetonate des Eisens, Titans, Aluminiums, Zirkons, Mangans, Nickels, Zinks und Cobalts sind möglich. Weitere Metallkatalysatoren werden von Blank et al. in Progress in Organic Coatings, 1999, Vol. 35, Seiten 19-29 beschrieben.

Als Zinn- und Zink-freie Alternativen werden u.a. Zirkonium, Titan, Wismut und Aluminium-Verbindungen eingesetzt. Dies sind z.B. Zirkoniumtetraacetylacetonat (z.B. K-KAT® 4205 der Firma King Industries); Zirkoniumdionate (z.B. K-KAT® XC-9213; XC-A 209 und XC-6212 der Firma King Industries); Wismut-Verbindungen, insbesondere Tricarboxylate (z.B. K-KAT® 348, XC-B221; XC-C227, XC 8203 der Firma King Industries); Aluminiumdionat (z.B. K-KAT® 5218 der Firma King Industries). Zinn- und Zink-freie Katalysatoren werden ansonsten z.B. auch unter dem Handelsnamen Borchi® Kat der Firma Borchers, TK der Firma Goldschmidt oder BICAT® der Firma Shepherd, Lausanne angeboten. Diese Katalysatoren sind für Lösungsmittelbasierte und/oder blockierte Systeme geeignet. Molybdän-, Wolfram- und Vanadium-Katalysatoren, werden insbesondere für den Umsatz blockierter Polyisocyanate unter WO 2004/076519 und WO 2004/076520 beschrieben.

Auch Cäsiumsalze können als Katalysatoren eingesetzt werden. Als Cäsiumsalze kommen dabei solche Verbindungen in Betracht, in denen folgende Anionen eingesetzt werden: F⁻, Cl⁻, ClO⁻, ClO₃⁻, ClO₄⁻, Br⁻, J⁻, JO₃⁻, CN⁻, OCN⁻, NO₂⁻, NO₃⁻, HCO₃⁻, CO₃²⁻, S²⁻, SH⁻, HSO₃⁻, SO₃²⁻, HSO₄⁻, SO₄²⁻, S₂O₂²⁻, S₂O₄²⁻, S₂O₅²⁻, S₂O₆²⁻, S₂O₇²⁻, S₂O₈²⁻, H₂PO₂⁻, H₂PO₄⁻, HPO₄²⁻, PO₄³⁻, P₂O₇⁴⁻, (OCₙH₂ₙ₊₁)⁻, (CₙH₂ₙ₋₁O₂)⁻, (CₙH₂ₙ₋₃O₂)⁻ sowie (Cₙ₊₁H₂ₙ₋₂O₄)²⁻, wobei n für die Zahlen 1 bis 20 steht. Bevorzugt sind dabei Cäsiumcarboxylate, bei denen das Anion den Formeln (CₙH₂ₙ₋₁O₂)⁻ sowie (Cₙ₊₁H₂ₙ₋₂O₄)²⁻ mit n gleich 1 bis 20, gehorcht. Besonders bevorzugte Cäsiumsalze weisen als Anionen Monocarboxylate der allgemeinen Formel (CₙH₂ₙ₋₁O₂)⁻ auf, wobei n für die Zahlen 1 bis 20 steht. Hierbei sind insbesondere zu erwähnen Formiat, Acetat, Propionat, Hexanoat und 2-Ethylhexanoat.

Anschließend an das Auftragen der erfindungsgemäßen Beschichtungsmasse wird bei Umgebungstemperatur bis 140 °C, bevorzugt 20 bis 80 °C, besonders bevorzugt bis 60 °C das Lackgemisch ausgehärtet. Dies erfordert insbesondere bei erhöhter Temperatur in der Regel nicht mehr als 2 Stunden, insbesondere nicht mehr als 1 Stunde, z.B. 10-40 Minuten. Die Härtung kann auch mit Hilfe von Infrarotstrahlung erfolgen bzw. unterstützt werden.

Die Beschichtung der Substrate erfolgt nach üblichen, dem Fachmann bekannten Verfahren, wobei man wenigstens eine Beschichtungsmasse auf das zu beschichtende Substrat in der gewünschten Stärke aufbringt und die gegebenenfalls enthaltenen flüchtigen Bestandteile der Beschichtungsmasse, gegebenenfalls unter Erhitzen, entfernt. Dieser Vorgang kann gewünschten falls ein- oder mehrfach wiederholt werden. Das Aufbringen auf das Substrat kann in bekannter Weise, z. B. durch Spritzen, Spachteln, Rakeln, Bürsten, Rollen, Walzen, Gießen, Laminieren, Hinterspritzen oder Koextrudieren erfolgen. Die Dicke einer solchen zu härtenden Schicht kann von 0,1 µm bis mehrere mm betragen, bevorzugt von 1 bis 2.000 µm, besonders bevorzugt 5 bis 200 µm, ganz besonders bevorzugt von 5 bis 60 µm (bezogen auf den Lack im Zustand in dem das Lösungsmittel aus dem Lack entfernt ist).

Weiterhin sind auch Substrate, beschichtet mit einer erfindungsgemäßen Mehrschichtlackierung Gegenstand der vorliegenden Erfindung.

Besonders geeignet sind solche Polyurethanlacke für Anwendungen, in denen eine besonders hohe Applikationssicherheit, Außenwitterungsbeständigkeit, Optik, Lösemittel-, Chemikalien- und Wasserfestigkeit gefordert werden.

Die erhaltenen zweikomponentigen Beschichtungsmassen und Lackformulierungen eignen sich zum Beschichten von Substraten wie Holz, Holzfurnier, Papier, Pappe, Karton, Textil, Folie, Leder, Vlies, Kunststoffoberflächen, Glas, Keramik, mineralischen Baustoffen, wie Zement-Formsteine und Faserzementplatten oder Metallen, die jeweils optional vorbeschichtet bzw. vorbehandelt sein können. Bevorzugt sind Metalle und Kunststoffe, die optional vorbeschichtet oder vorbehandelt sein können.

Derartige Beschichtungsmassen eignen sich als oder in Innen- oder Außenbeschichtungen, also solche Anwendungen, die dem Tageslicht ausgesetzt sind, von Gebäudeteilen, Beschichtungen auf (Groß-)Fahrzeugen und Flugzeugen und industriellen Anwendungen, Eisenbahnen, Nutzfahrzeuge im landwirtschaftlichen und Baubereich, insbesondere sogenannte ACE (agricultural, construction and earthmoving equipment), Windenergieanlagen, Dekolackierungen, Brücken, Gebäuden, Strommasten, Tanks, Containern, Pipelines, Kraftwerken, chemischen Anlagen, Schiffen, Kränen, Pfählen, Spundwänden, Armaturen, Rohren, Fittings, Flanschen, Kupplungen, Hallen, Dächern und Baustahl, Möbeln, Fenstern, Türen, Parkett, Papier, Karton, Can-Coating und Coil-Coating, für Bodenbeläge, wie bei Parkdecks oder in Krankenhäusern und insbesondere in Automobillacken als OEM und refinish-Anwendung. Bevorzugt sind Automobil und Industrieanwendungen, z.B. ACE.

Insbesondere werden die erfindungsgemäßen Beschichtungsmassen als Klarlack, Basislack, Decklack, Primer oder Füller eingesetzt.

Die erfindungsgemäßen Beschichtungsmassen weisen eine schnelle Trocknung und Pendelhärteentwicklung, hohe Flexibilität, eine hohe Kratzfestigkeit, insbesondere einen hohen reflow, gute Chemikalienbeständigkeit, gute Bewitterungsstabilität und gute Korrosionsschutzeigenschaften auf. Die Gelierzeiten der Beschichtungsmassen bei gleicher Katalyse sind länger als in den Reinacrylatsystemen, so dass dies Spielraum für eine zusätzliche Katalyse erlaubt, und damit eine schnellere Härtung und weitere Verkürzung der Trocknungseigenschaften. Die Haftung erfindungsgemäßer Beschichtungsmassen gegenüber Referenzen mit nur Acrylat weist im Allgemeinen Vorteile auf. Haftung und Korrosionsschutz spielen beispielsweise bei Direct To Metal (DTM) Applikationen und in Primern eine wichtige Rolle, und machen die erfindungsgemäßen Beschichtungsmassen dafür besonders geeignet.

### Einsatzstoffe der Beispiele:

- Hexahydrophthalsäureanhydrid: Fa. Aldrich. Smp. 33 °C. Wird vor dem Einsatz im Ofen aufgeschmolzen
- Cyclohexan-1,4-dicarbonsäure: Fa. Aldrich. Feststoff, Schmelzpunkt 164-167°C
- 2-Butyl-2-ethyl-1,3-propandiol: Fa. TCI (Tokyo Chemical Industry). Schmelzpunkt 43°C, wird vor dem Einsatz im Wasserbad aufgeschmolzen
- Adipinsäuredimethylester: Aldrich. Flüssig
- Sebacinsäure: Merck. Feststoff, Schmelzpunkt 131-134°C
- Trimethylolpropan: Aldrich. Weiße Schuppen, Schmelzpunkt 56-58°C
- Di-Trimethylolpropan: Aldrich. Feststoff, Schmelzpunkt 108-111 °C
- Neopentylglykol: Feststoff, Smp. 127 °C
- Joncryl® 507:: Polyacrylatol, OH-Zahl 140 mg KOH/g, Säurezahl 7 mg KOH/g, 80 % Feststoffgehalt in Butylacetat; BASF SE, Ludwigshafen
- Joncryl® 592:: Polyacrylatol, OH-Zahl 147 mg KOH/g, 74 % Feststoffgehalt in Butylacetat; BASF SE, Ludwigshafen
- Joncryl® 922:: Polyacrylatol, OH-Zahl 140 mg KOH/g, Säurezahl 7, 80 % Feststoffgehalt in Butylacetat; BASF SE, Ludwigshafen
- Joncryl® 909:: Polyacrylatol, OH-Zahl 112 mg KOH/g, 68 % Feststoffgehalt in Butylacetat; BASF SE, Ludwigshafen
- Joncryl® 910:: Polyacrylatol, OH-Zahl 140 mg KOH/g, 71 % Feststoffgehalt in Methylamylketon; BASF SE, Ludwigshafen
- Joncryl® 934:: Polyacrylatol, OH-Zahl 70 mg KOH/g, 77 % Feststoffgehalt in Butylacetat; BASF SE, Ludwigshafen
- Macrynal® SM 510n:: Polyacrylatol, OH-Zahl, 150, Säurezahl 7 mg KOH/g, Feststoffgehalt 60 %, Allnex
- Basonat® HI 100:: Isocyanuratgruppenhaltiges Polyisocyanat auf Basis von Hexamethylendiisocyanat mit einem NCO-Gehalt gemäß DIN EN ISO 11909 von 21,5 - 22,5%, BASF SE, Ludwigshafen
- Basonat® HI 2000:: Isocyanuratgruppenhaltiges Polyisocyanat auf Basis von Hexamethylendiisocyanat mit einem NCO-Gehalt gemäß DIN EN ISO 11909 von 22,5 - 23,5%, BASF SE, Ludwigshafen
- Basonat® HB 175 MP/X:: Biuretgruppenhaltiges Polyisocyanat auf Basis von Hexamethylendiisocyanat mit einem NCO-Gehalt gemäß DIN EN ISO 11909 von 16-17%, BASF SE, Ludwigshafen
- TBOT:: Tetrabutylorthotitanat, Sigma Aldrich
- DBTL: Dibutylzinndilaurat, Katalysator, Aldrich
- TIB Kat® 718: Bismut-neodecanoat-basiertes Katalysatorgemisch, TIB Chemicals
- Borchi® Kat 22: Zink-bis-(2-ethyl-hexanoat), basischer Katalysator, 100%, OMG Borchers
- PC/ABS: Polycarbonat/Acrylnitril-Butadien-Styrol-Kopolymerisat Bayblend® T 65, Bayer MaterialScience
- PP/EPDM: Sabic® pp 95619 + 20MBT 10000:: Polypropylen/Ethylen-Propylen-Dien-Kautschuk, Fa. Sabic (Nicht beflammt; ohne chloriertes Polyolefine im Lack)
- MSSP Yellow 1995:: Pigmentpaste bestehend aus:
60,0 % Bayferrox® Yellow 3920 Fa. Bayer MaterialScience
23,2 % Laropal® A81-Lösung, 63,5% in Arcosolv® MPA (LyondeIIBaseII), BASF SE
10,6 % MPA
5,9 % EFKA® 4330, BASF SE
0,3 % Aerosil® 200, Fa. Evonik
Pigmentkonzentration: 60%. Festkörper: 78,8%. Dichte: 1,82 g/cm³
- MSSP White 0022:: Pigmentpaste bestehend aus:
68,0% Kronos® 2360. Fa. Kronos
21,3% Laropal® A81-Lösung, 63,5% in Arcosolv® MPA (LyondeIIBaseII). BASF SE
6,7% MPA
3,5% EFKA® 4330, BASF SE
0,5% Aerosil® 200. Fa. Evonik
Pigmentkonzentration: 68%. Festkörper: 82%
- Bayferrox® Yellow 3920: Mikronisiertes Gelbpigment (Synthetisches Eisenhydroxid alpha-FeOOH). Pulver. Fa. Lanxess
- Laropal® A81:: Aldehyd-Harz, BASF SE. Erweichungspunkt (DIN 53180) 80-95°C. Hydroxylzahl (ISO 4629) ca. 40 mg KOH/g. Glasübergangstemperatur Tg (DSC) ca. 57 °C
- Ti Pure® R 960: Rutilpigment, Titandioxid für Coatings, Fa. DuPont
- Kronos® 2360: Rutilpigment. TiO2-Gehalt (DIN EN ISO 591) 92,0 %. CAS-Nr. 13463-67-7. Fa. Kronos
- EFKA® PU 4063: Netz- und Dispergiermittel. Modifiziertes Polyurethan Polymer. Festkörper 45%, Amin-Zahl: 10. BASF SE
- EFKA® SL 3288: Benetzungsmittel. Organisch modifiziertes Polysiloxan. Festkörper 100%. BASF SE
- EFKA® PX 4330: Dispergiermittel. Acrylatblockkopolymer. Festkörper 70%. Amin-Zahl: 28. BASF SE
- Aerosil® 200: Hydrophile pyrogene Kieselsäure mit einer spezifischen Oberfläche (BET) von 200 m²/g. Mittlere Teilchengröße 12 nm. Fa. Evonik Industries

Die Bestimmung der Säurezahl; Hydroxylzahl und Viskosität erfolgt wie weiter oben beschrieben.

Die Bestimmung der Molmassen und Polydispersitäten erfolgt durch Gelpermeationschromatographie mit TÜV-zertifizierten PMMA-Standards von PSS (Polymer Standards Service; DIN EN ISO 9001:2000, Zertifikat: 01 100 84065.). Diese Standards sind nach den Anforderungen von DIN 55672 und ISO/EN 13885 charakterisiert.
Die GPC erfolgt mit:
Gerät: PSS Agilent Technologies 1260 Infinity
   - Säulen:: 1x PLGel Mixed E Guard (Vorsäule), Länge 5 cm, Durchmesser 0,75 cm
   1x PLGel Mixed E, Länge 30 cm, Durchmesser 0,75 cm
   1x PLGel Resipore, Länge 30 cm, Durchmesser 0,75 cm
Lösungsmittel: THF
Flussrate: 1 mL/min
Injektionsvolumen: 50 µL
Konzentration: 1 g/L
Temperatur: Raumtemperatur (20 °C)

Der Nicht-flüchtige Anteil (NfA) wurde nach thermo-gravimetrischem Prinzip mithilfe eines Moisture Analyzer HB43-S der Firma Mettler Toledo bestimmt. Dazu wurden etwa 2 g der Probe in eine Aluminium-Probenschale mit einem Durchmesser von 90 mm (HA-D90) eingewogen und bis zur Gewichtskonstanz auf 150 °C aufgeheizt.

### Synthesebeispiele:

In Laborversuchen wurden Trimethylolpropan und Neopentylglykol im Reaktor als Feststoff vorgelegt. Hexahydrophthalsäureanhydrid und 2-Butyl-2-ethyl-1,3-propandiol wurden im aufgeschmolzenen Zustand zugegeben

### Beispiel B1a:

Hexahydrophthalsäureanhydrid / Trimethylolpropan = 1,0:1,0 (ohne Katalysator)
In einem Vierhalskolben mit Wasserauskreiser wurden Trimethylolpropan (930,7 g) und Hexahydrophthalsäureanhydrid (1069,3 g) in Stickstoffatmosphäre bei Raumtemperatur vorgelegt, vollständig aufgeschmolzen und unter Rühren stufenweise auf 160-180 °C erhitzt. Nach einer Reaktionszeit von ca. 5 h und nach Erreichen einer Säurezahl von 80 mg KOH/g (Umsatz 80 %) wurde auf 120 °C abgekühlt, 814,4 g Butylacetat zugegeben und weiter abgekühlt.

### Beispiel B1b:

Hexahydrophthalsäureanhydrid / Trimethylolpropan = 1,0:1,0 ohne Katalysator
In einem 250 L Rührkessel mit Wasserauskreiser wurden Hexahydrophthalsäureanhydrid (53,5 kg, bei 60 °C aufgeschmolzen und eingefüllt) und Trimethylolpropan (46,5 kg, bei 80 °C aufgeschmolzen und eingefüllt) in Stickstoffatmosphäre vorgelegt, vollständig aufgeschmolzen und unter Rühren stufenweise auf 160-180 °C erhitzt. Nach einer Reaktionszeit von ca. 5 h und nach Erreichen einer Säurezahl von 85 mg KOH/g (Umsatz 79 %) wurde auf 100 °C abgekühlt, 40,7 kg Butylacetat zugegeben und weiter abgekühlt.

### Beispiel B1c:

Hexahydrophthalsäureanhydrid / Trimethylolpropan = 1,0:1,0 ohne Katalysator
In Analogie zu Beispiel B1a wurde nach Erreichen einer Säurezahl von 74 mg KOH/g (Umsatz 82 %) auf 120 °C abgekühlt, 813,5 g Butylacetat zugegeben und weiter abgekühlt.

Die Beispiele B2a bis B2d sind nicht erfindungsgemäß.

### Beispiel B2a:

Hexahydrophthalsäureanhydrid / Trimethylolpropan / Adipinsäuredimethylester = 1,0:1,5:0,5 mit Tetrabutylorthotitanat als Katalysator
In einem Vierhalskolben mit Wasserauskreiser wurden Trimethylolpropan (909,6 g), Hexahydrophthalsäureanhydrid (696,7 g) in Stickstoffatmosphäre vorgelegt, erhitzt, bei 80 °C Tetrabutylorthotitanat (0,6 g) zugegeben und unter Rühren auf 160-180 °C erhitzt. Nach einer Reaktionszeit von ca. 12 h und Erreichen einer Säurezahl von 38 mg KOH/g wurde bei 140 °C Adipinsäuredimethylester (393,6 g) zugegeben. Nach weiteren 9 h bei 180 °C und einer erreichten Säurezahl von 21 mg KOH/g wurde auf 120 °C abgekühlt, 596,6 g Butylacetat zugegeben und weiter abgekühlt.

### Beispiel B2b:

Hexahydrophthalsäureanhydrid / Trimethylolpropan / Adipinsäuredimethylester = 1,0:1,5 :0,5 mit Dibutylzinndilaurat als Katalysator
bei 60 °C aufgeschmolzen und eingefüllt
In einem 250 L Rührkessel wurden Hexahydrophthalsäureanhydrid (34,8 kg; bei 60 °C aufgeschmolzen und eingefüllt), Trimethylolpropan (45,5 kg; bei 80 °C aufgeschmolzen und eingefüllt), und Dibutylzinndilaurat (0,03 kg) in Stickstoffatmosphäre vorgelegt und unter Rühren auf 160-180 °C erhitzt. Nach einer Reaktionszeit von 12 h und Erreichen einer Säurezahl von 38 mg KOH/g wurde bei 120 °C Adipinsäuredimethylester (19,7 kg) zugegeben. Nach weiteren 10 h bei 180 °C und einer erreichten Säurezahl von 21 mg KOH/g wurde auf 100 °C abgekühlt, 30,9 kg Butylacetat zugegeben und weiter abgekühlt.

### Beispiel B2c:

Hexahydrophthalsäureanhydrid / Trimethylolpropan / Adipinsäuredimethylester = 1,0:1,5 :0,5 mit Tetrabutylorthotitanat als Katalysator
In einem Vierhalskolben mit Wasserauskreiser wurden Trimethylolpropan (778,0 g), Hexahydrophthalsäureanhydrid (596,0 g) und Tetrabutylorthotitanat (0,5 g) in Stickstoffatmosphäre vorgelegt und unter Rühren auf 160-180 °C erhitzt. Nach einer Reaktionszeit von 10 h und Erreichen einer Säurezahl von 42 mg KOH/g wurde bei 140 °C Adipinsäuredimethylester (337,0 g) zugegeben. Nach weiteren 10 h bei 180 °C und einer erreichten Säurezahl von 22 mg KOH/g wurde auf 120 °C abgekühlt, 511,0 g Butylacetat zugegeben und weiter abgekühlt.

### Beispiel B2d:

Hexahydrophthalsäureanhydrid / Trimethylolpropan / Adipinsäuredimethylester = 1,0:1,5 :0,5 mit Tetrabutylorthotitanat als Katalysator
In einem Vierhalskolben mit Wasserauskreiser wurden Trimethylolpropan (909,6 g), Hexahydrophthalsäureanhydrid (696,7 g) und Tetrabutylorthotitanat (0,6 g) in Stickstoffatmosphäre vorgelegt und unter Rühren auf 160-180 °C erhitzt. Nach einer Reaktionszeit von 8,5 h und Erreichen einer Säurezahl von 38 mg KOH/g wurde bei 140 °C Adipinsäuredimethylester (393,6 g) zugegeben. Nach weiteren 10 h bei 180 °C und einer erreichten Säurezahl von 21 mg KOH/g wurde auf 120 °C abgekühlt, 596,8 g Butylacetat zugegeben und weiter abgekühlt.

### Beispiel B3a:

Hexahydrophthalsäureanhydrid / Trimethylolpropan = 1,2 : 1,0 ohne Katalysator
In einem Vierhalskolben mit Rückflusskühler und Wasserauskreiser wurden Trimethylolpropan (840,8 g) und Hexahydrophthalsäureanhydrid (1159,2 g) in Stickstoffatmosphäre vorgelegt und unter Rühren auf 160-180 °C erhitzt. Nach einer Reaktionszeit von 5 h und nach Erreichen einer Säurezahl von 89 mg KOH/g (Umsatz 80 %) wurde auf 120 °C abgekühlt, 1018,2 g Butylacetat zugegeben und weiter abgekühlt.

### Beispiel B3b:

Hexahydrophthalsäureanhydrid / Trimethylolpropan = 1,2:1,0 ohne Katalysator
In einem 250 L Rührkessel wurden Hexahydrophthalsäureanhydrid (58,0 kg; bei 60 °C aufgeschmolzen und eingefüllt) und Trimethylolpropan (42,0 kg; bei 80 °C aufgeschmolzen und eingefüllt) in Stickstoffatmosphäre vorgelegt und unter Rühren auf 160-180 °C erhitzt. Nach einer Reaktionszeit von 7 h und nach Erreichen einer Säurezahl von 93 mg KOH/g (Umsatz 79 %) wurde auf 100 °C abgekühlt, 52,1 kg Butylacetat zugegeben und weiter abgekühlt

### Beispiel B3c:

Hexahydrophthalsäureanhydrid / Trimethylolpropan = 1,2:1,0 ohne Katalysator
In einem Vierhalskolben mit Rückflusskühler und Wasserauskreiser wurden Trimethylolpropan (840,8 g) und Hexahydrophthalsäureanhydrid (1159,2 g) in Stickstoffatmosphäre vorgelegt und unter Rühren auf 160-180 °C erhitzt. Nach einer Reaktionszeit von 5 h und nach Erreichen einer Säurezahl von 83 mg KOH/g (Umsatz 81 %) wurde auf 120 °C abgekühlt, 1017,1 g Butylacetat zugegeben und weiter abgekühlt.

### Beispiel B4a:

Hexahydrophthalsäureanhydrid / Trimethylolpropan / Neopentylglykol = 1,0:0,5:0,5 ohne Katalysator
In einem Vierhalskolben mit Rückflusskühler und Wasserauskreiser wurden Trimethylolpropan (490,9 g), Neopentylglykol (381,0 g) und Hexahydrophthalsäureanhydrid (1128,1 g) in Stickstoffatmosphäre vorgelegt und unter Rühren auf 160-180 °C erhitzt. Nach einer Reaktionszeit von 5 h und nach Erreichen einer Säurezahl von 85 mg KOH/g (Umsatz 80 %) wurde auf 120 °C abgekühlt, 631,3 g Butylacetat zugegeben und weiter abgekühlt.

### Beispiel B4b:

Hexahydrophthalsäureanhydrid / Trimethylolpropan / Neopentylglykol 1,0:0,5:0,5 ohne Katalysator
In einem 250 L Rührkessel wurden Hexahydrophthalsäureanhydrid (56,4 kg; bei 60 °C aufgeschmolzen und eingefüllt), Neopentylglykol (19,1 kg) und Trimethylolpropan (24,5 kg; bei 80°C aufgeschmolzen und eingefüllt) in Stickstoffatmosphäre vorgelegt und unter Rühren auf 160-180 °C erhitzt. Nach einer Reaktionszeit von ca. 5 h und Erreichen einer Säurezahl von 91 mg KOH/g (Umsatz 79 %) wurde auf 100 °C abgekühlt, 31,6 kg Butylacetat zugegeben und weiter abgekühlt.

### Beispiel B5:

Hexahydrophthalsäureanhydrid / Trimethylolpropan /2-Butyl-2-ethyl-1,3-propandiol = 1,2:0,8:0,2 In einem Vierhalskolben mit Rückflusskühler und Wasserauskreiser wurden Trimethylolpropan (330,9 g), aufgeschmolzenes 2-Butyl-2-Ethyl-1,3-Propandiol (98,8 g) und Hexahydrophthalsäureanhydrid (570,3 g) in Stickstoffatmosphäre vorgelegt und unter Rühren auf 160-180 °C erhitzt. Nach einer Reaktionszeit von 5 h und nach Erreichen einer Säurezahl von 98 mg KOH/g (Umsatz 78 %) wurde auf 120 °C abgekühlt, 407,0 g Butylacetat zugegeben und weiter abgekühlt.

### Beispiel B6:

Hexahydrophthalsäureanhydrid / Adipinsäure / Trimethylolpropan / 2-Butyl-2-Ethyl-1,3-Propan-diol = 1,2:0,1:0,85:0,3
In einem Vierhalskolben mit Rückflusskühler und Wasserauskreiser wurden Trimethylolpropan (315,3 g), aufgeschmolzenes 2-Butyl-2-Ethyl-1,3-Propandiol (132,9 g), Adipinsäure (40,4 g) und Hexahydrophthalsäureanhydrid (511,4 g) in Stickstoffatmosphäre vorgelegt und unter Rühren auf 160-180 °C erhitzt. Nach einer Reaktionszeit von 5 h und nach Erreichen einer Säurezahl von 90 mg KOH/g (Umsatz 79 %) wurde auf 120 °C abgekühlt, 404,7 g Butylacetat zugegeben und weiter abgekühlt.

### Beispiel B7:

Hexahydrophthalsäureanhydrid / Trimethylolpropan = 1,1:1,0
In einem Vierhalskolben mit Rückflusskühler und Wasserauskreiser wurden Trimethylolpropan (530,1 g) und Hexahydrophthalsäureanhydrid (669,9 g) in Stickstoffatmosphäre vorgelegt und unter Rühren auf 160-180 °C erhitzt. Nach einer Reaktionszeit von 5 h und nach Erreichen einer Säurezahl von 77 mg KOH/g (Umsatz 82 %) wurde auf 120 °C abgekühlt, 283,3 g Butylacetat zugegeben und weiter abgekühlt.

### Beispiel B8:

Hexahydrophthalsäureanhydrid / Trimethylolpropan = 1,0:1,0 (mit niedrigerer Säurezahl)
In einem Vierhalskolben mit Wasserauskreiser wurden Trimethylolpropan (930,7 g) und Hexahydrophthalsäureanhydrid (1069,3 g) in Stickstoffatmosphäre vorgelegt und unter Rühren auf 160 °C erhitzt. Diese Temperatur wurde ca. 30 min gehalten, danach auf 180 °C hochgeheizt. Nach einer Reaktionszeit von ca. 10 h und nach Erreichen einer Säurezahl von 54 mg KOH/g wurde auf 120 °C abgekühlt und das Produkt mit Butylacetat auf 75% verdünnt und weiter abgekühlt.

### Beispiel B9:

Hexahydrophthalsäureanhydrid / Trimethylolpropan = 1,0:1,0 (mit niedrigerer Säurezahl)
In einem Vierhalskolben mit Wasserauskreiser wurden Trimethylolpropan (465,3 g) und Hexahydrophthalsäureanhydrid (534,7g) in Stickstoffatmosphäre vorgelegt und unter Rühren auf 160 °C erhitzt. Diese Temperatur wurde ca. 30 min gehalten, danach auf 180 °C hochgeheizt. Nach einer Reaktionszeit von ca. 8 h und nach Erreichen einer Säurezahl von 46 mg KOH/g wurde auf 120 °C abgekühlt und das Produkt mit 288,4 g Butylacetat auf 70% verdünnt und weiter abgekühlt.

### Beispiel B10:

Hexahydrophthalsäureanhydrid / Trimethylolpropan / 2-Butyl-2-Ethyl-1,3-Propandiol = 1,0:0,5:0,5
In einem Vierhalskolben mit Wasserauskreiser wurden Trimethylolpropan (22,6 g), 2-Butyl-2-ethyl-1,3-propandiol (265,90g) und Hexahydrophthalsäureanhydrid (511,5 g) in Stickstoffatmosphäre vorgelegt und unter Rühren auf 160 °C erhitzt. Diese Temperatur wurde ca. 30 min gehalten, danach auf 180 °C hoch geheizt. Nach einer Reaktionszeit von ca. 4 h und nach Erreichen einer Säurezahl von 86 mg KOH/g wurde auf 120 °C abgekühlt und das Produkt mit 229,3 g Butylacetat auf 75% verdünnt und weiter abgekühlt.

### Beispiel B11:

Hexahydrophthalsäureanhydrid / Trimethylolpropan / Neopentylglykol = 2:1,67:1
In einem Vierhalskolben mit Wasserauskreiser wurden Trimethylolpropan (352,0 g), Neopentylglykol (163,6g) und Hexahydrophthalsäureanhydrid (484,4g) in Stickstoffatmosphäre vorgelegt und unter Rühren auf 160 °C erhitzt. Diese Temperatur wurde ca. 30 min gehalten, danach auf 180 °C hochgeheizt. Nach einer Reaktionszeit von ca. 9 h und nach Erreichen einer Säurezahl von 41 mg KOH/g wurde auf 160 °C abgekühlt und für 3 1/2 Stunden Vakuum von 200 mbar angelegt. Danach betrug die Säurezahl 35 mg KOH/g. Das Produkt wurde auf 120°C abgekühlt und mit 284,64 g Butylacetat auf 70% verdünnt und weiter abgekühlt.

### Beispiel B12:

Hexahydrophthalsäureanhydrid / Trimethylolpropan / Neopentylglykol = 2:1:1,27
In einem Vierhalskolben mit Wasserauskreiser wurden Trimethylolpropan (267,6 g), Neopentylglykol (219,9g) und Hexahydrophthalsäureanhydrid (512,5g) in Stickstoffatmosphäre vorgelegt und unter Rühren auf 160 °C erhitzt. Diese Temperatur wurde ca. 30 min gehalten, danach auf 180 °C hochgeheizt. Nach einer Reaktionszeit von ca. 2 1/2 h und nach Erreichen einer Säurezahl von 62 mg KOH/g wurde auf 160 °C abgekühlt und für 1 Stunde Vakuum von 200 mbar angelegt. Danach betrug die Säurezahl 42 mg KOH/g. Das Vakuum wurde weggenommen, Produkt wurde auf 120°C abgekühlt und mit 285,3 g Butylacetat auf 70% verdünnt und weiter abgekühlt. Unter Vakuum hatte sich etwas Sublimat im Kühler gebildet.

### Vergleichsbeispiele:

V1: Hexahydrophthalsäureanhydrid / Sebacinsäure / Di-Trimethylolpropan / Trimethylolpropan = 1,0:1,0:0,6:1,4 mit Dibutylzinndilaurat als Katalysator analog des Beispiels 3 (Anwendungsbeispiel 1) der WO2010/076114
In einem Vierhalskolben mit Wasserauskreiser wurden Hexahydrophthalsäureanhydrid (222,0 g), Sebacinsäure (291,2 g), Di-Trimethylolpropan (216,3 g), Trimethylolpropan (270,5 g) und Dibutylzinndilaurat (0,2 g) in Stickstoffatmosphäre vorgelegt und unter Rühren auf 160-180 °C erhitzt. Nach einer Reaktionszeit von ca. 3,5 h und nach Erreichen einer Säurezahl von 61 mg KOH/g (Umsatz 82 %) wurde auf 120 °C abgekühlt, 312,1 g Butylacetat zugegeben und weiter abgekühlt.
Die technischen Daten stimmen bei gleicher Rohstoffzusammensetzung ungefähr mit denen des Beispiels 3 (Anwendungsbeispiel 1) der WO2010/076114 überein.

V2: Hexahydrophthalsäureanhydrid / Cyclohexan-1,4-dicarbonsäure / Trimethylolpropan = 1,0:0,25:1,25 mit Dibutylzinndilaurat als Katalysator analog des Beispiels 7 der WO2010/076114

In einem Vierhalskolben mit Wasserauskreiser wurden Hexahydrophthalsäureanhydrid (422,4 g), Cyclohexan-1,4-dicarbonsäure (118,0 g), Trimethylolpropan (459,6 g) und Dibutylzinndilaurat (0,33 g) in Stickstoffatmosphäre vorgelegt und unter Rühren auf 160-180°C erhitzt. Nach einer Reaktionszeit von ca. 8 h und nach Erreichen einer Säurezahl von 62 mg KOH/g (Umsatz 85 %) wurde auf 120 °C abgekühlt, 312,4 g Butylacetat zugegeben und weiter abgekühlt.
Die technischen Daten stimmen bei gleicher Rohstoffzusammensetzung ungefähr mit denen des Beispiels 7 der WO2010/076114 überein.

### V3: Sebacinsäure / Di-Trimethylolpropan = 1,0:1,0 mit Dibutylzinndilaurat als Katalysator analog des Beispiels 6 der WO2010/076114

In einem Vierhalskolben mit Wasserauskreiser wurden Sebacinsäure (446,9 g), Di-Trimethylolpropan (553,1 g) und Dibutylzinndilaurat (0,21 g) in Stickstoffatmosphäre vorgelegt und unter Rühren auf 160-180 °C erhitzt. Nach einer Reaktionszeit von ca. 1,5 h und nach Erreichen einer Säurezahl von 52 mg KOH/g (Umsatz 80 %) wurde auf 120 °C abgekühlt, 233,5 g Butylacetat zugegeben und weiter abgekühlt.
Die technischen Daten stimmen bei gleicher Rohstoffzusammensetzung ungefähr mit denen des Beispiels der WO2010/076114 überein.
- V4:: Polyester des Beispiels 1 (Anwendungsbsp. 3) der WO2010/076114
Hexahydrophthalsäureanhydrid: Sebacinsäure : Di-Trimethylolpropan : Trimethylolpropan 1:1:0,6:1,4, DBTL-Katalyse.
- V5:: Polyester des Beispiels 2 (Anwendungsbsp. 2) der WO2010/076114
Hexahydrophthalsäureanhydrid: Sebacinsäure : Di-Trimethylolpropan : Trimethylolpropan 1:1:1:1, DBTL-Katalyse.
- V6:: Polyester des Beispiels 6 (Anwendungsbsp. 8) der WO2010/076114
Sebacinsäure : Di-Trimethylolpropan 1:1, DBTL-Katalyse.
- V7:: Polyester des Beispiels 7 (Anwendungsbsp. 4) der WO2010/076114
Cyclohexan-1,4-dicarbonsäure : Hexahydrophthalsäureanhydrid : Trimethylolpropan 0,8 : 0,2 :1,0, DBTL-Katalyse.

Die Beispiele B und Vergleichsbeispiele V sind in Tabelle 1 zusammengefasst. Beispiele B2a bis B2d sind dabei nicht erfindungsgemäß.

**Tabelle 1: Polyesterpolyole B und Vergleichsbeispiele V**

| | OHZ | SZ | Mn | Mw | PDI | Tg | Kat. | Visko | NfA |
|---|---|---|---|---|---|---|---|---|---|
| | mg KOH/g | | D | D | | °C | | mPa*s | % |
| B1a | 269 | 80 | 1058 | 1566 | 1,5 | 25 | keiner | 6095 | 70,0 |
| B1b | 275 | 85 | 1029 | 1466 | 1,4 | 19 | keiner | 4000 | 68,9 |
| B1c | 257 | 74 | 1133 | 1780 | 1,6 | 24 | keiner | 4010 | 70,0 |
| B2a | 255 | 21 | 1314 | 4137 | 3,1 | -4 | TBOT | 3180 | 80,0 |
| B2b | 257 | 22 | 1514 | 3220 | 2,1 | -5 | DBTL | 2450 | 75,0 |
| B2c | 250 | 22 | 1798 | 5339 | 3,0 | 4 | TBOT | 4830 | 75,0 |
| B2d | 251 | 21 | 1719 | 4610 | 2,7 | 2 | TBOT | 14850 | 75,0 |
| B3a | 192 | 89 | 1424 | 2955 | 2,1 | 38 | keiner | 3000 | 65,0 |
| B3b | 180 | 93 | 1212 | 2560 | 2,1 | 38 | keiner | 2350 | 65,0 |
| B3c | 188 | 83 | 1483 | 3310 | 2,2 | 47 | keiner | 4010 | 65,0 |
| B4a | 191 | 85 | 1032 | 1438 | 1,4 | 17 | keiner | 4540 | 75,0 |
| B4b | 186 | 91 | 992 | 1336 | 1,3 | 14 | keiner | 4000 | 73,5 |
| B5 | 158 | 98 | 1255 | 2112 | 1,7 | 35 | keiner | 4720 | 70 |
| B6 | 180 | 90 | 1211 | 2014 | 1,7 | 24 | keiner | 2370 | 70 |
| B7 | 219 | 77 | 1176 | 2701 | 2,3 | 41 | keiner | 3110 | 80 |
| B8 | 254 | 49 | 1568 | 3709 | 2,4 | 36 | keiner | v | 75 |
| B9 | 239 | 44 | 1764 | 5310 | 3,0 | | keiner | 25040 | 73,7 |
| B10 | 162 | 83 | 1030 | 1433 | 1,4 | 12 | keiner | 21500 | 75 |
| B11 | 271 | 33 | 1136 | 1589 | 1,4 | 20 | keiner | 5220 | 70 |
| B12 | 198 | 42 | 1212 | 1886 | 1,6 | 23 | keiner | 7530 | 70 |
| V1 | 289 | 42 | | | | -7 | DBTL | 12200 | 75 |
| V2 | 264 | 62 | | | | 28 | DBTL | 250000 | 75 |
| V3 | 323 | 52 | | | | -19 | DBTL | 9150 | 80 |
| V4 | 298 | 63 | 810 | 4990 | 6,2 | -5 | DBTL | | 81 |
| V5 | 290 | 63 | 870 | 5860 | 6,7 | -5 | DBTL | | 81 |
| V6 | 294 | 66 | 1960 | 6630 | 3,4 | -21 | DBTL | | 81 |
| V7 | 281 | 53 | 720 | 4440 | 6,2 | 27 | DBTL | | 77 |

| | | | | | | | | | |
|---|---|---|---|---|---|---|---|---|---|
| PDI: Polydispersität; SZ: Säurezahl; OHZ: OH-Zahl; Visk: Viskosität; Kat.: Katalysator NfA: Nicht-flüchtiger Anteil | | | | | | | | | |

### Beschichtungsmassen (Lacke) und Anwendungstechnische Vergleichsversuche:

Es wurden erfindungsgemäße Beschichtungsmassen L, nicht erfindungsgemäße Beschichtungsmassen L' (auf Basis der Polyesterpolyole B2a-d) und Referenzbeschichtungsmassen R hergestellt.

Beschichtungen erfolgten mit Kastenrakel mit einer Trockenschichtdicke von 35-45 µm. Die Nassschichtdicken waren abhängig vom Feststoffgehalt des Systems, z.B. 150 µm bei Joncryl® 507 und Joncryl® 922 basierten Systemen, 180 µm bei Macrynal® SM 510n basierten Systemen.

Lackfilme wurden zur Bestimmung der Pendelhärteentwicklung und dem Aceton-Doppelhubtest bei 23 ± 2 °C und 50 ± 10 % Luftfeuchte konditioniert.
Die Härtung kann auch bei höheren Temperaturen erfolgen. Dazu wurden die Lacke für 10-15 Minuten bei Raumtemperatur abgelüftet. Eine Temperung erfolgte i.A. für 15 h bei 60 °C, (in explizit benannten Einzelfällen für nur 30 Minuten bei 60 °C), für 30 Minuten bei 80 oder 130 °C, oder für 20 Minuten bei 140 °C.
Nach der Härtung erfolgte eine Konditionierung bei 23 ± 2 °C und 50 ± 10 % Luftfeuchte, soweit nicht explizit anders benannt für 24 Stunden. Bei der Bestimmung der Chemikalienbeständigkeit nach der Härtung bei 140 °C, wenn nicht explizit anders benannt, wurde fünf 5 Tage konditioniert.

Die Auslaufzeit wurde auf Basis ISO 2431 und EN 535 mit einem DIN 4-Becher bestimmt, und auf ca. 20 Sekunden bei RT eingestellt.

Zur Bestimmung der Gelzeit wurde der flüssige Lack direkt nach dem Ansetzen in ein Reagenzglas (20 mm x 180 mm), welches am unteren Ende einen Kupferaufkleber (ca. 5 mm x 5 mm) aufweist, gefüllt. Das Reagenzglas war dabei zu mindestens 60 % gefüllt. Das Reagenzglas wurde in einen Slot des Gelzeitgerätes gestellt. Dabei wurde ein Kontakt zwischen Kupferaufkleber und Gelzeitgerät geschlossen. Eine Metallspeiche mit gebogener Spitze wurde bei 22 cm Länge in den Speichenhalter eingespannt. Dann wurde der Speichenhalter ins Gerät eingesetzt. Dabei tauchte die Speiche in den flüssigen Lack ein. Die Öffnung des Reagenzglases wurde durch einen gelochten Deckel verschlossen. Die Speiche wurde durch das Loch im Deckel geführt. Bei Inbetriebnahme des Gerätes wurde ein Counter gestartet. Des Weiteren bewegte der Apparat die Speiche in der Probe nach oben und unten bis diese fest wurde bzw. gelierte. Beim darauf folgenden Anheben des Reagenzglases ging der Kontakt des Kupferaufklebers verloren und der Counter des Geräts wurde automatisch gestoppt. Die Messung erfolgte bei 23 ± 2 °C und 50 ± 10 % Luftfeuchte.

Es wurden die folgenden Eigenschaften getestet:

Staubtrockenzeit: Zur Bestimmung der Staubtrockenzeit wurde der Lack bei Raumtemperatur auf eine Glasplatte appliziert und die Lackoberfläche in Zeitabständen mit einem Wattebausch berührt. Der Lack gilt zu dem Zeitpunkt als staubtrocken, wenn keine Watte mehr an der Oberfläche haften bleibt. Die Messung erfolgte bei Umgebungstemperatur.

Sandtrockenzeit und Durchtrockenzeit: Zur Prüfung des Trocknungsverhaltens der Lacke wurde ein mit ca. 60-80 g Sand gefüllter, mit Rädern versehener Trichter mit konstanter Vorschubgeschwindigkeit von 1 cm/h über eine frisch mit Lack beschichtete Glasplatte gezogen. Nach Ende der Prüfungen wurde die Platte vorsichtig mit einem Pinsel von losem Sand befreit. Als Sandtrocknung bezeichnet man die Zeitspanne, zwischen Beginn der Prüfung bis zum letzten, dauerhaften Anhaften der Sandkörner. Die Durchtrocknung wurde ermittelt als die Zeit, in der die Räder des Trichters noch eine Spur im Lack hinterließen. Die Trocknung erfolgt bei 23 ± 2 °C und 50 ± 10 % Luftfeuchte. Die Messungen erfolgten bei 23 ± 2 °C und 50 ± 10 % Luftfeuchte.

Die Pendelhärte wurde nach König auf Glasplatten bestimmt (DIN EN ISO 1522). Angegeben ist die Dauer und Temperatur der Härtung der Beschichtung.

Die Endhärte der Raumtemperaturlagerung entspricht im hier angegebenen Verfahren der Pendelhärte nach 7 Tagen bei 23 ± 2 °C und 50 ± 10 % Luftfeuchte und Härtung über Nacht (ca. 15 h) bei 60 °C.

Die Pendelhärte wurde auch nach Härtung für 15 Stunden bei 60 °C, 30 Minuten bei 80 oder 130 °C mit jeweils Konditionierung für einen Tag bei 23 ± 2 °C und 50 ± 10 % Luftfeuchte bestimmt. Des Weiteren erfolgte sie auch nach 20 Minuten bei 140 °C und Konditionierung für einen Tag und fünf Tage bei 23 ± 2 °C und 50 ± 10 % Luftfeuchte.

Der Vernetzungsdichteaufbau wurde durch den Aceton-Doppelhubtest, basierend auf DIN EN 13523-11 und ASTM D5402-06, auf einem Tiefziehblech bestimmt. Diese vereinfachte Testmethode wurde ohne künstlichen Finger und ohne erweiterte Lösungsmittel durchgeführt.

Auf der planen, unbeschädigten Lackoberfläche wurden mit einem in Lösungsmittel (Aceton) getränkten und anschließend ausgedrückten Wattebausch mit der Hand mit leichtem Druck (ca. 1-2 Newton) Doppelhübe auf einer Strecke von 10-15 cm ausgeführt. Dabei darf nicht über die Lackränder hinaus gerieben werden, da sonst das Lösemittel den Lack unterwandert. Die Prüfung endete wenn Beschädigungen bis auf das Substrat sichtbar waren. Die Anzahl der Doppelhübe bis zur Beschädigung wurde notiert. Bei 100 Doppelhüben wurde die Prüfung beendet. Die Trocknung erfolgte bei Umgebungstemperatur.

Die Erichsen-Tiefung wurde nach DIN EN ISO 1520 auf einem Tiefziehblech ermittelt.

Der Gitterschnitt wurde nach DIN EN ISO 2409 auf einem Bonderblech ermittelt.

Zur Prüfung der Kratzfestigkeit mit reflow wurde 2,5x2,5 cm großes Scotch-Brite-Vlies (Scotch-brite®, 7448 Typ S ultrafine; 3M, Frankreich) mit doppelseitigem Klebeband auf einen 500 g Schlosserhammer aufgebracht. Der Hammer wurde mit zwei Fingern am Stilende gehalten und mit gleichmäßigen Doppelhüben ohne Verkanten und zusätzliche Druckaufbringung auf einer Linie über den gelagerten Lackfilm auf einem Bonderbleich vor- und zurückbewegt (Doppelhübe D-Hübe). Nach 10 Doppelhüben wurde der Abrieb mit dem Fingerrücken entfernt und der Glanz bei 20° und 60° quer zur Scheuerrichtung bestimmt. Danach wurden weitere 40 Doppelhübe gemacht, der Abrieb entfernt und der Glanz erneut vermessen. Somit erhielt man einen Glanzwert nach 10 und 50 Doppelhüben.
Dann wurde der Lack für 1 h bei 60°C getempert, mindestens 4 h bei 23 ± 2 °C und 50 ± 10 % Luftfeuchte konditioniert und anschließend der Glanz erneut bestimmt (reflow). In Einzelfällen betrug die Härtungszeit nur 30 Minuten bei 60 °C mit 4 Stunden Konditionierzeit. Die Konditionierzeit zwischen Lackhärtung und Kratztest betrug bei 140 °C-Härtung einen Tag und fünf Tage. Nach jeder Probe wurde das Vlies gewechselt.

Der Glanz des Lackes wurde mittels eines Mikro TRI-Gloss Messgerätes bestimmt.

Zur Bestimmung der Chemikalienbeständigkeit wurde ein lackiertes Tiefziehblech (Gradientenofenblech) 15 Stunden bei 60 °C, 30 Minuten bei 80 der 130 °C, oder 20 Minuten bei 140°C getempert. Anschließend wurde es für einen Tag bei 23 ± 2 °C und 50 ± 10 % Luftfeuchte konditioniert, im Fall einer Temperung bei 140 °C für fünf Tage. Danach wurden mit einer Eppendorf-Pipette pro Heizelement (30-75 °C) Tropfen der Testsubstanzen Schwefelsäure (1 %ig; 25 µl), Natronlauge (1 %ig; 25µl), Pankreatin (50 µl) und Baumharz (25 µl) aufgegeben. Bei den letzten zwei Agenzien wurde jedes zweite Heizelement übersprungen.
Anschließend wurde das Prüfblech in den Gradientenofen (Fa. BYK Gardner) gelegt und 30 Minuten bei 30-75 °C temperiert.
Nach Beendigung dieses Vorgangs wurde das Blech mit VE-Wasser von der Schwefelsäure und der Natronlauge gereinigt.
Anschließend wurde das Blech mit warmem Wasser und einem weichen Tuch vom anhaftenden Pankreatin gereinigt. Danach wurde das Baumharz mit einem weichen Lappen und Waschbenzin gründlich, jedoch schonend gereinigt. Das Blech wurde abschließend mit kaltem Wasser gründlich jedoch schonend abgewaschen und die restlichen Wassertropfen mit einem weichen Papiertuch entfernt. Nach 24 h Konditionierung bei 23 ± 2 °C und 50 ± 10 % Luftfeuchte erfolgte die Beurteilung. Es wurde die Temperatur notiert, bei welcher der erste Angriff auf die Beschichtung unter künstlichem Licht erkennbar ist.
Quelle des Baumharzes A und B:
Quelle A: Fa. Wörwag, Baumharzlösung DBL 5416 Nr.: 701014 [ohne weitere Kennzeichnung in den Beispielen]
Quelle B: Mischung 1:1 Pine needle oil (W290500-250G-K) und Gum rosin (60895-250G); beides bestellt bei Sigma-Aldrich

Die Haftung wurde gemäß folgender Kriterien bestimmt:
K 0: Der Lack haftet sehr gut und zeigt völlig glatte Ränder an den abgekratzten Stellen.
K 1: Der Lack haftet sehr gut, zeigt jedoch gezackte Ränder.
K 2: Der Lack haftet gut, lässt sich mit der ganzen Auflagefläche des Messers abkratzen, glatte Ränder.
K 3: Der Lack haftet gut, lässt sich mit der ganzen Auflagefläche des Messers abkratzen, gezackte Ränder.
K 4: Schlechter als K 3, Abplatzungen.
K 5: Ungenügende Haftung, Abplatzen des Anstriches.

Im Ablauftest auf Klarheit wurde eine Polyol-Mischung in Lösungsmittel oder ein flüssiger Lack auf einer quer gestellten Glasplatte mit einem steilen Winkel von 70 °C über 7 cm ablaufen lassen, so dass sich ein dünner Film bildet. Nach 30 Minuten wurde der applizierte Film auf Klarheit und Trübung geprüft. Noten:
- T0:: Klar, homogen
- T1:: Schwach trüb
- T2:: Trüb
- T3:: Stark trüb

### Versuchsreihe 1:

Vergleich der erfindungsgemäßen Polyesterole B1; B3, B4 mit dem nicht erfindungsgemäßen Polyesterol B2 und Vergleichsmustern, dem Polyacrylat ohne Polyester (R1) und dem Stand der Technik gemäß WO2010/076114 und zwar den dort erfindungsgemäßen Beispielen Polyester 1 (R2), Polyester 7 (R3) und Polyester 6 (R4) in einem System mit Joncryl® 507 / Basonat® HI 2000 mit gleichen Gelierzeiten.

**Tabelle 2: Zusammensetzung von Beschichtungsmassen und ihre anwendungstechnischen Ergebnisse. Die Härtung erfolgte bei Raumtemperatur, 15 Stunden bei 60 °C bzw. 20 Minuten bei 140 °C gefolgt von jeweils einem Tag Konditionierung bei 23 ± 2 °C und 50 ± 10 % Luftfeuchte. Bei den Chemikalienbeständigkeiten der 140 °C-Härtung wurde fünf Tage konditioniert**

| Menge [g]/Test | NfA | L1 | L2 | L2 | L'4 | R1 | R2 | R3 | R4 |
|---|---|---|---|---|---|---|---|---|---|
| Joncryl® 507 [g] | 80,0 % | 45,00 | 45,00 | 45,00 | 45,00 | 60,00 | 45,00 | 45,00 | 45,00 |
| Polyesterol B1b [g] | 68,9 % | 17,42 | | | | | | | |
| Polyesterol B3a [g] | 65,0 % | | 18,46 | | | | | | |
| Polyesterol B4b [g] | 73,5 % | | | 16,33 | | | | | |
| Polyesterol B2a [g] | 80,0 % | | | | 16,00 | | | | |
| Polyesterol V1 [g] | 75,0 % | | | | | | 16,00 | | |
| Polyesterol V2 [g] | 75,0 % | | | | | | | 16,00 | |
| Polyesterol V3 [g] | 80,0 % | | | | | | | | 15,00 |
| DBTL [g] | 1,0 % | 4,99 | 4,76 | 6,13 | 1,68 | 0,39 | 1,34 | 2,26 | 0,45 |
| Butylacetat [g] | | 31,0 | 30,0 | 28,0 | 32,5 | 30,5 | 37,5 | 37,0 | 38,5 |
| Basonat® HI 2000 [g] | 100 % | 27,15 | 23,91 | 23,67 | 26,37 | 21,87 | 27,69 | 26,72 | 29,02 |
| Auslaufzeit | s | 19,7 | 20,2 | 20,2 | 19,7 | 20,0 | 20,2 | 20,3 | 20,1 |
| Nicht flüchtiger Anteil | % | 59,9 | 58,9 | 60,2 | 61,2 | 62,0 | 59,4 | 58,9 | 60,2 |
| Aussehen | | klar | klar | klar | klar | klar | klar | klar | klar |
| Gelzeit | h:min | 7:41 | 7:27 | 7:54 | 7:11 | 7:35 | 7:37 | 8:03 | 8:00 |
| Staubtrocken | min | 125 | 95 | 100 | 200 | >480 | 335 | 195 | 360 |
| Sandtrocken | h | 3,25 | 3 | 3,25 | 4,75 | >24 | 4 | 4,5 | 3,75 |
| Durchtrocken | h | 8,25 | 7,5 | 8 | 10,75 | >24 | 7,75 | 9,5 | 7,25 |
| Pendelhärte 7 h RT | Schläge | 10 | 10 | 10 | 2 | - | 3 | 5 | 3 |
| Pendelhärte 24 h RT | Schläge | 74 | 68 | 58 | 33 | 2 | 40 | 60 | 22 |
| P.7d RT+15h60°C | Schläge | 129 | 128 | 112 | 126 | 110 | 124 | 137 | 123 |
| Acetontest 24 h RT | D-Hübe | 100 | 100 | 100 | 100 | 15 | 75 | 70 | 90 |
| Erichsen 60 °C | mm | 9 | 9 | 9 | 9 | 9 | 9 | 9 | 9 |
| Gitterschnitt 60 °C | Note | 0 | 0 | 0 | 0 | 0 | 0 | 0 | 0 |
| Glanz 60 °C | GU 20° | 93 | 92 | 93 | 93 | 92 | 92 | 92 | 92 |
| Kratztest 50 D-Hübe | GU 20° | 7 | 8 | 9 | 9 | 4 | 7 | 5 | 7 |
| Reflow 60 °C | GU 20° | 37 | 35 | 20 | 38 | 16 | 55 | 48 | 54 |
| Etch H2SO4, 60 °C | °C | 47 | 46 | 45 | 45 | 45 | 45 | 45 | 45 |

| Menge [g]/Test | NfA | L1 | L2 | L3 | L'4 | R1 | R2 | R3 | R4 |
|---|---|---|---|---|---|---|---|---|---|
| Etch Rostbeginn | °C | 73 | 71 | 72 | 70 | 70 | 68 | 69 | 68 |
| 1 % NaOH, 60 °C | °C | 38 | 36 | 35 | 37 | 37 | 38 | 40 | 39 |
| Pankreatin, 60 °C | °C | 34 | 34 | 30 | 32 | 34 | 32 | 36 | 30 |
| Baumharz, 60 °C | °C | 38 | 36 | 32 | 32 | 38 | 34 | 40 | 34 |
| Pendelhärte 140°C (1 d) | Schläge | 141 | 142 | 141 | 137 | 107 | 136 | 140 | 131 |
| Erichsen 140 °C (1 d) | mm | 9 | 9 | 9 | 9 | 9 | 9 | 9 | 9 |
| Gitterschnitt 140 °C (1 d) | Note | 0 | 0 | 0 | 0 | 0 | 0 | 0 | 0 |
| Glanz 140 °C (1 d) | GU 20° | 93 | 91 | 93 | 93 | 88 | 88 | 87 | 86 |
| Kratztest 50 D-Hübe (1 d) | GU 20° | 14 | 8 | 8 | 12 | 5 | 6 | 8 | 8 |
| Reflow 140 °C (1 d) | GU 20° | 45 | 34 | 39 | 48 | 13 | 29 | 50 | 52 |
| Pendelhärte 140°C (5 d) | Schläge | 142 | 142 | 143 | 137 | 120 | 139 | 144 | 136 |
| Erichsen 140 °C (5 d) | mm | 9 | 9 | 9 | 9 | 9 | 9 | 9 | 9 |
| Gitterschnitt 140 °C (5 d) | Note | 0 | 0 | 0 | 0 | 0 | 0 | 0 | 0 |
| Glanz 140 °C (5 d) | GU 20° | 92 | 93 | 92 | 93 | 86 | 85 | 88 | 85 |
| Kratztest 50 D-Hübe (5 d) | GU 20° | 8 | 7 | 8 | 9 | 4 | 6 | 5 | 9 |
| Reflow 140 °C (5 d) | GU 20° | 44 | 40 | 26 | 43 | 5 | 16 | 16 | 42 |
| Etch H2SO4, 140 °C (5 d) | °C | 47 | 46 | 44 | 46 | 44 | 47 | 47 | 46 |
| Etch Rostbeginn (5 d) | °C | 70 | 70 | 68 | 70 | 69 | 70 | 70 | 69 |
| 1 % NaOH, 140 °C (5 d) | °C | 58 | 58 | 44 | 55 | 39 | 39 | 40 | 40 |
| Pankreatin, 140 °C (5 d) | °C | 36 | 34 | 34 | 34 | 34 | 34 | 34 | 32 |
| Baumharz, 140 °C (5 d) | °C | 42 | 40 | 34 | 40 | 36 | 38 | 40 | 36 |

Die Gelzeit liegt für alle Harze bei ca. 8 h, bei ca. 20 Sekunden Auslaufzeit.

In der Summe der Eigenschaften schneiden die erfindungsgemäßen Lacke L1-L3 besser ab als die Referenzlacke. Bei alleiniger Vernetzung des Acrylatharzes werden die schlechtesten Ergebnisse erhalten. Die Lacke L1-L3 sind auch besser als Lack L'4 (nicht erfindungsgemäß).=Die Ergebnisse der Lacke sind in folgender Kurztabelle gegenüber den Referenzlacken mit Polyestern des Stands der Technik zusammengefasst.

**Tabelle 3: Zusammenfassung der ersten Versuchsreihe:**

| Test | Einheit | Bewertung | Note |
|---|---|---|---|
| Nicht flüchtiger Anteil | % | Im Mittel ist der Nicht flüchtige Anteil der Lacke um 0,1 % kleiner als die der Referenzen | ○ |
| Staubtrocken | min | L1-L3 besser als R1-R4 | ++ |
| Sandtrocken | h | L1-L3 besser als R1-R4 | ++ |
| Durchtrocken | h | gemischt | ○ |
| Pendelhärte 7 h RT | Schläge | L1-L3 besser als R1-R4, L'4 etwas schlechter | + |
| Pendelhärte 24 h RT | Schläge | L1-L3 besser/gleich als R1-R4. L'4 zwischen R1-R4 | + |
| P.7dRT+15h60°C | Schläge | gemischt | ○ |
| Acetontest 24 h RT | D-Hübe | L1-L4' besser als R1-R4 | ++ |
| Glanz 60 °C | GU 20° | L1-L'4 einen Tick besser/gleich R1-R4 | ○ |
| Kratztest 50 D-Hübe | GU 20° | L1-L'4 besser als R1-R4 | ++ |
| Reflow 60 °C | GU 20° | L1-L'4 besser als R1, schlechter als R2-R4 | -- |
| Etch H2SO4 60 °C | °C | L1-L'4 besser oder gleich R1-R4 | + |
| Etch Rostbeginn 60 °C | °C | L1-L'4 besser/gleich R1-R4 | + |
| NaOH 60 °C | °C | L1-L'4 leicht schlechter als R1-R4 | - |
| Pankreatin 60 °C | °C | L1-L'4 im Mittel vergleichbar R1-R4 | ○ |
| Baumharz 60 °C | °C | L1-L'4 leicht schlechter als R1-R4 | - |
| Pendelhärte 140 °C, 1 d | GU 20° | L1-L'4 besser als R1-R4 | ++ |
| Glanz 140 °C, 1 d | GU 20° | L1-L'4 besser als R1-R4 | ++ |
| Kratztest 50 D-Hübe 140 °C, 1 d | GU 20° | L1-L'4 besser oder gleich R1-R4 | + |
| Reflow 140 °C, 1 d | GU 20° | L1-L'4 besser als R1-R2, schlechter als R3-R4 | ○ |
| Pendelhärte 140 °C, 5 d | GU 20° | L1-L'4 besser als R1, gegen R2-R4 gemischt | ○ |
| Glanz 140 °C, 5 d | GU 20° | L1-L'4 besser als R1-R4 | ++ |
| Kratztest 50 D-Hübe 140 °C, 5 d | GU 20° | L1-L'4 besser oder gleich R1-R3, schlechter/gleich R4 | + |
| Reflow 140 °C, 5 d | GU 20° | L1-L'4 besser als R1-R3, gegenüber R4 unterschiedlich | + |
| Etch H2SO4, 140 °C | °C | vergleichbar | ○ |
| Etch Rostbeginn, 140 °C | °C | vergleichbar | ○ |
| NaOH, 140 °C | °C | L1-L'4 deutlich besser als R1-R4 | ++ |
| Pankreatin, 140 °C | °C | L1-L'4 besser oder gleich R1-R4 | + |
| Baumharz, 140 °C | °C | L1, L2, L'4 besser oder gleich R1-R4; L3 im Mittel schlechter | + |
| **Gesamtnote** | | | 21+ |

Entsprechend den obigen Zusammensetzungen der Beschichtungsmassen wurden Haftungsversuche auf Kunststoff durchgeführt. Die Härtung erfolgte 15 h bei 60 °C und nachfolgender Konditionierung für 24 h bei 23 ± 2 °C und 50 ± 10 % Luftfeuchte. Die Noten erfolgten in K0-K5 für die Haftung und G0-G5 für den Gitterschnitt.

**Tabelle 4: Bewertung der Haftung und des Gitterschnitts von Beschichtungsmassen. L = erfindungsgemäßer Lack. R = nicht erfindungsgemäße Referenz**

| Kunststoff | L1 | L2 | L3 | R1 |
|---|---|---|---|---|
| ABS | K3 | K3 | K3 | K3 |
| PC, Polycarbonat | K2 | K3 | K2 | K3 |
| PMMA, Polymethylmethacrylat | K3 | K4 | K3 | K3 |
| PP/EPDM | K5 | K5 | K5 | K5 |
| PVC, Polyvinylchlorid | K1 | K3 | K2 | K2 |
| ABS | G5 | G5 | G5 | G5 |
| PC, Polycarbonat | G5 | G5 | G5 | G5 |
| PMMA, Polymethylmethacrylat | G5 | G5 | G5 | G5 |
| PP/EPDM | G5 | G5 | G5 | G5 |
| PVC, Polyvinylchlorid | G0 | G0 | G0 | G0 |

| | | | | |
|---|---|---|---|---|
| Insbesondere der Polyester B1 (L1) ist in der Haftung besser. | | | | |

### Versuchsreihe 2:

Vergleich der erfindungsgemäßen Polyester B1, B3, B4 (L5-L7) und des nicht erfindungsgemäßen Beispiels B2 (L5-L8) mit Joncryl® 507 (R5) als Vergleichsmuster bei je 100 ppm DBTL auf Polyol fest im Basissystem Joncryl® 507 / Basonat® HI 2000.

**Tabelle 5: Zusammensetzung von Beschichtungsmassen und ihre anwendungstechnischen Ergebnisse. Die Härtung erfolgte bei Raumtemperatur, 15 h 60 bzw. 20 min 140 °C**

| Menge [g]/Test | NfA | L5 | L6 | L7 | L'8 | R5 |
|---|---|---|---|---|---|---|
| Joncryl® 507 [g] | 80,0 % | 45,0 | 45,0 | 45,0 | 45,0 | 60,0 |
| Polyesterol B1b [g] | 68,9 % | 17,4 | | | | |
| Polyesterol B3b [g] | 65,0 % | | 18,5 | | | |
| Polyesterol B4b [g] | 73,5 % | | | 16,3 | | |
| Polyesterol B2b [g] | 75,0 % | | | | 16,0 | |
| DBTL [g] | 1,0 % | 0,48 | 0,48 | 0,48 | 0,48 | 0,48 |
| Butylacetat [g] | | 35,0 | 34,0 | 33,5 | 31,5 | 30,0 |
| Basonat® HI 2000 [g] | 100 % | 27,2 | 23,4 | 23,7 | 26,4 | 21,9 |
| Auslaufzeit | S | 20,0 | 20,1 | 20,0 | 19,8 | 20,2 |
| Nicht flüchtiger Anteil | % | 60,1 | 58,9 | 60,2 | 62,3 | 62,2 |
| Aussehen | | klar | klar | klar | klar | klar |
| Gelzeit | h:min | 15:27 | 12:19 | 15:25 | 7:58 | 6:00 |
| Staubtrocken | min | 340 | 270 | 300 | 380 | >500 |
| Sandtrocken | h | 7,75 | 6,0 | 7,25 | 9,0 | 20 |
| Durchtrocken | h | 13 | 11 | 12,5 | 16,5 | >24 |
| Pendelhärte 7 h RT | Schläge | 2 | 4 | 2 | 2 | --- |
| Pendelhärte 24 h RT | Schläge | 50 | 55 | 52 | 13 | 3 |
| P.7dRT+15h60°C | Schläge | 129 | 129 | 116 | 124 | 101 |
| Acetontest 24 h RT | D-Hübe | 100 | 100 | 100 | 90 | 80 |
| Erichsen 60 °C | mm | 9 | 9 | 9 | 9 | 9 |
| Gitterschnitt 60 °C | Note | 0 | 0 | 0 | 0 | 0 |
| Glanz 60 °C | GU 20° | 92 | 92 | 91 | 92 | 93 |
| Kratztest 50 D-Hübe 60 °C | GU 20° | 8 | 8 | 7 | 4 | 4 |
| Reflow 60 °C | GU 20° | 62 | 50 | 32 | 44 | 8 |
| Etch H2SO4, 60 °C | °C | 51 | 48 | 50 | 48 | 48 |
| Etch Rostbeginn, 60 °C | °C | 73 | 75 | 73 | 74 | 74 |
| 1 % NaOH, 60 °C | °C | 37 | 40 | 41 | 38 | 42 |
| Pankreatin, 60 °C | °C | 34 | 34 | 32 | 34 | 30 |
| Baumharz, 60 °C | °C | 36 | 38 | 34 | 34 | 30 |
| Pendelhärte, 140°C (1 d) | Schläge | 140 | 138 | 138 | 133 | 109 |
| Erichsen, 140 °C (1 d) | mm | 9 | 9 | 9 | 9 | 9 |
| Gitterschnitt, 140 °C (1 d) | Note | 0 | 0 | 0 | 0 | 0 |
| Glanz 140 °C (1 d) | GU 20° | 89 | 91 | 91 | 90 | 90 |
| Kratztest 50 D-Hübe (1 d) | GU 20° | 8 | 7 | 5 | 6 | 5 |
| Reflow 140 °C (1 d) | GU 20° | 48 | 37 | 20 | 16 | 9 |
| Pendelhärte 140°C (5 d) | Schläge | 140 | 141 | 143 | 135 | 114 |
| Erichsen 140 °C (5 d) | mm | 9 | 9 | 9 | 9 | 9 |
| Gitterschnitt 140 °C (5 d) | Note | 0 | 0 | 0 | 0 | 0 |
| Glanz 140 °C (5 d) | GU 20° | 91 | 91 | 90 | 91 | 93 |
| Kratztest 50 D-Hübe (5 d) | GU 20° | 4 | 7 | 4 | 4 | 2 |
| Reflow 140 °C (5 d) | GU 20° | 36 | 58 | 30 | 37 | 7 |
| Etch H2SO4, 140 °C (5 d) | °C | 48 | 47 | 47 | 43 | 45 |
| Etch Rostbeginn (5 d) 140 °C | °C | 75 | 75 | 73 | 72 | 75 |
| NaOH, 140 °C (5 d) | °C | 44 | 43 | 40 | 38 | 37 |
| Pankreatin, 140 °C (5 d) | °C | 34 | 34 | 34 | 30 | 30 |
| Baumharz, 140 °C (5 d) | °C | 42 | 40 | 34 | 34 | 30 |

In der Summe der Eigenschaften schneiden die erfindungsgemäßen Lacke und der nicht erfindungsgemäße Lack auf Basis Polyesterol B2 in fast allen Eigenschaften besser ab als die Referenzlacke. Der nicht erfindungsgemäße Lack L'8 auf Basis Polyesterol B2 ist in den Trocknungseigenschaften (Staubtrocken, Sandtrocken, Durchtrocken), Pendelhärte ab 24 h Raumtemperatur, Acetontest und Chemikalienbeständigkeiten bei 140 °C schlechter als die erfindungsgemäßen Lacke.

**Tabelle 6: Zusammenfassung der zweiten Versuchsreihe:**

| Test | Einheit | Bewertung | Note |
|---|---|---|---|
| Nicht flüchtiger Anteil | % | Der nicht flüchtige Anteil der Lacke ist gleich bis um 3 % niedriger als der der Referenz | -- |
| Gelzeit | h:min | L5-L'8 besser als R5 | ++ |
| Staubtrocken | min | L5-L'8 besser als R5 | ++ |
| Sandtrocken | h | L5-L'8 besser als R5 | ++ |
| Durchtrocken | h | L5-L'8 besser als R5 | ++ |
| Pendelhärte 7 h RT | Schläge | L5-L'8 besser als R5 | + |
| Pendelhärte 24 h RT | Schläge | L5-L'8 besser als R5 | ++ |
| Pendelhärte 7 d RT + 15 h 60 °C | Schläge | L5-L'8 besser als R5 | + |
| Acetontest 24 h RT | D-Hübe | L5-L'8 besser als R5 | + |
| Glanz 60 °C | GU 20° | L5-L'8 marginal schlechter als R5 | - |
| Kratztest 50 D-Hübe | GU 20° | L5-L'8 besser/gleich R5 | + |
| Reflow 60 °C | GU 20° | L5-L'8 besser als R5 | ++ |
| Etch H2SO4 60 °C | °C | L5-L'8 besser/gleich R5 | + |
| Etch Rostbeginn | °C | vergleichbar | ○ |
| 1 % NaOH, 60 °C | °C | L5-L'8 schlechter als R5 | - |
| Pankreatin, 60 °C | °C | L5-L'8 besser als R5 | ++ |
| Baumharz, 60 °C | °C | L5-L'8 besser als R5 | ++ |
| Pendelhärte 140 °C (1 d) | Schläge | L5-L'8 besser als R5 | ++ |
| Glanz 140 °C (1 d) | GU 20° | Vergleichbar | ○ |
| Kratztest 50 D-Hübe (1 d) | GU 20° | L5-L'8 besser/gleich R5 | + |
| Reflow 140 °C (1 d) | GU 20° | L5-L'8 besser als R5 | ++ |
| Pendelhärte 140 °C (5 d) | Schläge | L5-L'8 besser als R5 | ++ |
| Glanz 140 °C (5 d) | GU 20° | L5-L'8 leicht schlechter als R5 | - |
| Kratztest 50 D-Hübe (5 d) | GU 20° | L5-L'8 leicht besser als R5 | + |
| Reflow 140 °C (5 d) | GU 20° | L5-L'8 besser als R5 | ++ |
| Etch H2SO4 140 °C (5 d) | °C | L5-L7 besser als R5, L'8 schlechter | + |
| Etch Rostbeginn 140 °C (5 d) | °C | L5-L'8 gleich/schlechter als R5 | - |
| 1 % NaOH, 140 °C (5 d) | °C | L5-L'8 besser als R5 | ++ |
| Pankreatin, 140 °C (5 d) | °C | L5-L'8 gleich/besser als R5 | + |
| Baumharz, 140 °C (5 d) | °C | L5-L'8 besser als R5 | ++ |
| Gesamtnote | | | 32+ |

### Versuchsreihe 3:

Vergleich der erfindungsgemäßen Polyesterole B1, B3, B4 und des nicht erfindungsgemäßen Polyesterols B2 (Lacke L9-L'12) mit Macrynal® SM 510n (R6) als Vergleichsmuster bei gleichen Gelzeiten von ca. 8 h bei ca. 20 Sekunden Auslaufzeit.

**Tabelle 7: Zusammensetzung von Beschichtungsmassen und ihre anwendungstechnischen Ergebnisse. Die Härtung erfolgte bei Raumtemperatur und 60 °C**

| Menge [g]/Test | NfA | L9 | L10 | L11 | L'12 | R6 |
|---|---|---|---|---|---|---|
| Macrynal® SM 510n [g] | 60,0 % | 50,0 | 50,0 | 50,0 | 50,0 | 64,0 |
| Polyesterol B1c [g] | 70,0 % | 14,3 | | | | |
| Polyesterol B3c [g] | 65,0 % | | 15,4 | | | |
| Polyesterol B4a [g] | 75,0 % | | | 13,3 | | |
| Polyesterol B2c [g] | 75,0 % | | | | 13,3 | |
| DBTL [g] | 1,0 % | 3,30 | 2,10 | 3,48 | 1,34 | 1,08 |
| Butylacetat [g] | | 35,7 | 38,0 | 34,0 | 36,5 | 34,5 |
| Basonat® HI 2000 [g] | 100 % | 23,0 | 20,8 | 20,9 | 22,8 | 18,8 |
| Auslaufzeit | S | 20,0 | 19,8 | 19,8 | 20,2 | 20,3 |
| Nicht flüchtiger Anteil | % | 49,9 | 48,1 | 50,0 | 50,7 | 48,3 |
| Aussehen | | klar | klar | klar | klar | klar |
| Gelzeit | h:min | 07:28 | 08:08 | 07:36 | 07:37 | 07:37 |
| Staubtrocken | min | 18 | 16 | 20 | 30 | 18 |
| Sandtrocken | h | 1,5 | 1,5 | 1,5 | 3 | 2 |
| Durchtrocken | h | 7 | 7,5 | 6,75 | 9,5 | 10,75 |
| Pendelhärte 24 h RT | Schläge | 82 | 75 | 62 | 54 | 50 |
| P. 7 d RT+15 h 60 °C | Schläge | 135 | 133 | 126 | 139 | 136 |
| Acetontest 5 h RT | D-Hübe | 14 | 8 | 14 | 18 | 5 |
| Acetontest 24 h RT | D-Hübe | 100 | 90 | 100 | 75 | 80 |
| Erichsen 60 °C | mm | 9 | 9 | 9 | 9 | 9 |
| Gitterschnitt 60 °C | Note | 0 | 0 | 0 | 0 | 0 |
| Glanz 60 °C | GU 20° | 89 | 87 | 92 | 89 | 88 |
| Kratztest 50 D-Hübe, 60 °C | GU 20° | 10 | 11 | 10 | 8 | 7 |
| Reflow 60 °C | GU 20° | 25 | 26 | 50 | 27 | 16 |
| Etch H2SO4 60 °C | °C | 47,5 | 49,5 | 44,5 | 45,5 | 46,5 |
| Etch Rostbeginn | °C | 68 | 70 | 69 | 71 | 70 |

**Tabelle 8: Zusammenfassung der dritten Versuchsreihe:**

| Test | Einheit | Bewertung | Note |
|---|---|---|---|
| Nicht flüchtiger Anteil | % | Der nicht flüchtige Anteil der Lacke ist gleich oder bis 2 % besser als der der Referenz | + |
| Staubtrocken | min | L9, L11, L'12 besser als R6, L10 schlechter | + |
| Sandtrocken | h | L9-L11 besser als R6, L'12 schlechter | + |
| Durchtrocken | h | L9-L'12 besser als R6 | ++ |
| Pendelhärte 24 h RT | Schläge | L9-L'12 besser als R6 | ++ |
| P. 7 d RT+15 h 60 °C | Schläge | L9, L10, L'12 vergleichbar R6, L11 leicht schlechter | - |
| Acetontest 24 h RT | D-Hübe | L9-L11 besser als R6, L'12 schlechter | + |
| Glanz 60 °C | GU 20° | vergleichbar | ○ |
| Kratztest 50 D-Hübe | GU 20° | L9-L'12 marginal besser als R6 | + |
| Reflow 60 °C | GU 20° | L9-L'12 besser als R6 | ++ |
| Etch H2SO4 60 °C | °C | L9, L10 besser, L11, L'12 schlechter als R6 | ○ |
| Etch H2SO4, Rost | °C | vergleichbar | ○ |
| **Gesamtnote** | | | **10+** |

In der Summe sind die Lacke der erfindungsgemäßen Polyester deutlich besser als die Referenz. Das nicht erfindungsgemäße Polyesterol B2 ist in den Trocknungseigenschaften schlechter als die erfindungsgemäßen Polyester B1, B3, B4.

### Versuchsreihe 4:

Vergleich der erfindungsgemäßen Polyesterole B1, B3 und des nicht erfindungsgemäßen Polyesterols B2 (Lacke L13-L15) mit dem Stand der Technik, den hier nicht erfindungsgemäßen, aber in der WO2010/076114 erfindungsgemäßen Polyesterbeispielen 1, hier als Vergleichsbeispiel V4 im Referenzlack R7, Polyesterbeispiel 2, hier als Vergleichsbeispiel V5 im Referenzlack R8, Polyesterol 6 (hier V6 in R9) und Polyesterol 7 (hier V7 in R10) in einem System mit dem Polyol Joncryl® 922 / Basonat® HI 100.

**Tabelle 9: Zusammensetzung von Beschichtungsmassen auf Basis Joncryl® 922 / Basonat® HI 100 und ihre anwendungstechnischen Ergebnisse. Die Härtung erfolgte bei Raumtemperatur, 30 Minuten bei 60; 80 oder 130 °C mit jeweils anschließend Konditionierung für einen Tag bei 23 ± 2 °C und 50 ± 10 % Luftfeuchte.**

| Menge [g]/Test | NfA | L13 | L14 | L'15 | R7 | R8 | R9 | R10 |
|---|---|---|---|---|---|---|---|---|
| Joncryl® 922 [g] | 80 % | 30,0 | 30,0 | 30,0 | 25,0 | 27,5 | 27,5 | 27,5 |
| Polyesterol B1a [g] | 70 % | 34,29 | | | | | | |
| Polyesterol B3c [g] | 65 % | | 36,92 | | | | | |
| Polyesterol B2d [g] | 75 % | | | 32,0 | | | | |
| Polyesterol V4 [g] | 81 % | | | | 25,0 | | | |
| Polyesterol V5 [g] | 81 % | | | | | 27,5 | | |
| Polyesterol V6 [g] | 81 % | | | | | | 27,5 | |
| Polyesterol V7 [g] | 77 % | | | | | | | 27,5 |
| Butylacetat [g] | | 45,5 | 48,0 | 44,0 | 55,0 | 58,0 | 55,0 | 50 |
| Basonat® HI 100 [g] | 100 % | 35,07 | 28,13 | 33,53 | 31,6 | 34,2 | 34,4 | 33,1 |
| Auslaufzeit | S | 20,1 | 20,3 | 20,0 | 20,1 | 20,4 | 19,9 | 19,9 |
| Nicht flüchtiger Anteil | % | 57,3 | 53,2 | 58,4 | 52,6 | 53,4 | 54,5 | 55,8 |
| Aussehen | | klar | klar | klar | klar | klar | klar | klar |
| Gelzeit | h:min | 9:39 | 7:24 | 13:36 | 3:51 | 4:37 | | |
| Staubtrocken | min | 140 | 45 | 420 | 220 | 230 | 230 | 130 |
| Sandtrocken | h | 3,5 | 1,5 | 5,75 | 2,5 | 2,75 | 3,25 | 4,5 |
| Durchtrocken | h | 7,5 | 7 | 9,25 | 4,75 | 5 | 3,25 | 7 |
| Pendelhärte 4 h RT | Schläge | 2 | 8 | - | | | klebrig | 3 |
| Pendelhärte 24 h RT | Schläge | 91 | 85 | 73 | 81 | 73 | 70 | 102 |
| P.7dRT+15h60°C | Schläge | 134 | 123 | 139 | 117 | 111 | 116 | 128 |
| Glanz 30' 60 °C | GU 60° | 100 | 100 | 100 | 98 | 98 | 97 | 100 |
| Kratztest 50 D-Hübe | GU 60° | 51 | 53 | 47 | 17 | 15 | 37 | 29 |
| Reflow 60 °C | GU 60° | 86 | 83 | 63 | 43 | 50 | 59 | 77 |
| Pendelhärte 30' 80°C | Schläge | 136 | 136 | 121 | 122 | 120 | | |
| Erichsen 80 °C | mm | 9 | 9 | 9 | 9 | 9 | | |
| Gitterschnitt 80 °C | Note | 0 | 0 | 0 | 5 | 5 | | |
| Glanz 80 °C | GU 60° | 100 | 100 | 100 | 98 | 98 | | |
| Kratztest 50 D-Hübe | GU 60° | 41 | 49 | 40 | 22 | 19 | | |
| Reflow 80 °C | GU 60° | 90 | 85 | 75 | 67 | 62 | | |
| Etch H2SO4, 80 °C | °C | 45 | 45 | 39 | 41 | 41 | | |
| Etch Rostbeginn 80 °C | °C | 68 | 68 | 60 | 59 | 58 | | |
| Glanz 130 °C | GU 60° | 100 | 100 | 100 | 98 | 98 | | |
| Kratztest 50 D-Hübe | GU 60° | 43 | 49 | 50 | 31 | 36 | | |
| Reflow 130 °C | GU 60° | 82 | 72 | 92 | 90 | 90 | | |
| Glanz 130 °C | GU 20° | 88 | 90 | 91 | 82 | 84 | | |
| Kratztest 50 D-Hübe | GU 20° | 11 | 13 | 15 | 7 | 8 | | |
| Reflow 130 °C | GU 20° | 34 | 51 | 79 | 69 | 71 | | |
| Etch H2SO4, 130 °C | °C | 49 | 46 | 45 | 48 | 49 | | |
| Etch Rostbeginn | °C | 73 | 71 | 69 | 64 | 64 | | |

**Tabelle 10: Zusammenfassung der vierten Versuchsreihe:**

| Test | Einheit | Bewertung | Note |
|---|---|---|---|
| Nicht flüchtiger Anteil | min | Der Feststoffgehalt der L13-L'15 ist im Mittel 2 % besser als der der R7-R10; L13, L'15 deutlich besser, L14 leicht schlechter | + |
| Staubtrocken | min | L13 ist besser als R7-R9 und marginal schlechter als R10 | + |
| | | L14 ist deutlich besser als R7-R10 | |
| | | L'15 ist schlechter als die Referenzen | |
| Sandtrocken | h | L13 ist schlechter als R7-R9 und besser als R10 | ○ |
| | | L14 ist deutlich besser als R7-R10 | |
| | | L'15 ist schlechter als die Referenzen | |
| Durchtrocken | h | L13-L'15 sind schlechter/gleich R7-R10 | -- |
| Pendelhärte 24 h RT | Schläge | Gemischte Ergebnisse | ○ |
| P. 7 d RT+15 h 60 °C | Schläge | L13, L'15 sind besser als R7-R10, L14 besser als R7-R9, aber schlechter als R10 | + |
| Glanz, Kratzfestigkeit 60 °C. | GU 60° | Ausgangsglanz, Glanz nach 50 DH und nach reflow von L13-L'15 sind jeweils besser als von R7-R10, bis auf den reflow von L'15 gegenüber R10 | ++ |
| Pendelhärte 80 °C | Schläge | L13, L14 sind besser als R7, R8; L'15 ist vergleichbar | + |
| Gitterschnitt 80 °C | Note | L13-L'15 sind besser als R7, R8 | ++ |
| Glanz, Kratzfestigkeit 80 °C | GU 60° | Ausgangsglanz, Glanz nach 50 DH und nach reflow von L13-L'15 sind jeweils besser als von R7-R8 | ++ |
| Glanz, Kratzfestigkeit 130 °C und 140 °C | GU 60° | Ausgangsglanz, Glanz nach 50 DH und nach reflow von L13-L1'5 sind jeweils besser als von R7-R8, außer reflow bei L13 und L14 | + |
| **Gesamtnote** | | | **9+** |

Die erfindungsgemäßen Lacke sind besser als die Referenzen. Der nicht erfindungsgemäße Lack L'15 auf Basis des nicht erfindungsgemäßen Polyesterols B2 ist bei Trocknung und Säurebeständigkeit schlechter als die erfindungsgemäßen Polyesterole B1 und B3.

### Versuchsreihe 5:

Vergleich der erfindungsgemäßen Polyesterole B1, B3, B4 und des nicht erfindungsgemäßen Polyesterols B2 (Lacke L16-L'19) in Acrylat-Mischungen gegen das Acrylat alleine (R11, R12) mit einem Bismut-Katalysator in einem System Joncryl® 507 / Basonat® HI 2000 bei vergleichbarer Gelzeit

**Tabelle 11: Zusammensetzung von Beschichtungsmassen auf Basis Joncryl® 507 / Basonat® HI 2000 und ihre anwendungstechnischen Ergebnisse. Die Härtung erfolgte bei Raumtemperatur, 15 h bei 60 bzw. 20 Minuten bei 140 °C, mit anschließend 24 h Konditionierung für einen Tag bei 23 ± 2 °C und 50 ± 10 % Luftfeuchte, nach der 140 °C Härtung bei den Beständigkeiten Konditionierung für fünf Tage**

| Menge [g]/Test | NfA | L16 | L17 | L18 | L'19 | R11 | R12 |
|---|---|---|---|---|---|---|---|
| Joncryl® 507 [g] | 80,0 % | 45,0 | 45,0 | 45,0 | 45,0 | 60,0 | 60,0 |
| Polyesterol B1b [g] | 68,9 % | 17,42 | | | | | |
| Polyesterol B3b [g] | 65,0 % | | 18,46 | | | | |
| Polyesterol B4b [g] | 73,5 % | | | 16,33 | | | |
| Polyesterol B2b [g] | 75,0 % | | | | 16,0 | | |
| TIB Kat 718 [g] | 10 % | 0,43 | 0,38 | 0,52 | 0,24 | 0,137 | 0,156 |
| Butylacetat [g] | | 35,0 | 34,2 | 33,7 | 32,0 | 30,4 | 31,5 |
| Basonat® HI 2000 [g] | 100 % | 27,15 | 23,44 | 23,67 | 26,44 | 21,87 | 21,87 |
| Auslaufzeit | s | 19,7 | 19,9 | 19,9 | 19,8 | 20,1 | 20,1 |
| Nicht flüchtiger Anteil | % | 60,2 | 58,8 | 60,2 | 62,2 | 62,2 | 61,6 |
| Aussehen | | klar | klar | klar | klar | klar | klar |
| Gelzeit | h:min | 6:32 | 6:29 | 6:38 | 5:41 | 8:16 | 5:08 |
| Staubtrocken | min | 100 | 65 | 85 | 160 | 440 | 480 |
| Sandtrocken | h | 3,5 | 3,5 | 3 | 4,5 | >24 | 13,5 |
| Durchtrocken | h | 7,5 | 7,5 | 7,25 | 10,75 | >24 | >24 |
| Pendelhärte 5 h RT | Schläge | 4 | 6 | 6 | 3 | --- | --- |
| Pendelhärte 24 h RT | Schläge | 63 | 62 | 53 | 21 | 3 | 6 |
| P. 7 d RT+15 h 60 °C | Schläge | 129 | 127 | 121 | 126 | 106 | 101 |
| Acetontest 5 h RT | DH | 26 | 22 | 38 | 18 | 2 | 3 |
| Acetontest 24 h RT | DH | 100 | 100 | 100 | 100 | 12 | 70 |
| Glanz 60 °C | GU 20° | 92 | 92 | 91 | 92 | 92 | 92 |
| Kratztest 50 D-Hübe 60 °C | GU 20° | 11 | 9 | 5 | 6 | 4 | 4 |
| Reflow 60 °C | GU 20° | 62 | 44 | 22 | 55 | 14 | 17 |
| Etch H2SO4, 60 °C | °C | 47 | 45 | 48 | 47 | 42 | 48 |
| Etch Rostbeginn 60 °C | °C | 71 | 72 | 75 | 74 | 68 | 74 |
| 1 % NaOH, 60 °C | °C | 38 | 40 | 40 | 38 | 38 | 42 |
| Pankreatin, 60 °C | °C | 30 | 30 | 30 | 30 | 30 | 30 |
| Baumharz, 60 °C | °C | 36 | 34 | 32 | 34 | 30 | 30 |
| Pendelhärte 140°C (1 d) | Schläge | 138 | 137 | 138 | 131 | 118 | 116 |
| Erichsen 140 °C (1 d) | mm | 9 | 9 | 9 | 9 | 9 | 9 |
| Gitterschnitt 140 °C (1 d) | Note | 0 | 0 | 0 | 0 | 0 | 0 |
| Glanz 140 °C (1 d) | GU 20° | 92 | 91 | 92 | 91 | 86 | 92 |
| Kratztest 50 D-Hübe (1 d) | GU 20° | 9 | 7 | 8 | 9 | 4 | 4 |
| Reflow 140 °C (1 d) | GU 20° | 69 | 47 | 57 | 55 | 8 | 8 |
| Pendelhärte 140°C (5 d) | Schläge | 140 | 141 | 139 | 135 | 124 | 120 |
| Erichsen 140 °C (5 d) | mm | 9 | 9 | 9 | 9 | 9 | 9 |
| Gitterschnitt 140 °C (5 d) | Note | 0 | 0 | 0 | 0 | 0 | 0 |
| Glanz 140 °C (5 d) | GU 20° | 92 | 91 | 91 | 91 | 86 | 92 |
| Kratztest 50 D-Hübe (5 d) | GU 20° | 8 | 7 | 7 | 8 | 3 | 3 |
| Reflow 140 °C (5 d) | GU 20° | 52 | 47 | 35 | 46 | 10 | 16 |
| Etch H2SO4, 140 °C (5 d) | °C | 45 | 47 | 46 | 48 | 41 | 46 |
| Etch Rostbeginn 140 °C (5 d) | °C | 71 | 72 | 71 | 75 | 71 | 75 |
| 1 % NaOH, 140 °C (5 d) | °C | 39 | 43 | 39 | 41 | 37 | 41 |
| Pankreatin, 140 °C (5 d) | °C | 34 | 40 | 38 | 34 | 30 | 30 |
| Baumharz, 140 °C (5 d) | °C | 38 | 38 | 40 | 40 | 30 | 30 |

Die Lackbeispiele L16-L'19 sind in fast allen Eigenschaften signifikant besser als die Referenzen. Das nicht erfindungsgemäße Polyesterol B2 ist insbesondere in der Trocknung und Pendelhärteentwicklung bei Raumtemperatur schlechter als die erfindungsgemäßen Polyesterole B1, B3, B4.

### Versuchsreihe 6:

Untersuchung der erfindungsgemäßen Polyesterole B1, B3, B4 und des nicht erfindungsgemäßen Polyesterols B2 (Lacke L20-L23) mit einem Zink-Katalysator in einem System Joncryl® 507 / Basonat® HI 2000.

**Tabelle 12: Zusammensetzung von Beschichtungsmassen auf Basis Joncryl® 507 / Basonat® HI 2000 und ihre anwendungstechnischen Ergebnisse. Die Härtung erfolgte bei Raumtemperatur, 15 h bei 60 bzw. 20 Minuten bei 140 °C, mit anschließend 24 h bei RT**

| Menge [g]/Test | NfA | L20 | L21 | L22 | L'23 | R13 |
|---|---|---|---|---|---|---|
| Joncryl® 507 [g] | 80 % | 45,0 | 45,0 | 45,0 | 45,0 | 60,0 |
| Polyesterol B1b [g] | 68,9 % | 17,42 | | | | |
| Polyesterol B3b [g] | 65 % | | 18,46 | | | |
| Polyesterol B4b [g] | 73,5 % | | | 16,33 | | |
| Polyesterol B2b [g] | 75 % | | | | 16,0 | |
| Borchi Kat 22 [g] | 10 % | 0,48 | 0,41 | 0,31 | 0,62 | 0,48 |
| Butylacetat [g] | | 35,0 | 34,2 | 33,6 | 31,5 | 29,0 |
| Basonat® HI 2000 [g] | 100 % | 27,15 | 23,44 | 23,67 | 26,44 | 21,87 |
| Auslaufzeit | s | 19,8 | 20,0 | 19,9 | 19,7 | 19,8 |
| Nicht flüchtiger Anteil | % | 60,1 | 58,8 | 60,2 | 62,4 | 62,8 |
| Aussehen | | klar | klar | klar | klar | klar |
| Gelzeit | h:min | 7:31 | 7:37 | 7:28 | 8:19 | 12:43 |
| Staubtrocken | min | 150 | 115 | 130 | 290 | 540 |
| Sandtrocken | h | 3,5 | 3 | 3 | 5 | 7,5 |
| Durchtrocken | h | 6,75 | 6,5 | 6,25 | 10 | 14 |
| Pendelhärte 5 h RT | Schläge | 3 | 4 | 4 | 2 | --- |
| Pendelhärte 24 h RT | Schläge | 69 | 67 | 63 | 36 | 20 |
| P.7dRT+15h60°C | Schläge | 119 | 117 | 106 | 115 | 84 |
| Acetontest 5 h RT | DH | 15 | 14 | 13 | 10 | 5 |

| Menge [g]/Test | NfA | L20 | L21 | NfA | L'23 | R13 |
|---|---|---|---|---|---|---|
| Acetontest 24 h RT | DH | 80 | 90 | 90 | 70 | 100 |
| Glanz 60 °C | GU 20° | 92 | 91 | 92 | 91 | 94 |
| Kratztest 50 D-Hübe 60 °C | GU 20° | 8 | 5 | 7 | 8 | 3 |
| Reflow 60 °C | GU 20° | 69 | 47 | 21 | 58 | 11 |
| Etch H2SO4, 60 °C | °C | 48 | 46 | 44 | 43 | 47 |
| Etch Rostbeginn, 60 °C | °C | 70 | 72 | 69 | 69 | 75 |
| 1 % NaOH, 60 °C | °C | 38 | 37 | 37 | 38 | 41 |
| Pankreatin, 60 °C | °C | 34 | 37 | 30 | 30 | 30 |
| Baumharz, 60 °C | °C | 34 | 32 | 30 | 30 | 30 |
| Pendelhärte 140°C (1 d) | Schläge | 141 | 139 | 137 | 134 | 114 |
| Erichsen 140 °C (1 d) | mm | 9 | 9 | 9 | 9 | 9 |
| Gitterschnitt 140 °C (1 d) | Note | 0 | 0 | 0 | 0 | 0 |
| Glanz 140 °C (1 d) | GU 20° | 84 | 84 | 99 | 83 | 94 |
| Kratztest 50 D-Hübe (1 d) | GU 20° | 9 | 7 | 8 | 5 | 3 |
| Reflow 140 °C (1 d) | GU 20° | 62 | 45 | 48 | 46 | 13 |
| Pendelhärte 140°C (5 d) | Schläge | 142 | 145 | 142 | 141 | 118 |
| Erichsen 140 °C (5 d) | mm | 9 | 9 | 9 | 9 | 9 |
| Gitterschnitt 140 °C (5 d) | Note | 0 | 0 | 0 | 0 | 0 |
| Glanz 140 °C (5 d) | GU 20° | 84 | 85 | 85 | 83 | 94 |
| Kratztest 50 D-Hübe (5 d) | GU 20° | 10 | 7 | 8 | 5 | 4 |
| Reflow 140 °C (5 d) | GU 20° | 67 | 53 | 39 | 51 | 28 |
| Etch H2SO4, 140 °C (5 d) | °C | 47 | 47 | 45 | 43 | 47 |
| Etch Rostbeginn (5 d) | °C | 70 | 71 | 69 | 69 | 75 |
| 1 % NaOH, 140 °C (5 d) | °C | 40 | 42 | 39 | 41 | 41 |
| Pankreatin, 140 °C (5 d) | °C | 34 | 34 | 30 | 30 | 32 |
| Baumharz, 140 °C (5 d) | °C | 42 | 40 | 36 | 34 | 30 |

Für einen Referenzlack mit 100 % Joncryl® 507 (60 g) musste überraschenderweise eine deutlich höhere Katalysatormenge verwendet werden, um eine vergleichbare Gelzeit (Ziel 8 h) einzustellen. Mit 1,92 g Borchi Kat 22 (10%ig) entsprechend 4000 ppm auf Polyol fest wurde dennoch nur eine Gelzeit von 9:01 h erhalten.

Daher wurden anwendungstechnische Untersuchungen mit dem Referenzlack mit 1000 ppm DBTL auf Polyol fest durchgeführt. Der NfA der der erfindungsgemäßen Polyesterole ist leicht schlechter. Das Härtungsverhalten, die Pendelhärteentwicklung und Endhärte der Lacke auf Basis der erfindungsgemäßen Polyesterole sind deutlich besser als die des Referenzlacks. Die Vernetzungsdichte (Acetontest) nach 5 h ist für die erfindungsgemäßen Polyesterole höher, nach 24 h leicht niedriger. Die Kratzfestigkeit der erfindungsgemäßen Polyesterole ist signifikant besser als die der Referenz. Die Beständigkeiten mit den erfindungsgemäßen Polyestern B1 b und B3b sind in Summe deutlich besser als die der Referenz, die der Polyesterole B2b und B4b leicht schlechter. Im Ganzen sind die erfindungsgemäßen Lacke klar besser als die Referenz. Das nicht erfindungsgemäße Polyesterol B2 ist in der Trocknung, Pendelhärteentwicklung und den meisten Beständigkeiten schlechter als die erfindungsgemäßen Polyesterole B1, B3, B4.

### Versuchsreihe 7:

Untersuchung der erfindungsgemäßen Polyesterole B1 b (Lacke L24-L27) mit 100 ppm DBTL-Katalyse bezogen auf Polyol fest in einem System Joncryl® 507 / Basonat® HI 2000 mit unterschiedlichen Verhältnissen von Polyacrylatol zu Polyesterol.

**Tabelle 13: Zusammensetzung von Beschichtungsmassen auf Basis Joncryl® 507 / Basonat® HI 2000 und ihre anwendungstechnischen Ergebnisse. Die Härtung erfolgte bei Raumtemperatur, 15 h bei 60 bzw. 20 Minuten bei 140 °C, mit anschließend 24 h Konditionierung für einen Tag bei 23 ± 2 °C und 50 ± 10 % Luftfeuchte, nach der 140 °C Härtung bei den Beständigkeiten Konditionierung für fünf Tage**

| Menge [g]/Test | NfA | R14 | L24 | L25 | L26 | L27 |
|---|---|---|---|---|---|---|
| Joncryl® 507 [g] | 80 % | 60 | 45 | 51 | 54 | 57 |
| Polyesterol B1 b [g] | 68,9 % | | 17,42 | 10,45 | 6,97 | 3,48 |
| DBTL [g] | 1 % | 0,48 | 0,48 | 0,48 | 0,48 | 0,48 |
| Butylacetat [g] | | 30,0 | 35,5 | 33,5 | 32,5 | 31 |
| Basonat® HI 2000 [g] | 100 % | 21,87 | 27,15 | 25,04 | 23,98 | 22,93 |
| Joncryl® 507 / B1 b fest/fest | % | 100:0 | 75:25 | 85:15 | 90:10 | 95:5 |
| Auslaufzeit | s | 20,2 | 20,1 | 20,0 | 19,8 | 19,9 |
| Nicht flüchtiger Anteil | % | 62,2 | 59,9 | 60,6 | 61,0 | 61,7 |
| Aussehen | | Klar | klar | klar | klar | klar |
| Gelzeit | h:min | 6:29 | 15:43 | 21:36 | 26:54 | 34:03 |
| Staubtrocken | min | >500 | 350 | >500 | >500 | >500 |
| Sandtrocken | h | 20,25 | 8 | 11,5 | 14,5 | 19,25 |
| Durchtrocken | h | >24 | 12,75 | 17,5 | 20,5 | 21,5 |
| Pendelhärte 7 h RT | Schläge | --- | 2 | --- | --- | --- |
| Pendelhärte 24 h RT | Schläge | 3 | 56 | 25 | 10 | 3 |
| P.7dRT+15h60°C | Schläge | 106 | 130 | 123 | 116 | 110 |
| Acetontest 5 h RT | DH | 3 | 2 | 4 | 4 | 3 |
| Acetontest 24 h RT | DH | 50 | 100 | 90 | 80 | 40 |
| Erichsen 60 °C | mm | 9 | 9 | 9 | 9 | 9 |
| Gitterschnitt 60 °C | Note | 0 | 0 | 0 | 0 | 0 |
| Glanz 60 °C | GU 20° | 90 | 92 | 92 | 93 | 92 |
| Kratztest 50 D-Hübe 60 °C | GU 20° | 3 | 6 | 5 | 4 | 4 |
| Reflow 60 °C | GU 20° | 18 | 56 | 36 | 34 | 20 |
| Etch H2SO4, 60 °C | °C | 43 | 45 | 46 | 45 | 45 |
| Etch Rostbeginn, 60 °C | °C | 75 | 73 | 75 | 73 | 75 |
| 1 % NaOH, 60 °C | °C | 38 | 39 | 39 | 39 | 39 |
| Pankreatin, 60 °C | °C | 30 | 36 | 36 | 32 | 30 |
| Baumharz, 60 °C | °C | 30 | 38 | 34 | 30 | 30 |
| Pendelhärte 140°C (1 d) | Schläge | 110 | 138 | 133 | 126 | 112 |
| Erichsen 140 °C (1 d) | mm | 9 | 9 | 9 | 9 | 9 |
| Gitterschnitt 140 °C (1 d) | Note | 0 | 0 | 0 | 0 | 0 |
| Glanz 140 °C (1 d) | GU 20° | 91 | 91 | 92 | 92 | 90 |
| Kratztest 50 D-Hübe (1 d) | GU 20° | 2 | 5 | 4 | 3 | 2 |
| Reflow 140 °C (1 d) | GU 20° | 5 | 45 | 29 | 25 | 9 |
| Pendelhärte 140°C (5 d) | Schläge | 115 | 141 | 138 | 133 | 122 |
| Erichsen 140 °C (5 d) | mm | 9 | 9 | 9 | 9 | 9 |
| Gitterschnitt 140 °C (5 d) | Note | 0 | 0 | 0 | 0 | 0 |
| Glanz 140 °C (5 d) | GU 20° | 91 | 91 | 91 | 92 | 91 |
| Kratztest 50 D-Hübe (5 d) | GU 20° | 3 | 9 | 7 | 4 | 3 |
| Reflow 140 °C (5 d) | GU 20° | 21 | 78 | 58 | 33 | 19 |
| Etch H2SO4, 140 °C (5 d) | °C | 46 | 46 | 45 | 47 | 46 |
| Etch Rostbeginn, 140 °C (5 d) | °C | 75 | 75 | 75 | 75 | 75 |
| 1 % NaOH, 140 °C (5 d) | °C | 39 | 41 | 38 | 39 | 39 |
| Pankreatin, 140 °C (5 d) | °C | 30 | 36 | 30 | 30 | 32 |
| Baumharz, 140 °C (5 d) | °C | 30 | 40 | 34 | 34 | 30 |

Die Lacke mit Polyesterol B1b zeigen gegenüber dem 100 % Joncryl® 507-System in fast allen Eigenschaften bessere Werte. Je mehr Polyester, desto besser die Trocknung, Endhärte, reflow der Kratzbeständigkeit, und Chemikalienbeständigkeit.

### Versuchsreihe 8:

### Verträglichkeiten mit Polyacrylat (Ablauftest auf Klarheit):

Die erfindungsgemäßen Polyesterole sind mit Polyacrylaten meist gut verträglich, z.B. mit Joncryl® 507, Joncryl® 909, Joncryl® 910, und Macrynal® SM 510n. In Einzelfällen kann es mit steigender Polyesterolmenge zu einer Unverträglichkeit mit dem Polyacrylat kommen. Die nicht erfindungsgemäßen Polyesterole V1-V3 und B2 zeigen dabei eher Unverträglichkeiten als die erfindungsgemäßen. Bei kritischen Polyacrylaten sind 3:1 Mischungen gegenüber 1:1 Mischungen von der Verträglichkeit her von Vorteil.

**Tabelle 14: Prüfung von Mischungen Polyesterol / Polyacrylat auf Klarheit**

| Polyester | Polyacrylat | 3:1-Mischung Lieferform / Lieferform | 1:1-Mischung Lieferform/Lieferform |
|---|---|---|---|
| B1b | Joncryl® 934 | T0 | T1 |
| B3b | Joncryl® 934 | T0 | T1 |
| B4b | Joncryl® 934 | T0 | T0 |
| B5 | Joncryl® 934 | T0 | n.b. |
| B6 | Joncryl® 934 | T0 | n.b. |
| B2b | Joncryl® 934 | T2 | T2 |
| V1 | Joncryl® 934 | T3 | T3 |
| V2 | Joncryl® 934 | T0 | T1 |
| V3 | Joncryl® 934 | T3 | T3 |
| B1b | Macrynal® SM 510n | T0 | T0 |
| B3b | Macrynal® SM 510n | T0 | T0 |
| B4b | Macrynal® SM 510n | T0 | T0 |
| B2b | Macrynal® SM 510n | T0 | T0 |
| V1 | Macrynal® SM 510n | T0 | T0 |
| V2 | Macrynal® SM 510n | T0 | T0 |
| V3 | Macrynal® SM 510n | T3 | T3 |

| | | | |
|---|---|---|---|
| n.b. = nicht bestimmt. T0 am besten, T5 am schlechtesten (s.o.) | | | |

### Versuchsreihe 9:

Untersuchung des erfindungsgemäßen Polyesterols B1 b (Lacke L28-L33) mit 100 ppm DBTL-Katalyse bezogen auf Polyol fest in einem System Joncryl® 507 / Basonat® HI 2000 mit unterstöchiometrischer Menge an Polyisocyanat.
Im Allgemeinen können bei Lacken mit einem stöchiometrischen Überschuss von 5-10 % Polyisocyanat bessere Lackeigenschaften erhalten werden als bei stöchiometrischen und unterstöchiometrischen Ansätzen, insbesondere z.B. bei der Säurebeständigkeit und Kratzfestigkeit. Das stöchiometrische Verhältnis Polyisocyanat / Polyol in % bezeichnet man als Index. Bei einer stöchiometrischen Reaktion beträgt dieser 100.
Da die erfindungsgemäßen Polyesterole höhere Hydroxylzahlen haben als das Polyacrylat, erhöht sich bei stöchiometrischem Einsatz von Polyisocyanat zu Polyol der absolute Anteil von Polyisocyanat. Um auszuschließen, dass dieses für sich einen positiven Effekt hat, wurden Ansätze durchgeführt, bei denen Polyacrylat gegen eine gewichtsäquivalente Menge Polyesterol (bezogen auf fest) ersetzt wurde. Dabei blieb die Polyisocyanat-Menge gleich und der Index wurde niedriger als 100.
Trotz der für Lacke untypisch niedrigen Indices konnten Verbesserungen der Lackeigenschaften gegenüber dem nicht erfindungsgemäßen Lack auf Basis Polyisocyanat / Polyacrylat gefunden werden.

**Tabelle 15: Zusammensetzung von Beschichtungsmassen auf Basis Joncryl® 507 / Basonat® HI 2000 und ihre anwendungstechnischen Ergebnisse. Die Härtung erfolgte bei Raumtemperatur, 15 h bei 60 °C bzw. 20 Minuten bei 140 °C, mit anschließend 24 h bei 23 ± 2 °C und 50 ± 10 % Luftfeuchte, nach der 140 °C Härtung Konditionierung für fünf Tage**

| Menge [g]/Test | NfA | L28 | L29 | L30 | L31 | L32 | L33 | R15 |
|---|---|---|---|---|---|---|---|---|
| Index | | 100 | 81 | 100 | 87 | 100 | 91 | 100 |
| Joncryl® 507 [g] | 80% | 45 | 45 | 51 | 51 | 54 | 54 | 60 |
| Polyesterol B1b [g] | 68,9% | 17,42 | 17,42 | 10,45 | 10,45 | 6,97 | 6,97 | - |
| DBTL [g] | 1% | 0,48 | 0,48 | 0,48 | 0,48 | 0,48 | 0,48 | 0,48 |
| Butylacetat [g] | | 35,5 | 33,0 | 33,5 | 32,0 | 32,5 | 31,0 | 30,0 |
| Basonat® HI 2000 [g] | 100% | 27,15 | 21,87 | 25,04 | 21,87 | 23,98 | 21,87 | 21,87 |
| Joncryl® 507:B1 b fest/fest | % | 75:25 | 75:25 | 85:15 | 85:15 | 90:10 | 90:10 | 100:0 |
| Auslaufzeit | s | 20,1 | 20,2 | 20,0 | 20,0 | 19,8 | 19,9 | 20,2 |
| Nicht flüchtiger Anteil | % | 59,9 | 59,3 | 60,6 | 60,3 | 61,0 | 61,1 | 62,2 |
| Aussehen | | klar | klar | klar | klar | klar | klar | klar |
| Gelzeit | h:min | 15:43 | 14:49 | 21:36 | 20:30 | 26:54 | 25:59 | 6:29 |
| Staubtrocken | min | 350 | 300 | >500 | >500 | >500 | >500 | >500 |
| Sandtrocken | h | 8,0 | 7,25 | 11,5 | 10,75 | 14,5 | 13,5 | 20,25 |
| Durchtrocken | h | 12,75 | 11,75 | 17,5 | 16,5 | 20,5 | 21,5 | >24 |
| Pendelhärte 7 h RT | Schläge | 2 | 3 | --- | --- | --- | --- | --- |
| Pendelhärte 24 h RT | Schläge | 56 | 57 | 25 | 25 | 10 | 10 | 3 |
| P. 7 d RT+15 h 60 °C | Schläge | 130 | 114 | 123 | 110 | 116 | 108 | 106 |
| Acetontest 5 h RT | DH | 2 | 4 | 4 | 3 | 4 | 3 | 3 |
| Acetontest 24 h RT | DH | 100 | 100 | 90 | 100 | 80 | 80 | 50 |
| Erichsen 60 °C | mm | 9 | 9 | 9 | 9 | 9 | 9 | 9 |
| Gitterschnitt 60 °C | Note | 0 | 0 | 0 | 0 | 0 | 0 | 0 |
| Glanz 60 °C | GU 20° | 92 | 92 | 92 | 91 | 93 | 92 | 90 |
| Kratztest 50 D-Hübe 60 °C | GU 20° | 6 | 5 | 5 | 4 | 4 | 5 | 3 |
| Reflow 60 °C | GU 20° | 56 | 24 | 36 | 29 | 34 | 34 | 18 |
| Etch H2SO4, 60 °C | °C | 45 | 44 | 46 | 46 | 45 | 46 | 43 |
| Etch Rostbeginn, 60 °C | °C | 73 | 73 | 75 | 75 | 73 | 72 | 75 |
| 1 % NaOH, 60 °C | °C | 39 | 38 | 39 | 38 | 39 | 40 | 38 |
| Pankreatin, 60 °C | °C | 36 | 30 | 36 | 30 | 32 | 30 | 30 |
| Baumharz, 60 °C | °C | 38 | 32 | 34 | 32 | 30 | 30 | 30 |
| Pendelhärte 140°C (1 d) | Schläge | 138 | 138 | 133 | 130 | 126 | 126 | 110 |
| Erichsen 140°C (1 d) | mm | 9 | 9 | 9 | 9 | 9 | 9 | 9 |
| Gitterschnitt 140°C (1 d) | Note | 0 | 0 | 0 | 0 | 0 | 0 | 0 |
| Glanz 140 °C (1 d) | GU 20° | 91 | 91 | 92 | 90 | 92 | 94 | 91 |
| Kratztest 50 D-Hübe (1 d) | GU 20° | 5 | 3 | 4 | 4 | 3 | 3 | 2 |
| Reflow 140 °C (1 d) | GU 20° | 45 | 15 | 29 | 10 | 25 | 15 | 5 |
| Pendelhärte 140°C (5 d) | Schläge | 141 | 136 | 138 | 135 | 133 | 131 | 115 |
| Erichsen 140°C (5 d) | mm | 9 | 9 | 9 | 9 | 9 | 9 | 9 |
| Gitterschnitt 140°C (5 d) | Note | 0 | 0 | 0 | 0 | 0 | 0 | 0 |
| Glanz 140 °C (5 d) | GU 20° | 91 | 92 | 91 | 94 | 92 | 93 | 91 |
| Kratztest 50 D-Hübe (5 d) | GU 20° | 9 | 4 | 7 | 7 | 4 | 6 | 3 |
| Reflow 140 °C (5 d) | GU 20° | 78 | 29 | 58 | 55 | 33 | 58 | 21 |
| Etch H2SO4, 140 °C (5 d) | °C | 46 | 43 | 45 | 45 | 47 | 46 | 46 |
| Etch Rostbeginn (5 d) | °C | 75 | 75 | 75 | 75 | 75 | 75 | 75 |
| 1 % NaOH, 140 °C (5 d) | °C | 41 | 37 | 38 | 38 | 39 | 39 | 39 |
| Pankreatin, 140 °C (5 d) | °C | 36 | 30 | 30 | 30 | 30 | 30 | 30 |
| Baumharz, 140 °C (5 d) | °C | 40 | 36 | 34 | 34 | 34 | 34 | 30 |

Die Muster mit Polyesterol B1 b zeigen gegenüber dem 100 % Joncryl® 507-System in fast allen Eigenschaften bessere Werte, in der Gelzeit, Härtung, Pendelhärteentwicklung, Endhärte und Kratzfestigkeit. In den Chemikalienbeständigkeiten sind sie i.A. besser, oder bei manchen Tests z.T. besser, z.T. schlechter.
Muster mit höherem Index von 100 (L28, L30, L32) sind i.A. in den Eigenschaften besser als die entsprechenden Muster mit niedrigerem Index (L29, L31; L33). Lediglich Sand- / Durchtrocknung und Pendelhärteentwicklung bei Raumtemperatur sind bei niedrigeren Indices tendenziell schneller.

### Versuchsreihe 10:

Vergleich der erfindungsgemäßen Polyesterole mit Joncryl® 507 als Polyacrylat bei je 100 ppm DBTL auf Polyol fest im Basissystem Joncryl® 507 / Basonat® HI 2000.

**Tabelle 16: Zusammensetzung von Beschichtungsmassen und ihre anwendungstechnischen Ergebnisse. L = erfindungsgemäßer Lack. R = nicht erfindungsgemäße Referenz. Die Härtung erfolgte bei Raumtemperatur, 15 Stunden bei 60 °C bzw. 20 Minuten bei 140 °C, mit anschließend 24 h bei 23 ± 2 °C und 50 ± 10 % Luftfeuchte, nach der 140 °C Härtung Konditionierung für fünf Tage**

| **Menge [g]** | **NfA** | L29 | L30 | R5 |
|---|---|---|---|---|
| Joncryl® 507 [g] | 80,0 % | 45 | 45 | 60,0 |
| B9 [g] | 70,0 % | 16,28 | | |
| B10 [g] | 75,0 % | | 16,00 | |
| DBTL | 1 % | 0,48 | 0,48 | 0,48 |
| Butylacetat | | 35,5 | 34,0 | 30,0 |
| Basonat® HI 2000 [g] | 100% | 25,74 | 22,73 | 21,9 |
| Auslaufzeit | S | 20,2 | 19,8 | 20,2 |
| Nicht flüchtiger Anteil | % | 60,0 | 59,8 | 62,2 |
| Aussehen | | klar | klar | klar |
| Gelzeit | h:min | 18:36 | 16:58 | 6:00 |
| Staubtrocken | min | >500 | 320 | >500 |
| Sandtrocken | h | 10 | 7 | 20 |
| Durchtrocken | h | 17,5 | 13,75 | >24 |
| Pendelhärte 7 h RT | Schläge | --- | --- | --- |
| Pendelhärte 24 h RT | Schläge | 25 | 49 | 3 |
| P. 7 d RT+15 h 60 °C | Schläge | 129 | 109 | 101 |
| Acetontest 5 h RT | DH | 3 | 3 | 3 |
| Acetontest 24 h RT | DH | 100 | 100 | 80 |
| Erichsen 60°C | mm | 9 | 9 | 9 |
| Gitterschnitt 60 °C | Note | 0 | 0 | 0 |
| Glanz 60 °C | GU 20° | 91 | 90 | 93 |
| Kratztest 50 D-Hübe 60 °C | GU 20° | 6 | 3 | 4 |
| Reflow 60 °C | GU 20° | 48 | 17 | 8 |
| Etch H2SO4, 60 °C | °C | 48 | 45 | 48 |
| Etch Rostbeginn, 60 °C | °C | 73 | 75 | 74 |
| 1 % NaOH, 60 °C | °C | 42 | 40 | 42 |
| Pankreatin, 60 °C | °C | 38 | 30 | 30 |
| Baumharz, 60 °C* | °C | 40* | 30 | 30 |
| Pendelhärte 140°C (1 d) | Schläge | 133 | 133 | 109 |
| Erichsen 140 °C (1 d) | mm | 9 | 9 | 9 |
| Gitterschnitt 140 °C (1 d) | Note | 0 | 0 | 0 |
| Glanz 140 °C (1 d) | GU 20° | 90 | 90 | 90 |
| Kratztest 50 D-Hübe (1 d) | GU 20° | 8 | 4 | 5 |
| Reflow 140 °C (1 d) | GU 20° | 58 | 29 | 9 |
| Pendelhärte 140°C (5 d) | Schläge | 138 | 136 | 114 |
| Erichsen 140 °C (5 d) | mm | 9 | 9 | 9 |
| Gitterschnitt 140 °C (5 d) | Note | 0 | 0 | 0 |
| Glanz 140 °C (5 d) | GU 20° | 89 | 89 | 93 |
| Kratztest 50 D-Hübe (5 d) | GU 20° | 10 | 6 | 2 |
| Reflow 140 °C (5 d) | GU 20° | 56 | 27 | 7 |
| Etch H2SO4, 140 °C (5 d) | °C | 46 | 48 | 45 |
| Etch Rostbeginn (5 d) | °C | 72 | 74 | 75 |
| 1 % NaOH, 140 °C (5 d) | °C | 42 | 45 | 37 |
| Pankreatin, 140 °C (5 d) | °C | 34 | 36 | 30 |
| Baumharz, 140 °C* (5 d) | °C | 42* | 38* | 30 |

| | | | | |
|---|---|---|---|---|
| *: Baumharz Quelle B | | | | |

Die erfindungsgemäßen Lacke sind in fast allen Lackeigenschaften besser als die nicht erfindungsgemäße Referenz.

### Versuchsreihe 11:

Vergleich der erfindungsgemäßen Polyesterole B1, B3, B4 und des nicht erfindungsgemäßen Polyesterols B2, mit Joncryl® 592 als Vergleich bei je 100 ppm DBTL auf Polyol fest im Basissystem Joncryl® 592 / Basonat® HI 2000.

**Tabelle 17: Zusammensetzung von Beschichtungsmassen und ihre anwendungstechnischen Ergebnisse. Die Härtung erfolgte bei Raumtemperatur, 15 Stunden bei 60 °C bzw. 20 Minuten bei 140 °C, mit anschließend 24 h bei 23 ± 2 °C und 50 ± 10 % Luftfeuchte, nach der 140 °C Härtung bei den Beständigkeiten Konditionierung für fünf Tage**

| **Menge [g]/Test** | **NfA** | **L31** | **L32** | **L33** | **L'34** | **R16** |
|---|---|---|---|---|---|---|
| Joncryl® 592 [g] | 80,0 % | 48,65 | 48,65 | 48,65 | 48,65 | 64,86 |
| Polyesterol B1b [g] | 68,9 % | 17,42 | | | | |
| Polyesterol B3b [g] | 65,0 % | | 18,46 | | | |
| Polyesterol B4b [g] | 73,5 % | | | 16,33 | | |
| Polyesterol B2b [g] | 75,0 % | | | | 16,00 | |
| DBTL [g] | 1% | 0,48 | 0,48 | 0,48 | 0,48 | 0,48 |
| Butylacetat [g] | | 38,5 | 38,0 | 36,5 | 34,5 | 34,0 |
| Basonat® HI 2000 [g] | 100% | 27,97 | 24,26 | 24,49 | 27,26 | 22,97 |
| Auslaufzeit | s | 20,0 | 19,9 | 19,8 | 20,2 | 20,2 |
| Nicht flüchtiger Anteil | % | 57,1 | 55,7 | 57,3 | 59,3 | 58,0 |
| Aussehen | | klar | klar | klar | klar | klar |
| Gelzeit | h:min | 16:06 | 12:50 | 16:00 | 07:29 | 07:31 |
| Staubtrocken | min | 70 | 30 | 40 | 250 | 95 |
| Sandtrocken | h | 5,0 | 2,5 | 3,75 | 8,5 | 12,5 |
| Durchtrocken | h | 11,0 | 9,0 | 10,25 | 14,75 | >24 |
| Pendelhärte 7 h RT | Schläge | 9 | 11 | 10 | 3 | 2 |
| Pendelhärte 24 h RT | Schläge | 95 | 87 | 86 | 46 | 26 |
| P. 7 d RT+15 h 60 °C | Schläge | 144 | 140 | 136 | 142 | 141 |
| Acetontest 5 h RT | DH | 3 | 3 | 4 | 3 | 3 |
| Acetontest 24 h RT | DH | 100 | 100 | 100 | 90 | 30 |
| Erichsen 60°C | mm | 9 | 9 | 9 | 9 | 9 |
| Gitterschnitt 60 °C | Note | 0 | 0 | 0 | 0 | 0 |
| Glanz 60 °C | GU 20° | 92 | 94 | 92 | 93 | 93 |
| Kratztest 50 D-Hübe | GU 20° | 10 | 8 | 8 | 9 | 9 |
| Reflow 60 °C | GU 20° | 56 | 54 | 44 | 67 | 56 |
| Etch H2SO4, 60 °C | °C | 49 | 49 | 51 | 45 | 48 |
| Etch Rostbeginn | °C | 73 | 73 | 73 | 72 | 70 |
| 1 % NaOH, 60 °C | °C | 43 | 38 | 38 | 39 | 42 |
| Pankreatin, 60 °C | °C | 46 | 38 | 36 | 42 | 44 |
| Baumharz, 60 °C | °C | 75 | 75 | 60 | 48 | 50 |
| Pendelhärte 140°C (1 d) | Schläge | 143 | 142 | 145 | 142 | 143 |
| Erichsen 140 °C (1 d) | mm | 8,8 | 8,4 | 9,0 | 9,0 | 8,7 |
| Gitterschnitt 140 °C (1 d) | Note | 0 | 0 | 0 | 0 | 0 |
| Glanz 140 °C (1 d) | GU 20° | 93 | 93 | 91 | 93 | 94 |
| Kratztest 50 D-Hübe (1 d) | GU 20° | 9 | 9 | 8 | 7 | 4 |
| Reflow 140 °C (1 d) | GU 20° | 21 | 15 | 63 | 41 | 22 |
| Pendelhärte 140°C (5 d) | Schläge | 143 | 144 | 145 | 142 | 145 |
| Erichsen 140 °C (5 d) | mm | 9 | 8,6 | 9 | 8,5 | 8,8 |
| Gitterschnitt 140 °C (5 d) | Note | 0 | 0 | 0 | 0 | 0 |
| Glanz 140 °C (5 d) | GU 20° | 92 | 93 | 92 | 93 | 92 |
| Kratztest 50 D-Hübe (5 d) | GU 20° | 10 | 13 | 10 | 10 | 9 |
| Reflow 140 °C (5 d) | GU 20° | 24 | 26 | 43 | 61 | 66 |
| Etch H2SO4, 140 °C (5 d) | °C | 52 | 52 | 54 | 49 | 47 |
| Etch Rostbeginn (5 d) | °C | 72 | 73 | 73 | 72 | 69 |
| 1 % NaOH, 140 °C (5 d) | °C | 54 | 52 | 52 | 46 | 43 |
| Pankreatin, 140 °C (5 d) | °C | 42 | 40 | 52 | 40 | 44 |
| Baumharz, 140 °C (5 d) | °C | 70 | 74 | 58 | 54 | 44 |

Die erfindungsgemäßen Polyesterole B1, B3, B4 und des nicht erfindungsgemäßen Polyesterols B2 zeigen gegenüber dem 100 % Joncryl® 592-System bessere Werte in der Trocknung (meist trotz längerer Gelierzeiten), Pendelhärteentwicklung, Vernetzungsdichteentwicklung (Acetontest), und der Beständigkeiten in der Summe über die vier Tests hin (ausgenommen B2b bei 60 °C). B1 ist in den Beständigkeiten mit Abstand am besten, gefolgt von B3, dann B2, und dann B4. Die Baumharzwerte mit B1, B3, B4 sind zum Teil exorbitant gut. Die Endhärten sind vergleichbar. Die Kratzbeständigkeiten in ihrer Gesamtheit von B4b sind bei 60 °C-Härtung besser, die von B1b und B3b bei 60 °C und die von B4b bei 140 °C vergleichbar der der Referenz, ansonsten sind die Werte der Polyesterole B1-B3 in der Kratzfestigkeit schlechter als die der Referenz. Das nicht erfindungsgemäße Polyesterol B2 ist in Trocknung, Pendelhärteentwicklung bei Raumtemperatur und tendenziell in den Beständigkeiten schlechter als die erfindungsgemäßen Polyesterole B1, B3, B4. In der Summe der Eigenschaften sind die erfindungsgemäßen Polyesterole deutlich besser als die Referenz und als B2.

### Versuchsreihe 12:

Vergleich der erfindungsgemäßen Polyester B1, B3 und B4 mit Joncryl® 507 als Polyacrylat bei je 100 ppm DBTL auf Polyol fest im Basissystem Joncryl® 507 / Basonat® HI 2000 in einem gelben Decklack auf Basis einer Laropal®-Pigmentpaste. Die Pigmentkonzentration bezogen auf Gesamtfeststoff beträgt 19-20 %.

**Tabelle 18: Zusammensetzung von Beschichtungsmassen und ihre anwendungstechnischen Ergebnisse. Die Härtung erfolgte bei Raumtemperatur, 15 Stunden bei 60 °C bzw. 20 Minuten bei 140 °C, mit anschließend 24 h bei 23 ± 2 °C und 50 ± 10 % Luftfeuchte, nach der 140 °C Härtung Konditionierung für fünf Tage**

| Menge [g]/Test | NfA | R17 | L35 | L36 | L37 |
|---|---|---|---|---|---|
| Joncryl® 507 | 80,0 % | 60 | 45 | 45 | 45 |
| B1 [g] | 68,9 % | | 17,42 | | |
| B3 [g] | 65,0 % | | | 18,46 | |
| B4 [g] | 73,5 % | | | | 16,33 |
| MSSP Yellow 1995 [g] | 78,8 % | 18,89 | 20,84 | 20,4 | 19,91 |
| MSSP White 0022 [g] | 82,0 % | 9,45 | 10,42 | 10,20 | 9,96 |
| DBTL [g] | 1% | 0,48 | 0,48 | 0,48 | 0,48 |
| Butylacetat [g] | 0% | 31 | 35 | 35 | 34 |
| Basonat® HI 2000 [g] | 100% | 21,87 | 27,15 | 23,44 | 23,67 |
| Auslaufzeit | s | 20,2 | 20,1 | 20,3 | 20,1 |
| Nicht flüchtiger Anteil | % | 65,3 | 64,1 | 62,7 | 64,0 |
| Gelzeit | h:min | 5:35 | 18:46 | 15:18 | 20:09 |
| Staubtrocken | min | 420 | 220 | 145 | 180 |
| Sandtrocken | h | 7,75 | 7 | 5 | 6,5 |
| Durchtrocken | h | 14,5 | 11,75 | 10,75 | 11,5 |
| Pendelhärte 7 h RT | Schläge | - | 2 | 3 | 2 |
| Pendelhärte 24 h RT | Schläge | 14 | 30 | 29 | 28 |
| P. 7 d RT+15 h 60 °C | Schläge | 52 | 63 | 56 | 51 |
| Acetontest 5 h RT | DH | 4 | 5 | 6 | 5 |
| Acetontest 24 h RT | DH | 100 | 100 | 100 | 100 |
| Erichsen 60°C | mm | 9 | 9 | 9 | 9 |
| Gitterschnitt 60 °C | Note | 1 | 1 | 0,5 | 0,5 |
| Haze 60 °C | | 22 | 20 | 19 | 19 |
| Glanz 60 °C | GU 20° | 90 | 91 | 93 | 90 |
| Kratztest 50 D-Hübe 60 °C | GU 20° | 4 | 10 | 12 | 6 |
| Reflow 60 °C | GU 20° | 9 | 25 | 16 | 11 |
| Etch H2SO4, 60 °C | °C | 46 | 46 | 47 | 44 |
| Etch H2SO4, Rostbeginn, 60 °C | °C | 75 | 75 | 75 | 75 |
| 1 % NaOH, 60 °C | °C | 42 | 45 | 48 | 43 |
| Pankreatin, 60 °C | °C | 30 | 30 | 32 | 30 |
| Baumharz, 60 °C* | °C | 30 | 40 | 40 | 34 |
| Dornbiegetest 60 °C | mm | 0 | 0 | 0 | 0 |
| Impact (4 lb) 60 °C | in * Ib | 160 | 128 | 108 | 140 |
| Reverse impact (4 lb) 60 °C | in * lb | 160 | 92 | 116 | 108 |
| Pendelhärte 140°C (1 d) | Schläge | 100 | 122 | 119 | 115 |
| Erichsen 140 °C (1 d) | mm | 9 | 9 | 9 | 9 |
| Gitterschnitt 140 °C (1 d) | Note | 0,5 | 1 | 0,5 | 0,5 |
| Haze 140 °C (1 d) | | 33 | 33 | 29 | 30 |
| Glanz 140 °C (1 d) | GU 20° | 87 | 89 | 90 | 89 |
| Kratztest 50 D-Hübe 140 °C (1 d) | GU 20° | 2 | 17 | 27 | 14 |
| Reflow 140 °C (1 d) | GU 20° | 5 | 27 | 40 | 16 |
| Pendelhärte 140°C (5 d) | Schläge | 104 | 125 | 120 | 120 |
| Erichsen 140 °C (5 d) | mm | 9 | 9 | 9 | 9 |
| Gitterschnitt 140 °C (5 d) | Note | 0,5 | 0,5 | 1 | 1 |
| Glanz 140 °C (5 d) | GU 20° | 86 | 89 | 89 | 89 |
| Kratztest 50 D-Hübe 140 °C (5 d) | GU 20° | 6 | 14 | 10 | 8 |
| Reflow 140 °C (5 d) | GU 20° | 11 | 30 | 21 | 22 |
| Etch H2SO4, 140 °C (5 d) | °C | 45 | 48 | 45 | 47 |
| Etch H2SO4, Rostbeginn, 140 °C (5 d) | °C | 75 | 75 | 75 | 75 |
| 1 % NaOH, 140 °C (5 d) | °C | 42 | 49 | 46 | 45 |
| Pankreatin, 140 °C (5 d) | °C | 30 | 36 | 34 | 30 |
| Baumharz, 140 °C* (5 d) | °C | 30* | 44* | 38* | 36* |

| | | | | | |
|---|---|---|---|---|---|
| * Baumharz Quelle B | | | | | |

Die erfindungsgemäßen Lacke sind in fast allen Lackeigenschaften besser als die nicht erfindungsgemäße Referenz.

### Versuchsreihe 13:

Vergleich der erfindungsgemäßen Polyesterole B1, B3 und B4 mit Macrynal® SM 510n/60LG als Polyacrylat bei je 100 ppm DBTL auf Polyol fest im Basissystem Macrynal® SM 510n / Basonat® HI 2000. in einem gelben Decklack auf Basis einer Laropal®-Pigmentpaste. Die Pigmentkonzentration bezogen auf Gesamtfeststoff beträgt 23 %.

**Tabelle 19: Zusammensetzung von Beschichtungsmassen und ihre anwendungstechnischen Ergebnisse. Die Härtung erfolgte bei Raumtemperatur, 15 Stunden bei 60 °C bzw. 20 Minuten bei 140 °C, mit anschließend 24 h bei 23 ± 2 °C und 50 ± 10 % Luftfeuchte, nach der 140 °C Härtung Konditionierung für fünf Tage**

| Menge [g]/Test | NfA | Ref. R18 | | B4 L39 | B3 L40 |
|---|---|---|---|---|---|
| Macrynal® SM 510n/LG [g] | 60,0 % | 64 | 50 | 50 | 50 |
| B1 [g] | 68,9 % | | 14,51 | | |
| B4 [g] | 73,5% | | | 13,61 | |
| B3 [g] | 65,0 % | | | | 15,38 |
| MSSP Yellow 1995 [g] | 78,8 % | 19,86 | 21,34 | 20,37 | 21,05 |
| MSSP White 0022 [g] | 82,0 % | 9,93 | 10,67 | 10,18 | 10,52 |
| DBTL [g] | 1% | 0,384 | 0,40 | 0,40 | 0,40 |
| Butylacetat [g] | 0% | 36 | 39,5 | 37,5 | 40 |
| Basonat® HI 2000 [g] | 100% | 18,75 | 23,6 | 20,7 | 20,51 |
| Auslaufzeit | s | 20,1 | 20,3 | 19,8 | 20,0 |
| Nicht flüchtiger Anteil | % | 54,4 | 55,7 | 55,7 | 54,3 |
| Gelzeit | h:min | 18:00 | 14:45 | 15:31 | 12:26 |
| Staubtrocken | min | 35 | 35 | 35 | 30 |
| Sandtrocken | h | 3,5 | 2 | 2 | 1 |
| Durchtrocken | h | 12,75 | 10,5 | 10,25 | 8,25 |
| Pendelhärte 7 h RT | Schläge | 8 | 8 | 7 | 8 |
| Pendelhärte 24 h RT | Schläge | 25 | 38 | 30 | 33 |
| P. 7 d RT+15 h 60 °C | Schläge | 82 | 83 | 70 | 71 |
| Acetontest 5 h RT | DH | 5 | 7 | 8 | 19 |
| Acetontest 24 h RT | DH | 100 | 100 | 100 | 100 |
| Erichsen 60°C | mm | 8,8 | 9 | 8,9 | 8,8 |
| Gitterschnitt 60 °C | Note | 5 | 5 | 5 | 5 |
| Haze 60 °C | | 19 | 19 | 20 | 21 |
| Glanz 60 °C | GU 20° | 92 | 95 | 100 | 102 |
| Kratztest 50 D-Hübe 60 °C | GU 20° | 12 | 27 | 26 | 31 |
| Reflow 60 °C | GU 20° | 25 | 41 | 36 | 42 |
| Etch H2SO4, 60 °C | °C | 46 | 47 | 47 | 44 |
| Etch H2SO4, Rostbeginn, 60 °C | °C | 75 | 75 | 75 | 75 |
| 1 % NaOH, 60 °C | °C | 38 | 50 | 47 | 44 |
| Pankreatin, 60 °C | °C | 40 | 42 | 38 | 34 |
| Baumharz, 60 °C* | °C | 50* | 72* | 58* | 48* |
| Dornbiegetest 60 °C | mm | 180 | 180 | 180 | 180 |
| Impact (4 lb) 60 °C | in * lb | 32 | 24 | 40 | 24 |
| Reverse impact (4 lb) 60 °C | in * lb | 24 | 28 | 28 | 32 |
| Pendelhärte 140°C (1 d) | Schläge | 126 | 128 | 130 | 128 |
| Erichsen 140 °C (1 d) | mm | 8,9 | 9,0 | 8,8 | 8,6 |
| Gitterschnitt 140 °C (1 d) | Note | 5 | 5 | 5 | 5 |
| Haze 140 °C (1 d) | | 30 | 35 | 33 | 36 |
| Glanz 140 °C (1 d) | GU 20° | 91 | 92 | 97 | 102 |

| Menge [g]/Test | NfA | Ref. R18 | B1 L38 | B4 L39 | B3 L40 |
|---|---|---|---|---|---|
| Kratztest 50 D-Hübe 140 °C (1 d) | GU 20° | 18 | 18 | 24 | 28 |
| Reflow 140 °C (1 d) | GU 20° | 31 | 24 | 37 | 38 |
| Pendelhärte 140°C (5 d) | Schläge | 130 | 130 | 132 | 131 |
| Erichsen 140 °C (5 d) | mm | 9,0 | 8,7 | 9,0 | 8,7 |
| Gitterschnitt 140 °C (5 d) | Note | 5 | 5 | 5 | 5 |
| Glanz 140 °C (5 d) | GU 20° | 92 | 94 | 97 | 102 |
| Kratztest 50 D-Hübe (5 d) | GU 20° | 15 | 16 | 23 | 30 |
| Reflow 140 °C (5 d) | GU 20° | 29 | 24 | 32 | 42 |
| Etch H2SO4, 140 °C (5 d) | °C | 50 | 52 | 51 | 50 |
| Etch H2SO4, Rostbeginn, 140 °C (5 d) | °C | 75 | 75 | 75 | 75 |
| 1 % NaOH, 140 °C (5 d) | °C | 52 | 61 | 57 | 61 |
| Pankreatin, 140 °C (5 d) | °C | 36 | 40 | 40 | 38 |
| Baumharz, 140 °C* (5 d) | °C | 50* | 75* | 60* | 72* |

| | | | | | |
|---|---|---|---|---|---|
| * Baumharz Quelle B | | | | | |

Die erfindungsgemäßen Lacke sind in den Lackeigenschaften in den überwiegenden Fällen besser als die nicht erfindungsgemäße Referenz. Insbesondere die Beständigkeit gegen Natronlage und gegen Baumharz ist zum Teil sehr gut.

## Patentansprüche

1. Zweikomponentige Polyurethanbeschichtungsmassen für lösungsmittelbasierte Systeme, enthaltend als Aufbaukomponenten
(A) mindestens ein Polyisocyanat, erhältlich durch Umsetzung mindestens eines monomeren Isocyanats,
(B) mindestens ein hydroxygruppenhaltiges Poly(meth)acrylatpolyol, und
(C) mindestens ein verzweigtes Polyesterpolyol, erhältlich durch Polykondensation von
- Hexahydrophthalsäureanhydrid,
- Trimethylolpropan,
- optional mindestens einer weiteren Di- oder Tri-Säure oder deren Derivaten, und
- optional mindestens eines weiteren Diols oder Triols
**dadurch gekennzeichnet, dass**
- die Säurezahl des Polyesterpolyols größer als 30 mg KOH/g bezogen auf Feststoff beträgt,
- die Säure- und Hydroxylgruppen des Polyesterpolyols in einem molaren Mischungsverhältnis von 1:1 bis 1:1,95, bevorzugt von 1:1,1 bis 1:1,8 eingesetzt werden, und
- im Polyesterpolyol weniger als 20 %, bevorzugt weniger als 10 % freier DiSäure und/oder freier Tri-Säure stöchiometrisch bezogen auf Hexahydrophthalsäureanhydrid eingesetzt werden,
- im Polyesterol weniger als 20 %, bevorzugt weniger als 10 %, besonders bevorzugt kein Tetra-Alkohol stöchiometrisch bezogen auf Hexahydrophthalsäureanhydrid eingesetzt wird und
(D) mindestens ein organisches Lösungsmittel.

2. Beschichtungsmasse gemäß Anspruch 1, **dadurch gekennzeichnet, dass** das Polyisocyanat (A) ausgewählt aus der Gruppe bestehend aus Isocyanuraten, Iminooxadiazindionen, Biureten, Uretdionen, Urethanen und Allophanaten.

3. Beschichtungsmasse gemäß Anspruch 1 oder 2, **dadurch gekennzeichnet, dass** das monomere Isocyanat ausgewählt ist aus der Gruppe bestehend aus 1,6-Hexamethylendiisocyanat, 1,3-Bis(isocyanatomethyl)cyclo-hexan, Isophorondiisocyanat und 4,4'- oder 2,4'-Di(isocyanatocyclohexyl)methan, bevorzugt 1,6-Hexamethylendiisocyanat oder Isophorondiisocyanat.

4. Beschichtungsmasse gemäß einem der vorstehenden Ansprüche, **dadurch gekennzeichnet, dass** das Poly(meth)acrylatpolyol (B) ein Molekulargewicht Mₙ (Zahlenmittel) von 500 bis 50.000 D, bevorzugt von 500-5.000 D, besonders bevorzugt von 800-2000 D hat aufweist.

5. Beschichtungsmasse gemäß einem der vorstehenden Ansprüche, **dadurch gekennzeichnet, dass** das Poly(meth)acrylatpolyol und das verzweigte Polyesterpolyol in einem Gewichtsverhältnis von 1,5:1 bis 99:1, bevorzugt von 2,3:1 bis 20:1 bezogen auf Feststoff eingesetzt werden.

6. Beschichtungsmasse gemäß einem der vorstehenden Ansprüche, **dadurch gekennzeichnet, dass** das Poly(meth)acrylatpolyol (B) eine Säurezahl unter 30, bevorzugt unter 20 mg KOH/g aufweist.

7. Beschichtungsmasse gemäß einem der vorstehenden Ansprüche, **dadurch gekennzeichnet, dass** das Polyesterpolyol (C) eine Summe von Säurezahl und OH-Zahl gemäß DIN 53240, Teil 2 von bis zu 600 mg KOH/g, bevorzugt von 250-400 aufweist.

8. Beschichtungsmasse gemäß einem der vorstehenden Ansprüche, **dadurch gekennzeichnet, dass** das Polyesterpolyol (C) aus Hexahydrophthalsäureanhydrid und Trimethylolpropan in einem molaren Mischungsverhältnis von Säuregruppen zu Hydroxylgruppen von 1,1 bis 1,6 hergestellt wird.

9. Beschichtungsmasse gemäß einem der vorstehenden Ansprüche, **dadurch gekennzeichnet, dass** das Polyesterpolyol (C) aus Hexahydrophthalsäureanhydrid, Trimethylolpropan und Neopentylglykol in einem molaren Mischungsverhältnis der Säuregruppen zu den Hydroxygruppen von 1:1,1 bis 1:1,6 und einem molaren Mischungsverhältnis der Hydroxygruppen von Trimethylolpropan zu den Hydroxygruppen von Neopentylglykol von größer 1:1, bevorzugt 1,7:1 bis 1,3:1 hergestellt wird; oder dass das Polyesterpolyol (C) aus Hexahydrophthalsäureanhydrid, Trimethylolpropan, 2-Butyl-2-ethyl-1,3-pro-pandiol und optional Adipinsäuredimethylester in einem molaren Mischungsverhältnis der Säuregruppen zu den Hydroxygruppen von 1:1 bis 1:1,4 und einem molaren Mischungsverhältnis der Säuregruppen von Hexahydrophthalsäureanhydrid zu Hydroxylgruppen von Trimethylolpropan von 1:0,9 bis 1:1,4 und einem molaren Mischungsverhältnis der Hydroxylgruppen von Trimethylolpropan zu Hydroxylgruppen von 2-Butyl-2-ethyl-1,3-propandiol von größer als 3:1 und stöchiometrisch weniger als 0,2 Teile Adipinsäuredimethylester bezogen auf Hexahydrophthalsäureanhydrid hergestellt wird.

10. Beschichtungsmasse gemäß einem der vorstehenden Ansprüche, **dadurch gekennzeichnet, dass** das Polyesterpolyol (C) neben Hexahydrophthalsäureanhydrid nicht unter Verwendung einer weiteren Disäure oder ihres Derivats hergestellt ist.

11. Beschichtungsmasse gemäß einem der vorstehenden Ansprüche, **dadurch gekennzeichnet, dass** das Polyesterpolyol (C) Zinn-frei ist und/oder unkatalysiert oder mit einem Zink, Titan, Zirkon, Bismut oder einem anderen nicht Zinn enthaltenden Katalysator, bevorzugt einem Titan enthaltenden Katalysator hergestellt ist

12. Beschichtungsmasse gemäß einem der vorstehenden Ansprüche, **dadurch gekennzeichnet, dass** das Polyesterpolyol (C) in Abwesenheit von Lösungsmittel hergestellt wurde.

13. Beschichtungsmasse gemäß einem der vorstehenden Ansprüche, **dadurch gekennzeichnet, dass** das Polyesterpolyol (C) Hydroxylzahlen von 130 bis 280 mg KOH/g bezogen auf Feststoff aufweist.

14. Beschichtungsmasse gemäß einem der vorstehenden Ansprüche, **dadurch gekennzeichnet, dass** das Polyesterpolyol (C) Säurezahlen von bis zu 110 mg, bevorzugt von 70 bis 100 mg KOH/g bezogen auf Feststoff aufweist.

15. Beschichtungsmasse gemäß einem der vorstehenden Ansprüche, **dadurch gekennzeichnet, dass** das Polyesterpolyol (C) ein zahlenmittleres Molekulargewicht Mn von 500 bis 4000, bevorzugt 700 bis 2000 g/mol und/oder eine Polydispersität von kleiner oder gleich 5, bevorzugt kleiner 3,5 aufweist.

16. Beschichtungsmasse gemäß einem der vorstehenden Ansprüche, **dadurch gekennzeichnet, dass** das Polyesterpolyol (C) eine Glasübergangstemperatur von -20 bis 50 °C, bevorzugt von -15 bis 50 °C aufweist.

17. Beschichtungsmasse gemäß einem der vorstehenden Ansprüche, **dadurch gekennzeichnet, dass** das Polyesterpolyol (C) in einem einstufigen Prozess hergestellt wird.

18. Verfahren zum Beschichten von Substraten, **dadurch gekennzeichnet, dass** man Polyisocyanatzusammensetzung (A) und Bindemittel (B) und (C), wie definiert in einem der vorstehenden Ansprüche, in einem Molverhältnis von Isocyanatgruppen in (A) zu gegenüber Isocyanat reaktiven Gruppen in (B) und (C) von 1:1,3 bis 1,3:1 miteinander vermischt, wobei optional noch weitere lacktypische Bestandteile eingemischt werden können, und man anschließend auf das Substrat aufträgt.

19. Verwendung von Beschichtungsmassen gemäß einem der Ansprüche 1 bis 17 zum Beschichten von Gebäudeteilen, Beschichtungen auf (Groß-)Fahrzeugen und Flugzeugen und industriellen Anwendungen, Nutzfahrzeuge im landwirtschaftlichen und Baubereich, sogenannte ACE (agricultural, construction and earthmoving equipment), Windenergieanlagen, Dekolackierungen, Brücken, Gebäuden, Strommasten, Tanks, Containern, Pipelines, Kraftwerken, chemischen Anlagen, Schiffen, Kränen, Pfählen, Spundwänden, Armaturen, Rohren, Fittings, Flanschen, Kupplungen, Hallen, Dächern und Baustahl, Möbeln, Fenstern, Türen, Parkett, Can-Coating, Coil-Coating, für Bodenbeläge, Parkdecks, in Automobillacken als OEM und refinish-Anwendung.

20. Verwendung von Beschichtungsmassen gemäß einem der Ansprüche 1 bis 17 zum Beschichten von Holz, Holzfurnier, Papier, Pappe, Karton, Textil, Folie, Leder, Vlies, Kunststoffoberflächen, Glas, Keramik, mineralischen Baustoffen, wie Zement-Formsteine und Faserzementplatten, Kunststoffen oder Metallen, die jeweils optional vorbeschichtet bzw. vorbehandelt sein können; oder zur Verwendung in Klarlacken, Basislacken, Decklacken, Primern oder Füllern.
